Europäisches Patentamt

European Patent Office

Office européen des brevets

(19)

(11) Publication number: **0 261 852**
**A2**

(12) # EUROPEAN PATENT APPLICATION

(21) Application number: **87308095.6**

(22) Date of filing: **14.09.87**

(51) Int. Cl.⁴: **B32B 17/10**

(30) Priority: **24.09.86 GB 8622948**

(43) Date of publication of application:
**30.03.88 Bulletin 88/13**

(84) Designated Contracting States:
**AT BE CH DE ES FR GB GR IT LI LU NL SE**

(71) Applicant: **DELTAGLASS S.A.**
**4 Route de Beaumont**
**CH-1700 Fribourg(CH)**

(72) Inventor: **Chuard, Marcel**
**50 Avenue de la Praille**
**CH-1227 Carouge§Geneve(CH)**

(74) Representative: **Cropp, John Anthony David et al**
**MATHYS & SQUIRE 10 Fleet Street**
**London, EC4Y 1AY(GB)**

(54) **Method for the production of glass laminates & apparatus suitable for the use with the method.**

(57) Method of producing a glass/interlayer e.g. pvc film/glass laminate using radiation-curable adhesive by assembling the laminae with a layer of adhesive interposed between the interlayer and each of the two glass sheets, and irradiating the assembly simultaneously form above and below, to cure the adhesive layers, while supporting the assembly horizontally on a baseboard which is transparent to the radiation.

Suitable apparatus inclues a first station, a second station including adhesive depositing means and a third station including radiation sources and wherein said first station includes means for successively registering rectangular sheets on a support surface so that one pair of parallel sides of the sheet are equidistant from one datum line and a third side of the sheet lies on a second datum line which is perpendicular to the first, said apparatus further including means for transferring each thus-registered sheet to said second station and such that successively transferred sheets of identical size are located in precisely the same position at said second station, and preferably, means for controlling the deposition of adhesive on a sheet at the second station in response to signals generated by automatic means for measuring the dimensions of the face of the sheet at the first station.

Also provided are a method and apparatus suitable for registering successive rectangular sheets at the first station; apparatus, suitable for use with the sheet registration means, for manoeuvring the sheet in two mutually perpendicular directions in the plane of the sheet; and apparatus, suitable for use at the second station, for dispensing controlled amount of adhesive.

FIG 1

## Method for the Production of Glass Laminates & Apparatus Suitable for the Use with the Method

This invention relates to a method of and apparatus for the production of glass laminates of the kind comprising a first sheet of glass, an interlayer and a second sheet of glass, using a radiation-curable adhesive. The invention is particularly concerned with the use of ultra-violet light (u.v.) for curing the adhesive but is also applicable to the use of other forms of radiation.

The production of glass laminates using u.v.-curable adhesives has been within the knowledge of the art for over a decade and has been practised commercially for several years. For the production of laminates of the glass/interlayer/glass kind, two procedures are available. In one of the procedures, which is the one employed commercially, the interlayer, e.g. pvc film, is laid horizontally on a suitable carrier such as a wooden or metal sheet and the top surface of the interlayer is then coated with adhesive. A first glass sheet is then placed on the coated surface of the interlayer and the assembly is transported under an array of u.v. lights to cure the adhesive. The product so obtained is then turned over and a further coating of adhesive is then applied to the other (now the top) surface of the interlayer. The second glass sheet is placed on this coated surface, and the assembly thus obtained is transported under an array of u.v. lights for a second time, to cure the second layer of adhesive and complete the formation of the laminate. This procedure and suitable apparatus for it are described in greater detail in our EP-A-108632. While this procedure is satisfactory, it suffers from certain drawbacks. Firstly, it requires an assembly to be turned over, which, especially in the case of large sheets, can be a slow process and, because of the fragile nature of the product, requires special and expensive apparatus if it is to be done automatically. Secondly, it requires two passes through the u.v. radiation zone or alternatively two separate u.v. radiation zones. Thirdly, where a single u.v. radiation zone is employed, the gap between the rolls of the calender employed to ensure uniform distribution of the adhesive layer and elimination of air bubbles from the layer before assembly is exposed to the u.v. radiation, has to be altered each time an assembly is passed through because on the first pass it is required to accommodate only the thickness of the interlayer and one glass sheet but on the second pass it must accommodate the additional thickness of the second glass sheet.

An alternative procedure, also described in EP-A-108632, enables both layers of adhesive to be cured in a single pass but requires the assembly to be held vertical, which again presents handling problems, especially where large sheets are involved.

The present invention provides a method of forming a laminate of the glass/interlayer/glass kind which avoids the problems of the two presently available procedures and presents a simple, economic and rapid method for the production of such laminates.

According to the present invention, there is provided a method for the production of a glass laminate of the kind comprising a sheet of glass on each side of an interlayer, the method comprising:

forming an assembly of first glass sheet, interlayer and second glass sheet with a first layer of radiation-curable adhesive between the first glass sheet and the interlayer and a second layer of radiation-curable adhesive between the interlayer and the second glass sheet;

supporting the assembly horizontally on a baseboard which is transparent or substantially transparent to the radiation employed to cure the adhesive and then exposing the supported assembly simultaneously to radiation from sources above and below the supported assembly to cure the adhesive.

While the invention is especially concerned with the production of laminates wherein the two glass sheets are inorganic glass, either or both of said sheets may also be a plastics substitute for glass, if desired, e.g. acrylic or polycarbonate, and it is to be understood that the term "glass", as used herein, includes both inorganic glass and plastics substitutes for glass.

For most applications, the interlayer will also be transparent to light and will usually be a plastics film, e.g. of pvc, so as to produce a safety glass laminate. However, because of the nature of the method, it will be understood that other interlayers may also be employed, including interlayers that are not only partially or wholly opaque to light but also opaque to the radiation employed for curing the adhesive. Thus, composite interlayers, such as of fabric sandwiched between two films of plastic, may be employed e.g. to give special decorative effects.

While the invention may be employed with any desired form of radiation, it will be described in greater detail below with reference to its application to ultra-violet (u.v.) radiation and the use of adhesives, such as those described in our EP-A-10355, 108630 and 108631, which are cured by u.v. radiation.

Any material may be employed for the baseboard provided it has sufficient intrinsic strength to support the laminate being formed and is transparent or substantially transparent to the radiation employed. By "substantially transparent" is meant that sufficient radiation passes through to enable curing of the adhesive within a reasonable space of time i.e. a few minutes or less. For u.v. radiation, many plastics materials are suitable.

In a preferred embodiment of the method, the first glass sheet is placed horizontally on the baseboard and the top surface provided with a layer of adhesive. The interlayer is then placed on the adhesive-coated face of the glass sheet and a further layer of adhesive is applied to the exposed face of the interlayer. Finally, the second glass sheet is placed on top of the adhesive-coated exposed face of the interlayer and the resultant assembly supported on the baseboard is advanced through a radiation zone in which it is exposed to the radiation from sources above and below the supported assembly.

For this embodiment, it is preferred that the width and length of the baseboard are larger than those of the laminate to be formed on it, so that any excess adhesive that oozes from the assembly is caught on the baseboard and does not come into contact with machinery such as, for example, a conveyor used to advance the assembly through the radiation zone or the rollers of the calender usually employed to ensure the uniform distribution of the adhesive between glass sheet and interlayer and elimination of air bubbles from the adhesive layer prior to exposing the adhesive layers to the radiation. To this end, and so that the baseboard is re-usable, it is preferred that at least the support surface of the baseboard (i.e. the surface of the baseboard on which the laminate is formed) be of a material which can be readily cleaned of any adhesive that is cured in contact with it. Where u.v. radiation is employed, it has been found that polyolefins, and especially polypropylene, are preferred for this surface.

The invention also provides apparatus for use in the production of glass/interlayer/glass laminates.

In accordance with one aspect, the apparatus comprises

a first station (hereinafter referred to as the Registration Station) including means for supporting a sheet horizontally and means for registering successive rectangular sheets located on said support so that each of two parallel sides of each sheet are equidistant from a first datum line and one of the other sides of said sheet lies on a second datum line which extends at right angles to the first datum line;

a second station (hereinafter referred to as the Adhesive Coating Station) including means for supporting a sheet horizontally and means for depositing adhesive on a sheet located on said support;

sheet transport means adapted to transfer a sheet registered at said first station to a second station whereby sheets of the same width and length and registered at said first station are positioned horizontally at precisely the same location on the support of said second station;

a third station (hereinafter referred to as the Curing Station) having means for irradiating a horizontal sheet laminate from above and below to cure layers of adhesive therein;

first conveyor means for advancing a laminate containing uncured layers of adhesive from said second station to said third station;

a fourth station (hereinafter referred to as the Offloading Station) for receiving a cured laminate from the third station; and

second conveyor means for advancing a cured laminate from the third station to the fourth station.

Preferably the apparatus also has the facility to supply baseboards to the second station for supporting a glass sheet transferred there from the first station for coating with adhesive. In this preferred embodiment, the apparatus further includes

a fifth station (hereinafter referred to as the Baseboard Supply Station) including means for supporting horizontally a flat rectangular baseboard and means for registering said baseboard with one edge on a datum line;

first baseboard transport means adapted to transfer each baseboard registered at said fifth station to said second station and to position each such transported baseboard on the support of at said second station with the said edge in precisely the same position and on a line which is parallel to that side of a sheet placed at said second station by said sheet transport means, which side is registered to lie on said second datum line said first station;

a sixth station (hereinafter referred to as the Baseboard Receiving Station) including means to support horizontally a baseboard recovering from said fourth station; and

means for advancing a baseboard from said sixth station to said fifth station.

In a further preferred embodiment, said first baseboard transport means comprise a carriage adapted to travel between a first position above said fifth station support means and a second position above said second station support means, said carriage including a sub-frame containing suction means for engaging the top surface of a sheet, said sub-frame being movable in the vertical plane relative to the carriage between a lowered position and a raised position, means for moving the carriage back and forth between said first and second positions, means for moving and sub-frame relative to said carriage up and down between said raised and lowered positions and means for locating the sub-frame uniquely relative to the respective support means at each of said fifth and second stations.

The sheet transport means may likewise comprise a carriage adapted to travel between a first position above said first station support means and a second position above said second station support means, said carriage including a sub-frame containing suction means for engaging the top surface of a sheet, said sub-frame being movable in the vertical plane relative to the carriage between a lowered position and a raised position, means for moving the carriage back and forth between said first and second positions, means for moving the sub-frame up and down between said raised and lowered positions and means for locating the sub-frame uniquely relative to the respective support means at each of said first and second stations.

Conveniently, the carriage of said first baseboard transport means and the carriage of said sheet transport a baseboard from the fifth station to the second station and thereafter to transport a sheet from the first station to the second station, to be deposited on the said baseboard at said second station. To this end, it is preferred that the first, second and fifth stations are in line to facilitate movement of the carriage between them, e.g. on a railway which extends in a straight line above the support means of the three stations.

To provide for the precise positioning of the sub-frame relative to the support means at each station, the sub-frame may conveniently be provided with at least two downwardly extending posts each having a lower, free, end which is tapered and the support means of each station include a horizontal frame having tapered vertical bores adapted to receive each of said posts, each bore being directly vertically under its corresponding post when the sub-frame is in its correct position above said support means. Thus, when the carriage has been positioned approximately at one of the stations, the lowering of the sub-frame causes the tapered tips of the posts to enter the mouths of the respective bores and because of the matching taper of the bore continued lowering of the sub-frame causes the posts to centre in the bores thereby positioning the sub-frame precisely over the support surface.

Thus, when a sheet has been registered at the first station with two of its parallel sides parallel to and equidistant from the first datum line and one of its other sides on the second datum line, it can be transferred by the sheet transfer means to be centred on the support means of the second station and positioned with one side at a precise location along the centre line of the support means at the second station. This ensure that successive sheets of the same length and width and transferred from the first station are placed exactly on top of each other at the second station. It also enables the coating of a sheet with a desired quantity and pattern of distribution of adhesive at the second station to be effected automatically in response to information relating to the length and width of the sheet, as will be described more fully below.

Furthermore, provided each baseboard is located in a predetermined position at the fifth station prior to its transfer to the second station, each baseboard can be deposited on the support means at the second station in an identical position to its predecessor, thereby ensuring that it is correctly located to receive a sheet from the first station. To this end, it is preferred that the fifth station includes means for registering said baseboard with two adjacent edges located on respective datum lines which extend at right angles to each other in the plane of the sheet. In one preferred embodiment, said means comprises a pair of abutments defining lines extending at right angles to each other and means for urging the baseboard to bring two adjacent edges thereof into contact with said abutments and aligned with said lines. The urging means conveniently may comprise a plurality of rollers supported on horizontal axles and arranged to urge said baseboard towards said two abutment means, and means for driving the rollers. To enable a registered baseboard to be transferred to the second station after registration at the fifth station, said abutments are preferably movable between a first position in which they define said datum lines and a second position in which they are out of contact with a baseboard registered with its two adjacent edges located on said datum lines, and means for moving each of said abutments between said first and second positions.

In another preferred embodiment of the apparatus, the sheet transfer means includes means for lowering one end of a sheet held by the sub-frame before the opposite end. This assists uniform spreading of the adhesive coating on a substrate on to which the sheet is being lowered by the sub-frame. Suitably said means comprises means for lowering one end of the sub-frame prior to the opposite end.

Preferably, the paths from the second station to the fourth station and from the sixth station to the fifth station are preferably straight, the fourth and sixth stations are in line and the apparatus preferably also includes means for transporting a baseboard from the fourth station to the sixth station whereby after a completed laminate has arrived at the fourth station after the adhesive has been cured by irradiation at the third station, and has been removed from the baseboard, said baseboard can be transferred to the sixth station for return to the fifth station for re-use. This second baseboard transporting means may be of the same manner of construction and operation as the first, but this is not essential.

Briefly, operation of the apparatus to produce a laminate is as follows.

Firstly, a baseboard at the fifth station is transferred by the baseboard transfer means to the support means of the second station; then a sheet which has been registered at the first station (the term registration being used to indicate the positioning of the sheet in the desired position relative to the first and second datum lines) is transferred by the sheet transfer means to the second station and deposited on the baseboard. The face of the sheet is coated with adhesive by the adhesive depositing means and then an interlayer is placed on the coated surface. The placing of the interlayer may be done by hand. Next, the exposed face of the interlayer is coated with adhesive by the adhesive depositing means and then a second sheet which has been registered at the first station is transferred by the sheet transfer means and deposited on the adhesive-coated surface of the interlayer at the second station. The assembly so obtained, and supported on the baseboard, is advanced by the first conveyor means to the third station where the adhesive layers are irradiated and cured to complete the formation of the laminate. The laminate on its baseboard is then advanced by the second conveyor means to the fourth station where the laminate is offloaded from the baseboard, e.g. for subsequent processing such as to check for flaws or for storage, and the baseboard is transferred to the sixth station for return to the fifth station. The cycle is then repeated.

Prior to the irradiation zone, the apparatus preferably includes calender means for applying pressure to the assembly in a direction generally normal to the planes of the sheets, to ensure that the adhesive is spread uniformly in each of the adhesive layers and to eliminate air bubbles. The calender may be of the kind described in EP-A-108632. However, so as to provide means for compensating for any tendency of the laminate to bow during its passage through the calender, preferably the calender includes means for inclining the plane passing through the axes of the calender rolls about a horizontal axis so that the upper roll may be moved forwards or backwards from the normal location vertically above the lower roll.

In a further preferred embodiment, the first station of the apparatus further includes means for automatically measuring the width and length of a sheet and said apparatus also includes means for generating signals corresponding to the measured width and length of the sheet and means responsive to said signals for controlling the quantity of adhesive deposited on said sheet by said adhesive depositing means at said second station and/or the pattern of deposition of the adhesive.

At the first station, a sheet is located on a support table such that each of two parallel sides of each sheet are equidistant from a first datum line and one of the other sides of said sheet lies on a second datum line which extends at right angles to the first datum line.

One method for achieving the positioning of the sheet relative to the first datum line comprises the steps of:

locating a parallel sided sheet with a first of said parallel sides against first abutment means defining a line which is parallel to the datum line and displaced to one side thereof, with the other of said parallel sides of said sheet lying to the same side of the line defined by said first abutment means as the said datum line,

measuring the distance 'd' between said other parallel side and a reference line which is on the opposite side of said other parallel side from the line defined by said first abutment means, extends parallel to the datum line and is the same distance from it as the line defined by said first abutment means, and

moving the sheet towards said reference line until said other parallel side is a distance $d/2$ from said reference line.

It is is assumed that the sheet has a width 'a' and that the distance between the reference line and the line defined by the first abutment means is 'b', it will be seen that when the sheet is located with one of its parallel sides against said first abutment means, the distance 'd' of the other parallel side of the sheet from the reference line must be equal to b - a. When the sheet is moved until said other parallel side is a distance $d/2$ from the reference line, it will have been moved a distance $\frac{b-a}{2}$. Thus, one parallel side is now a distance $\frac{b-a}{2}$ from the line defined by the first abutment means and the other parallel side is the same distance $\frac{b-a}{2}$ from the reference line. Since the datum line is equidistant from the reference line and the line defined by the said abutment means, it will be understood that the parallel sides of the sheet must now be equidistant from the datum line.

Apparatus suitable for automatically determining the correct location of a sheet relative to said first datum line and suitable for use at the first station, which apparatus hereinafter referred to as registration apparatus, comprises:

support means for a sheet;

means defining a first abutment for the location there against of one of the parallel sides of a sheet resting on said support means, with said one parallel side extending along a line parallel to the datum line and displaced to one side of it;

a sensor for sensing the location of the other parallel side of a sheet located with its first parallel side against the first abutment and adapted to generate a signal as a result of said sensing; and

means responsive to said signal for determining the distance 'd' of said other parallel side from a reference line which extends parallel to the datum line and on the other side thereof from the line defined by said first abutment, said reference line and said line defined by said first abutment being equidistant from said datum line, and for automatically positioning between said reference line and asid datum line means defining a second abutment for the location there against of said other parallel side of said sheet to extend parallel to said reference line and at a distance of $d/2$ therefrom.

In general the support means will be in the horizontal plane and in the discussion which follows, this arrangement is assumed for the sake of simplicity.

In one alternative, the sensor may be fixed relative to, e.g. on, the reference line and may include means for transmitting a signal which is reflected or modified by the side of the sheet and means for detecting the reflected or modified signal. The distance 'd' of the side of the sheet from the reference line may then be derived from measurement of the time interval between transmission of the signal and detection of the reflected or modified signal.

In a preferred embodiment, however, the sensor is movable between the reference line and the datum line in a direction having a component normal to the direction of the datum line in the plane of the support surface (i.e. the horizontal plane where said surface is horizontal) and is adapted to generate a signal when it crosses the vertical plane in which the said side of said sheet lies. Conveniently the sensor is movable in a path which extends generally normally to the direction of the datum line and in a generally horizontal plane. In this embodiment, the apparatus further includes power means such as an electric motor for advancing and retracting said sensor along path and means responsive to said signal for halting the advance of the sensor when it lies in the vertical plane in which the side of the sheet lies. The means for advancing the sensor may be adapted, e.g. by means of an appropriate gear train, simultaneously to advance the means defining the second abutment along a path parallel to that of the sensor, and at exactly half the speed of advance of the sensor. Thus, provided the sensor and the means defining the second abutment are arranged so that they cross, or would cross, the reference line at the same time, the means defining the second abutment will be precisely at the required distance of $d/2$ from the reference line when the travelling sensor detects the location of the side of the sheet. An infra-red sensor is preferred and is conveniently located to travel under the plane of the support surface with the sensing means directed vertically upwards. However, other sensing means may also be used.

To enable rapid and accurate location of the side of the sheet, preferably means for controlling power means are provided which are adapted to advance the sensor rapidly a first time along said path until the side of the sheet is detected and a first signal generated, thereby detecting the approximate location of the side of the sheet, and then to retract the sensor a short distance and advance it a second time, and at a slower rate, until the side of the sheet is detected a second time, thereby generating a second signal in response to which the advance of the sensor is stopped precisely under the edge of the sheet. In a further refinement, the sensor may be retracted and advanced yet a further time to further improve the accuracy of location.

For applications where the sheets are very heavy or otherwise difficult to manipulate by hand, it is preferred that the apparatus at the first station includes means such as rollers enabling the movement of the sheet in a direction normal to the first datum line to obtain the correct positioning of the sheet relative to said datum line. If desired, means such as a motor may also be included for driving the rollers thereby providing means for positively moving the sheet in the required direction. Suitably, the support means itself may comprise an array of rollers.

Preferably, the apparatus further includes means enabling sheets resting on the support means to be moved in a direction parallel to the first datum line, so as to enable one of the sides of the sheet, other than the two sides which are to be located parallel to the first datum line, to be located on a second datum line which extends in a direction normal to that of the first datum line.

Such means enabling movement of the sheet in a direction parallel to the first datum line may also comprise rollers and power means such as an electric motor may also be provided for driving the rollers.

Thus, in one embodiment, the apparatus of the first station includes sheet manoevring apparatus comprising two sets of rollers, the rollers of each set being mounted to rotate on parallel axes and the axes of the rollers of one set being at right angles to the axes of the rollers of the other set whereby the first mentioned set is adapted to enable movement of the sheet, or to move the sheet, in a direction normal to the first datum line and the second set adapted to enable movement of the sheet, or to move the sheet, in a direction parallel to said first datum line. In this preferred embodiment, means will also be provided for adjusting the location of one set relative to the other whereby in a first position the upper surfaces of one set of rollers lie above the upper surfaces of the other set of rollers and provide a support surface for a sheet and in a second position the upper surfaces of the first mentioned set of rollers lie below the upper surfaces of the second mentioned set of rollers whereby the upper surfaces of the latter set provide a support surface for a sheet.

One form of sheet manoevring apparatus which may be employed in conjunction with the registration apparatus at the first station, which form is particularly preferred for its simplicity and compactness and because only one motor need be used thereby considerably simplifying control arrangements, comprises:

a frame

a plurality of axles mounted in parallel spaced relationship along said frame, each axle having a plurality of rollers mounted along its length, thereby forming a first array of rollers the upper surfaces of which lie in substantially the same plane and provide a first support means

a second array of rollers each of which is mounted on a separate axle which is at an angle to the direction of the axles of the rollers of the first array, the axles of the rollers of the second array being parallel to one another and each such axle being pivotable in a plane in which the axles of the first array of rollers do not lie and between a first position in which the surface of the roller mounted on the axle lies below the plane of the first support means and a second position in which said roller surface projects above said plane, whereby when the rollers of the second array are in said second position their surfaces lie in the same plane and provide a second support means whose support surface lies above that of the first support means;

and, means for pivoting the axles of the rollers of the second array between said first and second positions.

Preferably the means for pivoting the axles of the rollers of the second array are adapted to pivot all the axles of the second array simultaneously.

The said sheet manoevring apparatus may be adapted to move a sheet or other object supported thereon by the inclusion of means for rotating the rollers of the first array at the same peripheral speed and in the same direction, and for reversing the direction of rotation, and likewise means for rotating the rollers of the second array at the same peripheral speed and in the same direction, and means for reversing said direction of rotation.

As the rollers of the first array are mounted on axles which are parallel, the means for rotating such rollers may comprise, for example, a motor driving an endless chain engaging a sprocket mounted on the end of each axle to rotate therewith, the rollers being fixed to rotate with the axles on which they are mounted.

So that only one motor need be used to drive all the rollers, that is, the rollers of both arrays, means are preferably provided for driving the rollers of the second array by rotation of the rollers of the first array. For most applications, it will be desired that the axles of the rollers of the second array extend generally normally to the direction of the axles of the rollers of the first array and that the plane in which the axles of the secondary array pivot is normal to the direction of the axles of the rollers of the first array. With such an arrangement, each roller of the second array can be driven by a respective roller of the first array by arranging for the roller of the second array to be provided with a gear ring which meshes with a corresponding gear ring provided on the respective roller of the first array, e.g. in the manner of bevel gears. Constant mesh can be achieved by arranging for the axis about which the roller of the second array rotates to pivot about the axis about which rotates the roller of the first array with which the roller of the second array is in engagement.

Means may be provided for automatically controlling both (a) the rotation of each of the sets of rollers and (b) the movement of the first set of rollers relative to the second to control which set is in contact with and supports the sheet. In this way, it is possible by suitable control of the sheet manoevring apparatus to arrange for a sequence of operations such as the following to take place automatically at the registration station:

(1) sheet advanced on to support means of registration station and stopped

(2) sheet moved sideways (meaning in a direction normal to the first datum line) to bring first parallel side up against first abutment means

(3) sheet moved sideways, in opposite direction to direction of movement in step (2), to bring other parallel side of sheet up against correctly located second abutment means thereby locating sheet in desired position relative to datum line.

Between steps (2) and (3) and/or simultaneously with step (3), the sensor is arranged automatically to sense the location of the said other parallel side of the sheet and the means defining the second abutment is moved to the desired location at a distance $d/2$ from the reference line where 'd' is the measured distance between the reference line and the said other parallel side of the sheet when the sheet is in position at the end of step (2) with its first parallel side against the first abutment.

So that the sheet is not only centralised relative to the datum line but also located with one side on a second datum line which extends in a direction normal to that of the first-mentioned datum line, the sequence of operations may include the following further step

(4) sheet moved in direction which is the same or opposite to movement in step (1) to bring front or rear edge, respectively, against means defining a third abutment which extends along the line normal to the first datum line.

The position of the sheet is thus fixed absolutely and uniquely relative to both an axis parallel to the first datum line and an axis parallel to the second datum line.

The various movements may be initiated and terminated automatically e.g. by use of sensors which generate signals which activate or deactivate a motor driving the rollers and a means for changing the relative positions of the first and second sets of rollers.

For example, in one embodiment, the apparatus preferably includes the following sensors:-

| STEP | SENSOR NO. | THING SENSED | THING ACTIVATED OR INACTIVATED |
|------|-----------|--------------|-------------------------------|
| 1 | 1 | presence or absence of sheet on support means | (a) if no sheet on support means<br>(a)(i) if first set rollers not in position to engage undersurface of sheet, activate means for changing relative positions of first and second sets of rollers<br>(a)(ii) if sensor for detecting location of parallel side of sheet |

8

| STEP | SENSOR NO. | THING SENSED | THING ACTIVATED OR INACTIVATED |
|------|------------|--------------|-------------------------------|
|   |   |   | (sensor A) and second abutment not fully retracted, activate motor (hereinafter motor A) to retract same and then stop motor A |
|   |   |   | (b) start motor driving rollers (hereinafter motor B) to rotate rollers of first set in direction to advance a sheet on to support means in direction parallel to first datum line |
| 2 | 2 | arrival of trailing edge of sheet at predetermined point on support means | (a) stop motor B |
|   |   |   | (b) activate means for changing relative positions of sets of rollers whereby second set enages sheet |
|   |   |   | (c) restart motor B to drive second set of rollers in sense to move sheet in direction normal to first datum line towards first abutment |
|   |   |   | (d) run motor B for predetermined time (sufficient to ensure first parallel side edge of sheet is urged into position against, and aligned with, first abutment means) |
|   |   |   | (e) stop motor B |
|   |   |   | (f) start motor A in direction to advance sensor for detecting location of other parallel side of sheet and moving second |

9

| STEP | SENSOR NO. | THING SENSED | THING ACTIVATED OR INACTIVATED |
|---|---|---|---|
| | | | abutment into desired position |
| 3 | A | other parallel side of sheet | (a) stop motor A (if desired) after performing at least one retraction and re-advance of sensor A as described above for improved accuracy of positioning of sensor A (and second abutment) |
| | | | (b) start motor B to rotate second set of rollers in reverse direction and drive sheet towards second abutment |
| | | | (c) run motor B for predetermined time (sufficient to ensure other parallel side edges of sheet is urged into position against, and aligned with, second abutment means) |
| | | | (d) stop motor B |
| | | | (e) activate means for removing sheet from support table |

Step 3(e) suitably activates the sheet transfer means such as described above for lifting the precisely registered sheet and transferring it to the second, or adhesive coating, station where it will be coated with adhesive or placed with precision on top of an adhesive-coated interlayer lying on a sheet which has previously been likewise lifted and transferred to said second station.

This completes the cycle.

Where the apparatus includes said means defining a third abutment, the sequence may include between step 3(d) and step 3(e), the further steps of:

3(f) activate means for changing relative positions of sets of rollers whereby first set of rollers reengages sheet

3(g) activate motor B to drive rollers to move sheet in direction towards third abutment

3(h) run motor B for predetermined time (sufficient to ensure that the third edge of the sheet is urged into position against [and aligned with] said third abutment means)

3(j) stop motor B

10

Instead of running the motor for a predetermined time in either or both of steps 3(c) or 3(h), further sensor means may be provided for detecting arrival of the relevant edge of the sheet against the relevant abutment and means responsive to a signal generated by the sensor as a result of the sensed arrival to stop motor B. Such means may also include provision for a short time delay between the sensed arrival of the side of the sheet against the respective abutment and the inactivation of motor B. The short continuation of the rotation of the rollers assists correcting any skew in the direction of the sheet relative to the line defined by the respective abutment.

In the preferred case where the third abutment is adapted to engage the trailing edge of the sheet, means are provided for removing the abutment out of the path of a sheet advancing on to the support means prior to step 1(b) and for positioning said abutment in the desired position prior to step 3(g).

Conveniently, said third abutment may comprise a flap pivotable about a horizontal axis extending in a direction normal to the first datum line and below the plane of the support means, the flap being pivotable between an operative position in which it extends generally vertically above the plane of the support means and an inoperative position in which it lies below said plane. Means such as a hydraulic or pneumatic ram may be provided for moving the flap from one position to another.

To enable the lifting of the sheet from the support means of the apparatus of the present invention, after it has been located in a desired position, it is desirable to move the means defining the second abutment out of the way; however, in the production of laminates from identically sized sheets, it is of course essential that the abutment be returned exactly to its original position to enable the correct positioning of the second sheet. To this end, rather than move the means defining the second abutment, it is preferred that said means include retractable buffer means and means for moving the buffer means between an extended position, in which surfaces thereof define the required position of said second abutment i.e. to locate said other of said parallel sides of the sheet on a line parallel to the reference line and a distance $d/2$ therefrom, and a retracted position. Suitably, the means defining the second abutment may comprise two or more pistons each extending in a direction normal to the first datum line, each piston being adapted to slide axially to a face of the piston providing the surface against which the edge of the other of said parallel sides of the sheet is brought into contact for correct location of the sheet, the said piston being movable, e.g. by pneumatic or hydraulic ram means between an extended position, in which said face is in the precise position for the correct location of the sheet, and a retracted position. The above described control means may include means for retracting the pistons between steps 3(d) and 3(e), to enable a registered sheet to be lifted clear of the second abutment means and means for advancing the pistons to define the second abutment means prior to or simultaneously with step 3(b).

Where the first (registration) station includes means for measuring the length and width of the sheet for use, e.g. as input to a computer, to control the distribution of adhesive on to the sheet at the second (adhesive) station, the width of the sheet may be readily be determined by measuring the distance 'd' travelled by the sensor from the reference line to the near side of the sheet resting with its other side aligned against the first abutment means, because this width is simply D - d where D is the distance between the said reference line and the line defined by the first abutment, which is a known fixed value.

Means for measuring the length of the sheet may comprise a wheel adapted to engage a surface of a sheet which is being advanced past it in a direction parallel to the first datum line, e.g. during its advance along the support table at the first (registration) station or its advance to the first station from a preceding station, e.g. a pretreatment or feed station, and means for determining the angular displacement of the wheel caused by the passage of the sheet. Preferably, the wheel is adapted to engage the underside of the sheet. Conveniently the wheel is located just prior to the support means of the registration station, to engage a sheet being advanced to the support means from a previous station. In such arrangement, in order to avoid error caused e.g. by the leading edge of the sheet engaging the wheel before it reaches the tangential position and/or by the trailing edge of the sheet not disengaging from the wheel until after it has passed the tangential position, in each case for example due to bowing of the sheet due to gravity, it is preferred to include means for sensing the passing of the leading edge and trailing edge respectively of the sheet through top dead centre of the wheel and for generating first and second signals as the leading edge and trailing edge, respectively, pass through the said plane, and means responsive to the first signal for activating the means for counting the revolutions (and fractions of revolution) of the wheel, and responsive to the second signal for inactivating said means. Said sensing means may suitably comprise an infra red sensor and with suitable location thereof, said sensor may be the same as the sensor 2 referred to above.

The invention also provides apparatus suitable for use at said second station for coating the sheet with adhesive.

Thus, further according to the present invention there is provided apparatus for coating a surface with a viscous liquid such as an adhesive, said apparatus comprising

first means for depositing said liquid on the surface to be coated and comprising an array of nozzles

means for effecting relative movement between said liquid depositing means and said surface over a predetermined finite distance along said surface; and

means for independently dispensing through each nozzle a predetermined volume of said liquid at a predetermined rate driving the period of said relative movement;

and wherein said nozzles are located at spaced intervals in a direction generally transverse to the direction of relative movement between said surface and said liquid depositing means.

Thus, by means of this apparatus, the adhesive is deposited in the form of a plurality of parallel ribbons which extend along the sheet, and the length of each ribbon relative to the length of sheet and the amount of adhesive per unit length of ribbon are controlled.

Preferably, the apparatus as adapted for coating a sheet includes support means for the sheet and the nozzles comprising the liquid dispensing means are disposed on a gantry adapted to travel over the support surface and normally the predetermined distance travelled by the liquid dispensing means corresponds to the length of the sheet. Suitably, means such as a reversible motor, are provided for advancing the gantry over the sheet and then returning it to its start position. Adhesive may be dispensed during either or both of the outward and return journey but preferably only on the outward journey. Preferably the apparatus includes means for activating the dispensing of the liquid through the nozzles responsive to activation of the means for advancing the gantry over the sheet and the means for advancing the gantry and each of means for dispensing the liquid through the nozzles operate synchronously.

Each nozzle has associated therewith its own independent means for dispensing a predetermined volume of the liquid which may be a zero quantity if desired, in which case the nozzle is said to be inactivated.

Information relating to the width and length of the sheet and supplied from the first (registration) station as described above, may be employed to determine, for example, which nozzles are activated and which are inactivated, the volume of liquid supplied from each nozzle and the rate at which said volume is dispensed through the nozzle.

In a particularly preferred embodiment, the liquid dispensing means includes a line of primary nozzles extending in a direction normal to the direction of relative movement between the dispensing means and the surface to be coated, the distances between adjacent nozzles in the line being equal, and the apparatus further includes means for adjusting the distance between the first and last nozzles in the line while maintaining equal the distances between adjacent nozzles. By means of this embodiment a wide variation of width of the sheet to be coated can be accommodated and also a wide variation in the amount of adhesive to be deposited on said sheet. For example, the distance between the first and last nozzle in the line can be adjusted according to the width of the sheet and/or, for narrower sheets or where a relatively light coating of adhesive is required, one or more of the applicators may be inactivated and the distance between the outermost activated applicators adjusted according to the width of the sheet to be coated.

Thus the apparatus may include automatic means responsive to information relating to the width of the sheet to be coated for activating and inactivating selected applicators and adjusting the distance between the outermost activated applicators.

A "lazy tongs" arrangement is preferably employed for linking the nozzles together and a rotatable screwed rod, one half of the screwed length of which has a right hand screw and the other half of the screwed length of which has a left hand screw of the same pitch as the right hand screw, is preferably employed for adjusting the distance between nozzles by arranging for the nozzles to comprise two banks having an equal number of nozzles, one bank of which is attached to a tapped nut engaging the left hand screw thread and the other bank of which is attached to a tapped nut engaging the right hand screw thread of the screwed rod. By rotating the screwed rod in one direction or the other, the distance between the first and last nozzles can be adjusted while keeping them equidistant from a central point.

Thus, when a sheet which has been correctly registered at the first station and transferred by the sheet transfer means to the second station so that it is deposited on the support means thereof in a position which is exactly centralised relative to the array of nozzles, the spacing between said nozzles can be adjusted in response to information as to the width of the sheet and by appropriate rotation of the screwed rod and/or inactivation of certain of the nozzles, to provide a desired pattern of deposition of adhesive on the sheet automatically.

The predetermined distance to be travelled by the liquid dispensing means relative to the surface may be controlled by means responsive to information relating to the length of the sheet and said means may also control the volume of liquid to be dispensed through each nozzle and the rate at which it is dispensed, whereby, for example, liquid may be dispensed through a nozzle over the whole length of the sheet or a part of the length.

In a preferred embodiment, the liquid dispensing means also includes a pair of secondary nozzles located on a line which is parallel to the line of primary nozzles. These secondary nozzles may be used to deposit a small ribbon of adhesive close to the edge of each side of the sheet parallel to the centre line of the apparatus, to act as barriers to prevent any of the main bulk of adhesive deposited by the primary nozzles from overflowing the edges. Means, such as the counter-screwed rod and nut arrangement described above for the primary nozzles, are preferably provided for automatically adjusting the distance of each of these secondary nozzles from the centre line of the apparatus responsive to information relating to the width of the sheet.

As mentioned in EP-A-108632, best results are obtained when the adhesive is deposited in a pattern comprising a pool of adhesive extending across the sheet proximate one end thereof and ribbons of adhesive extending lengthwise along the sheet from the pool to the other end of the sheet. To enable the formation of the pool, the adhesive coating apparatus may also include further means for dispensing liquid on the surface to be coated and means for effecting relative movement between said surface to be coated and said liquid dispensing means over a predetermined distance and in a direction which is generally transverse to the direction of movement of the first liquid dispensing means relative to the surface to be coated, said further liquid dispensing means comprising at least one nozzle for dispensing liquid on to the surface to be coated and adapted to be connected to a supply of liquid and means for dispensing through said nozzle a predetermined volume of liquid during the period of said relative movement and at a predetermined rate. Preferably, said further means includes at least two nozzles, hereinafter referred to as tertiary nozzles, one for depositing the bulk of the adhesive forming the pool and another for depositing a thin ribbon of adhesive along the edge of the sheet proximate which the pool is deposited, to act as a barrier to prevent any of the bulk of the pool of adhesive from overflowing said edge.

Said further liquid dispensing means are conveniently mounted on a carriage adapted to travel in a direction normal to the direction of travel of the gantry carrying the primary and secondary nozzles. Means responsive to information relating to the width of the sheet may be provided to control the positions across the width of the support for the sheet at which said tertiary nozzles commence to dispense adhesive and stop dispensing adhesive, thereby permitting the processing of sheets of various widths while they are held centrally relative to the centre line of the apparatus in the direction of travel of the primary applicator nozzles relative to the surface to be coated. The volume of adhesive dispensed through each tertiary applicator nozzle may be controlled automatically in response to information relating to the width and length of the sheet.

The apparatus in this embodiment preferably includes means for activating the dispensing of the liquid through the nozzles of said second liquid depositing means responsive to activation of the means for advancing the carriage, or preferably, to activation of the means for advancing and retracting the carriage. Preferably, each of the means for dispensing a liquid through a nozzle of said second liquid depositing means are adapted to be operated synchronously.

For simplicity of construction, the carriage is preferably located below the plane of the surface to be coated, with the tertiary nozzles projecting upwards above said surface and then bending over, in inverted 'U' form, to terminate in an orifice above said surface.

In one suitable form each nozzle of the apparatus is connected to a container for the liquid, said container having an inlet adapted to be connected to a supply of the liquid, and an outlet connected to said nozzle, and means for delivering a predetermined volume of liquid from said container to said nozzle at a predetermined rate during said period of relative movement. The container preferably comprises a cylinder having a bore and a piston axially slidable in said bore and wherein movement of the piston in one direction in the bore draws liquid into the cylinder and movement of the piston in the reverse direction delivers liquid from the cylinder to the nozzle, and means are provided for controlling the length of stroke of the piston on a delivery stroke thereby controlling the volume of liquid delivered, and means for controlling the velocity of the piston on said delivery stroke, thereby controlling the rate of delivery of said volume of liquid. It will be understood that a substantially fluid-tight seal is required between the piston and the bore. The apparatus is arranged to drive the piston on its delivery stroke during the period of relative movement between the support means and the dispensing means.

13

A reversible step motor may be employed for driving each piston forward and backward in the bore, together with means for controlling the number of revolutions of the motor on the delivery stroke of the piston, thereby determining the volume of liquid which is delivered to the nozzle and means for controlling the speed of rotation of the motor on the delivery stroke, which will determine the rate at which the said volume of liquid is delivered to the nozzle.

After the adhesive depositing means has coated a sheet with adhesive at the second (adhesive coating) station of the apparatus by the adhesive depositing means, the lamina to be bonded to the sheet is applied to it. In the production of a safety glass laminate in accordance with the invention, this will be a plastics interlayer, e.g. of pvc. Preferably, the application of the interlayer to the adhesive-coated surface of the sheet is effected while the sheet remains on the support means of the second station so that by a second operation of the adhesive depositing means, a layer of adhesive is then applied to the exposed face of the interlayer. The application of the interlayer may be effected manually. A second glass sheet which has been registered at the first (registration) station is then transferred by the sheet transfer means of the apparatus to the second (adhesive coating) station and deposited precisely on top of the assembly of first glass sheet and interlayers, thereby completing the formation of the assembly.

The assembly so formed is then transferred by the first conveyor means to the third (curing) station for exposure to the radiation required for curing thelayers of adhesive. This first conveyor means may take any suitable form such as a roller conveyor and may include motor means for driving the rollers. Automatic means may be provided for activating the driving means when assembly of the laminate at the second station is complete, and for stopping the driving means.

To avoid the possibility of a layer of the laminate slipping out of position relative to another layer during its transfer from the second station to the third station because of any lubricating effect of an uncured adhesive layer, it is desirable for the driving means to be such as to effect smooth acceleration and deceleration of the assembly and automatic means may be provided for decelerating the driving means e.g. responsive to a signal generated by means sensing the arrival of the assembly at a point just short of where it is to stop.

The third (curing) station of the apparatus comprises a radiation zone including means for irradiating both sides of the assembly with the required kind and dosage of radiation to effect curing of the two adhesive layers of a glass/interlayer/glass laminate. Suitable radiation sources, e.g. u.v. lamps, are disposed above and below the path of an assembly being advanced through the radiation zone. Any conveyor means provided for advancing the assembly through the zone must not shadow any part of the assembly from the radiation. Preferably, therefore, means are provided for advancing the assembly to the radiation zone and for advancing the assembly from the radiation zone and the radiation zone itself is free of conveyor means.

As indicated above, preferably the third station also includes pressure means for ensuring that the adhesive layer is uniform and free of air bubbles or voids before the assembly is advanced to the radiation zone. Such means preferably comprise a pair of contrarotating calender rolls, means for adjusting the gap between the rolls to apply a desired pressure to an assembly passing between the rollers and means for driving the rolls synchronously.

In operation, and with the nip between the calender rolls set to be wider than the combined thickness of the baseboard and laminate, the latter are advanced by said first conveyor until the leading edge of the laminate is lying just downstream of the nip. The nip is then returned to apply the desired pressure to the laminate and the rolls are rotated to advance the laminate through the calender and into the radiation zone which is preferably located as close to the calender on the downstream side as possible so as to minimise the delay between the release of pressure over the laminate and its exposure to the radiation for curing the adhesive layers. By closing the nip on the laminate at a position just behind the leading edge, rather than feeding the laminate into the closed nip, the possibility of squeezing adhesive away from the leading edge of the laminate is avoided. Instead, adhesive is squeezed forward towards the leading edge.

Preferably means, such as a sensor sensing the arrival of the leading edge of the assembly at a predetermined point, are provided for controlling the first conveyor means to automatically stop the advance of the laminate in the correct position, for closing the nip and then starting the calender rolls. Preferably said means also include means for restarting said first conveyor means synchronously with the calender rolls. Preferably also, means are provided for automatically apply a predetermined pressure to the laminate by the calender rolls, responsive to information relating to the length, width and thickness thereof.

To avoid bowing of the laminate during calendering, it may be desirable to set the top roll slightly in front or behind the vertical position relative to the lower roll. The correct position can be determined by simple experiment.

The radiation zone indicates means located above and below the path of the assembly of laminate and baseboard through the zone for irradiating the assembly with the desired radiation for curing the adhesive.

The assembly is advanced from the radiation zone to the fourth (Offloading) station by the second conveyor means which is suitably of the same general construction and operation as the first conveyor means. Suitably means are provided for rotating the rollers of second conveyor means synchronously with the calender rolls and the rollers of the first conveyor means.

The fourth (Offloading) station preferably includes means for lifting the cured laminate clear of the baseboard. Conventional means for lifting and transporting glass sheets, e.g. comprising suction means on a carriage mounted on an overhead railway, may be employed.

The baseboard may then be transferred from the fourth station to the sixth (Baseboard Receiving) station for return to the fifth (Baseboard Supply) station, to complete its circuit. Any suitable means may be provided and for conveying the baseboard from the sixth station to the fifth station.

The invention will now be described in greater detail with reference to a preferred embodiment thereof and with the aid of the accompanying drawings in which:

Figure 1 is a schematic overall plan view of apparatus according to the invention adapted for the production of laminated glass.

Figure 2 is a diagrammatic overall perspective view of the Support Table and associated Automatic Registration Means comprising the Sheet Registration Station of the apparatus with some parts omitted for clarity.

Figure 3 is a plan view of the apparatus of Figure 2 with some parts omitted for clarity.

Figure 4 is a vertical cross-section through a side member of the Support Table of the apparatus of Figure 2.

Figure 5 is an enlarged diagrammatic plan view, part in cross-section, of the arrangement of rollers of the Support Table.

Figure 6 is an enlarged diagrammatic side elevation looking in the direction from top to bottom of the view shown in Figure 3, part in cross-section, of a part of the Support Table and roller arrangement of the apparatus of Figure 2, showing the means for changing the relative positions of the rollers.

Figure 7 is another enlarged diagrammatic side elevation, looking in the direction from bottom to top of the view shown in Figure 3, part in cross-section of a part of the Support Table and roller arrangement of the apparatus of Figure 2, from the other side of the Support Table from the view of Figure 6.

Figure 8 is a plan view of the arrangement for supporting the movable sensor in the apparatus of Figure 2.

Figure 9 is a cross-section through a stop member of the Automatic Registration Means.

Figure 10 is a side elevation of the manner of mounting the beam supporting the stops members of Figure 9.

Figure 11 is a plan view of a part of the apparatus shown in Figure 10.

Figure 12 is a side elevation of a part of the apparatus of Figure 2 showing the arrangement of the rotatable flap.

Figures 13 and 14 are front and rear elevations, respectively, of one part of the adhesive dispensing apparatus of the Adhesive Coating Station 6, i.e. looking from left to right, and right to left, respectively, on the plan view of Figure 1 and Figure 13 a view along the line AA.

Figure 15 is a plan view of the part of the adhesive dispensing apparatus of Figures 13 and 14.

Figure 16 is a side elevation of the part of the adhesive dispensing apparatus of Figures 13 and 14 looking from left to right of the view shown in Figure 13.

Figure 17 is a vertical cross-section through an adhesive supply pump used in the adhesive dispensing apparatus of Figures 13 to 16.

Figure 18 is a front elevation of another part of the adhesive dispensing apparatus of the Adhesive Coating Station 6, i.e. looking from left to right of the plan view of Figure 2, and is generally a view along the line AA of apparatus lying underneath the apparatus shown in Figure 13.

Figure 19 is a side elevation of the apparatus of Figure 18, viewed from the left of the view shown in Figure 18.

Figure 20 is a plan view of the apparatus of Figure 18.

Figure 21 is a very diagrammatic side elevation, looking from left to right of the view shown in Figure 13, of control apparatus attached to the frame of the support table at the Adhesive Coating Station.

Figure 22 shows in diagrammatic form the paths of a sheet and baseboard through the various stations of the apparatus of Figure 1.

Figure 23 shows the preferred pattern of deposition of adhesive on a sheet by the primary and tertiary applicators of the adhesive coating apparatus.

Figure 24 is a diagrammatic cross-sectional front view showing certain parts of the calender employed at the Curing Station.

15

Figure 25 is a plan view of the apparatus shown in Figure 24.

Figure 26 is a side elevation of a part of the apparatus shown in Figure 24.

Figure 27 is a vertical cross-section through apparatus of the Baseboard Supply Station 22 as viewed from right to left in Figure 1 and with some parts omitted for clarity.

Figure 28 is a side elevation of one end of the apparatus of Figure 27.

Figure 29 is a diagrammatic plan view of part of the apparatus of Figure 27.

Figure 30 is a vertical elevation, part diagrammatic, of the Sheet and Baseboard Transfer Means.

Figure 31 is a side elevation of part of the right hand side of apparatus of Figure 30.

Figure 32 is an elarged view of a detail of the apparatus of Figure 30.

## THE APPARATUS - GENERAL ARRANGEMENT

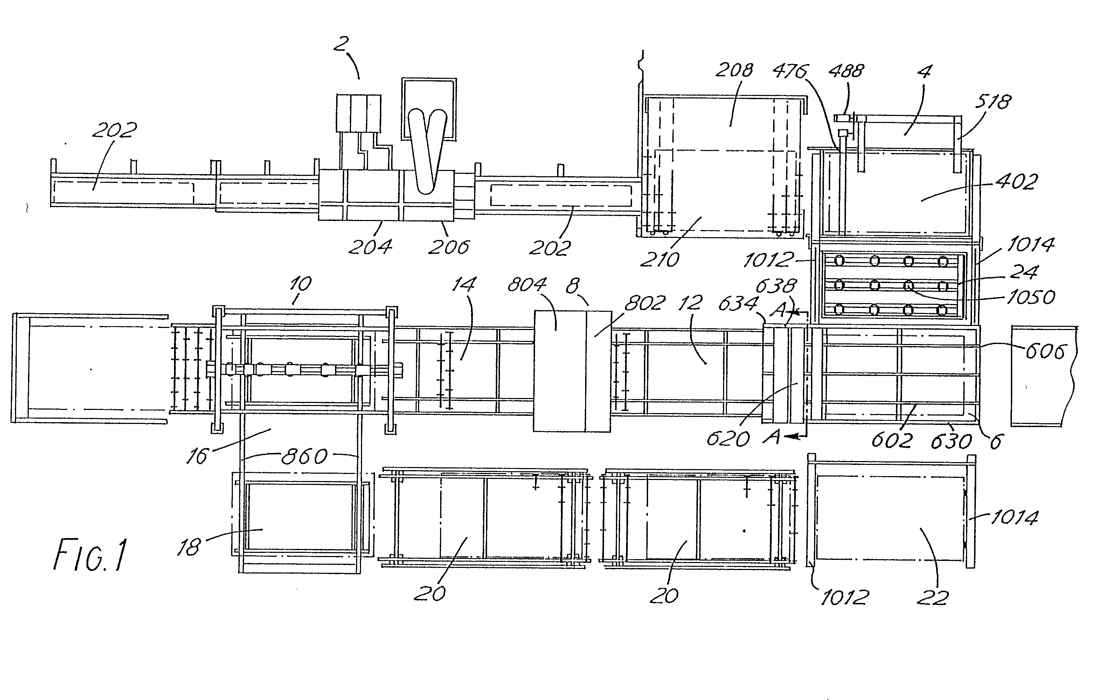

Figure 1 shows in schematic plan view, an apparatus according to the invention and particularly designed for the production of laminated glass of the kind comprising two glass sheets with an interlayer such as a plastics film therebetween. The production method involves coating a face of a first sheet of glass with a layer of adhesive, applying the interlayer to the coated face, coating the exposed face of the interlayer with a layer of adhesive, placing a second glass sheet on top of the adhesive-coated face of the interlayer and then treating the laminate to cure the two layers of adhesive. To enable the curing of the two adhesive layers to be effected in a single step, the laminate of first glass sheet, interlayer and second glass sheet is built up on a flat baseboard which is transparent to the radiation used for curing. For the purposes of the following description of the apparatus and its manner of operation, the sheets are assumed to be rectangular.

Referring to Figure 1, the apparatus comprises a glass pretreatment station generally indicated by reference number 2, sheet registration station 4, adhesive coating station 6, curing station 8, offloading station 10, first conveyor means 12 for transferring an assembly from the adhesive coating station 6 to the curing station 8 and second conveyor means 14 for advancing a cured assembly from the curing station 8 to the offloading station 10. First baseboard conveyor means 16 transfer baseboards from the offloading station 10 to a baseboard receiving station 18 whence the baseboards are transferred by second baseboard conveyor means 20 to a baseboard supply station 22 from which baseboards are supplied to the adhesive coating station 6.

The stations 2 and 4 are arranged in one line and the stations 6,8 and 10 are arranged in a second line parallel to the first, with station 6 opposite station 4 so that the direction of travel of a glass sheet through stations 6, 8 and 10 is opposite to that of its direction of travel through stations 2 and 4. Stations 18 and 22 are also in line and parallel to the line of stations 6, 8 and 10, with station 18 opposite station 10 and station 22 opposite station 6, whereby the direction of travel of a baseboard from station 18 to station 22 via second baseboard conveyor 20 is opposite to its direction of travel along stations 6, 8 and 10.

Stations 4, 6 and 22 are in line and means 24, hereinafter referred to as sheet and baseboard transfer means, are provided for transferring glass sheets from station 4 to station 6 and for transferring baseboards from station 22 to station 6.

A baseboard travels from left to right from station 18 to station 22, then in the direction up the sheet from station 22 to station 6 and then from right to left from station 6 to station 10 whence it is transferred to station 18 to repeat the cycle. A glass sheet being treated travels from left to right in the view shown in figure 1 from station 2 to station 4, then in the direction down the sheet from station 4 to station 6, where it is deposited on a baseboard then from right to left from station 6 to station 10 on top of a baseboard.

## PRETREATMENT STATION (2)

The purpose of the pretreatment station is to prepare a glass sheet for lamination to another glass sheet. As generally indicated at 2 (see Figure 1), it includes a load conveyor 202 adapted to receive and advance vertically standing glass sheets, one at a time, through a pretreatment zone 204 where the sheets are washed and degreased and thence to a drying zone 206. From the drier, the sheets are forwarded on the conveyor to means 208 for tilting a sheet from the vertical to the horizontal plane and on to a further conveyor 210 which is adapted to advance the sheet to the next station, generally indicated by reference number 4, which is the registration station.

For the conveyors 202 and 210, arrangements for washing, degreasing and drying the sheets and for tilting the dried sheets from the vertical to the horizontal, as employed in pretreatment station 2, conventional apparatus such as that sold by GLASMATEC may be used.

## REGISTRATION STATION (4)

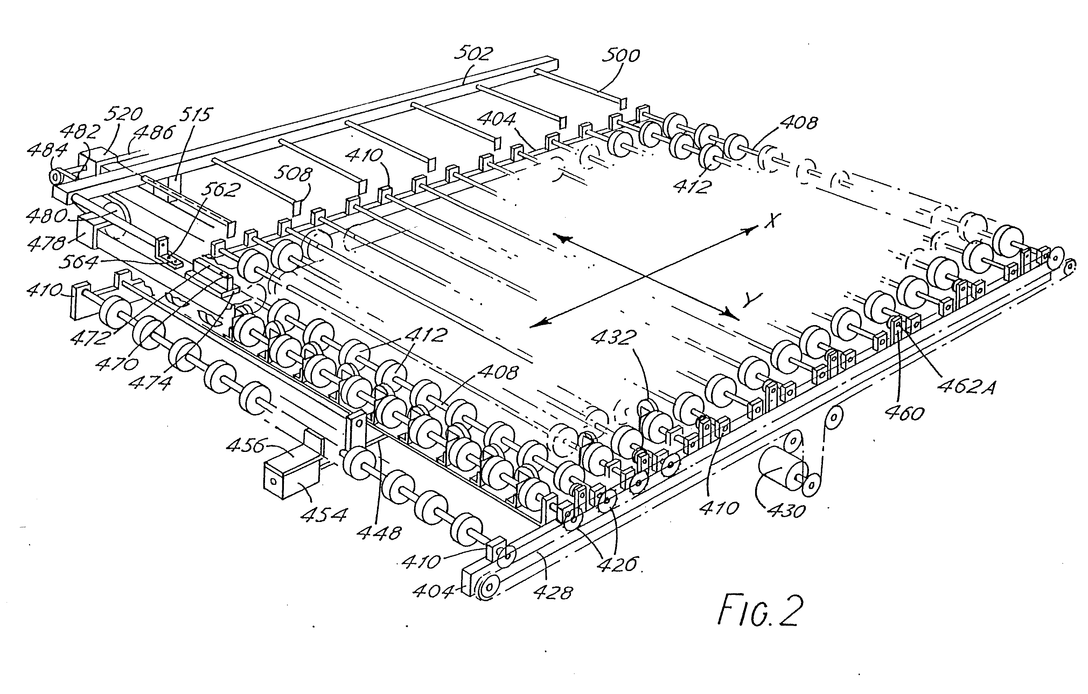

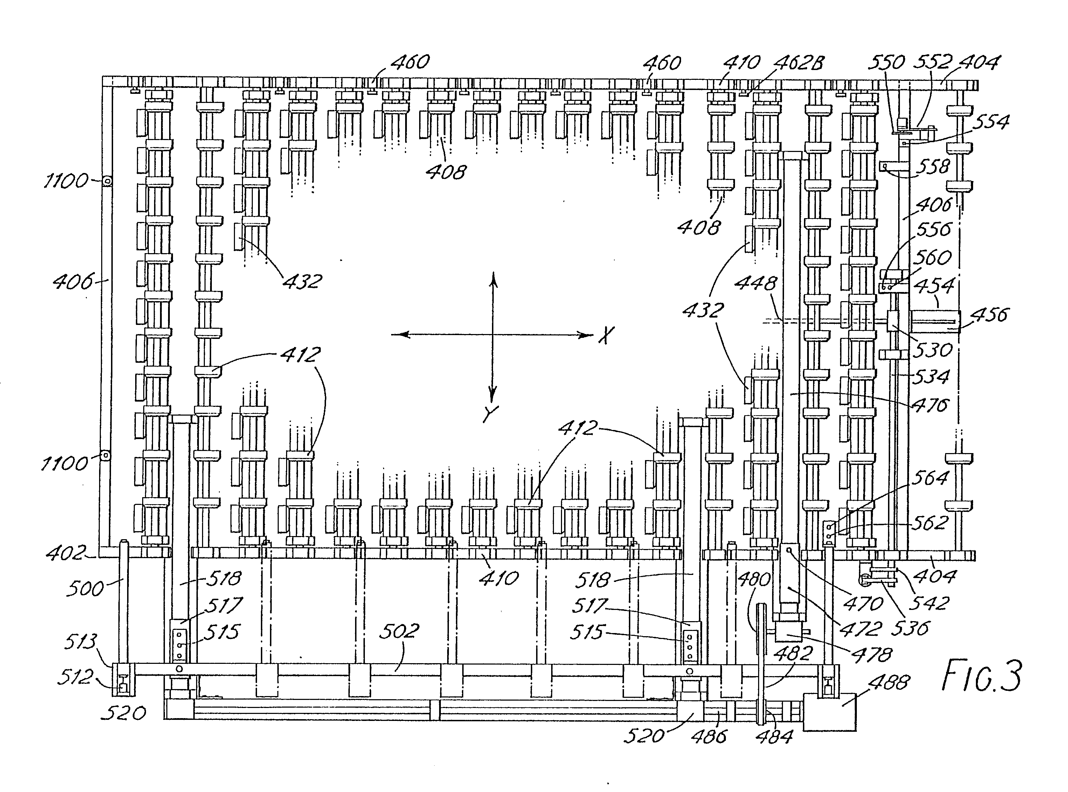

The purpose of the apparatus of registration station 4 is to manoevre each sheet which is advanced by conveyor 210 from pretreatment station 2 so that it is positioned centrally with respect to a datum line (the first datum line) which extends in the machine direction, i.e. in the direction of the arrow 'X' in Figures 2 and 3, and is also positioned with its rear or trailing edge on a second datum line which extends at right angles to the first; i.e. in the direction of the arrow 'Y' in Figures 2 and 3. By positioning the sheet centrally with respect to the first-mentioned datum line is meant that the sheet is located over the datum line with two of its sides parallel to the datum line and equidistant from said datum line. To this end, the registration station includes a Support Table having means enabling the movement of the sheet in each of the directions X and Y on the table and Automatic Registration Means for automatically locating the sheet in the desired position relative to the two datum lines.

## REGISTRATION STATION - SUPPORT TABLE

Referring particularly to Figures 2 and 3, the support table of the registration station comprises a generally rectangular steel frame generally indicated by reference number 402 and made a pair of side members 404 joined at each end by cross members 406 (Figure 3). The frame is mounted on a suitable support structure fabricated from girders and not shown.

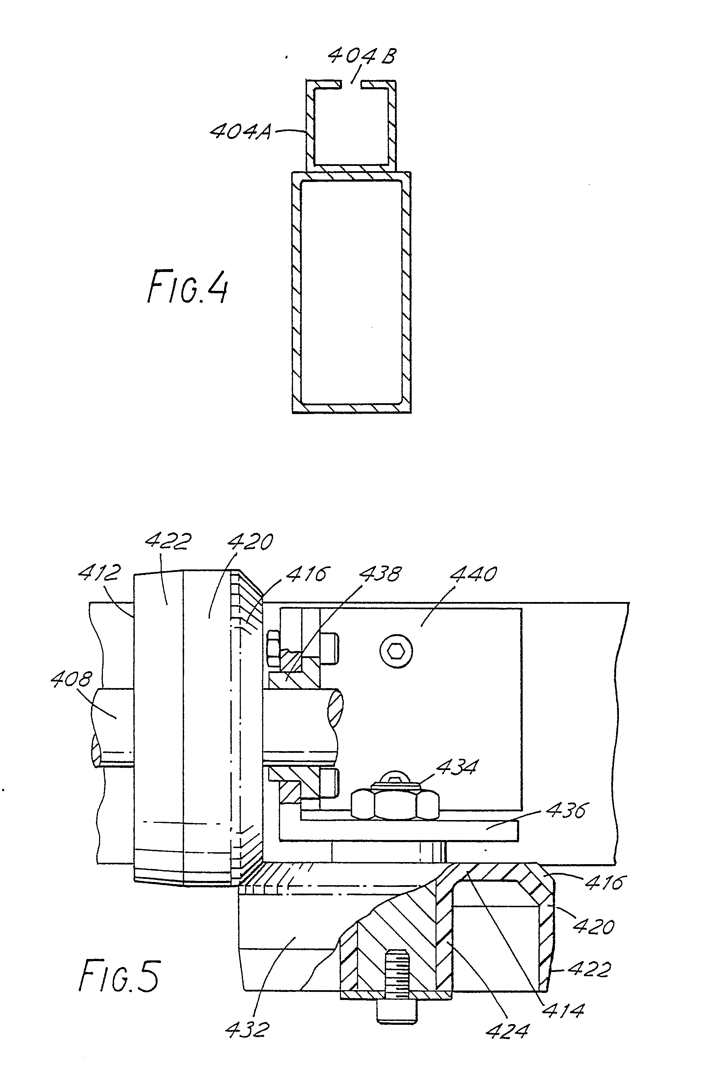

At spaced intervals along the side members, and parallel to the cross members, are a series of shafts 408 mounted to rotate in journals 410 bolted on to the side members. Referring to Figure 4, each side member is provided with a top portion 404A which is hollow with a longitudinally extending slot 404B in the top wall to enable the positions of the fournals 410 to be adjusted along the length of each of the side members. the journals are clamped in position by means (not shown) such as stud bolts which pass through the slot and are tightened against a clamp piece within the hollow portion of the side member.

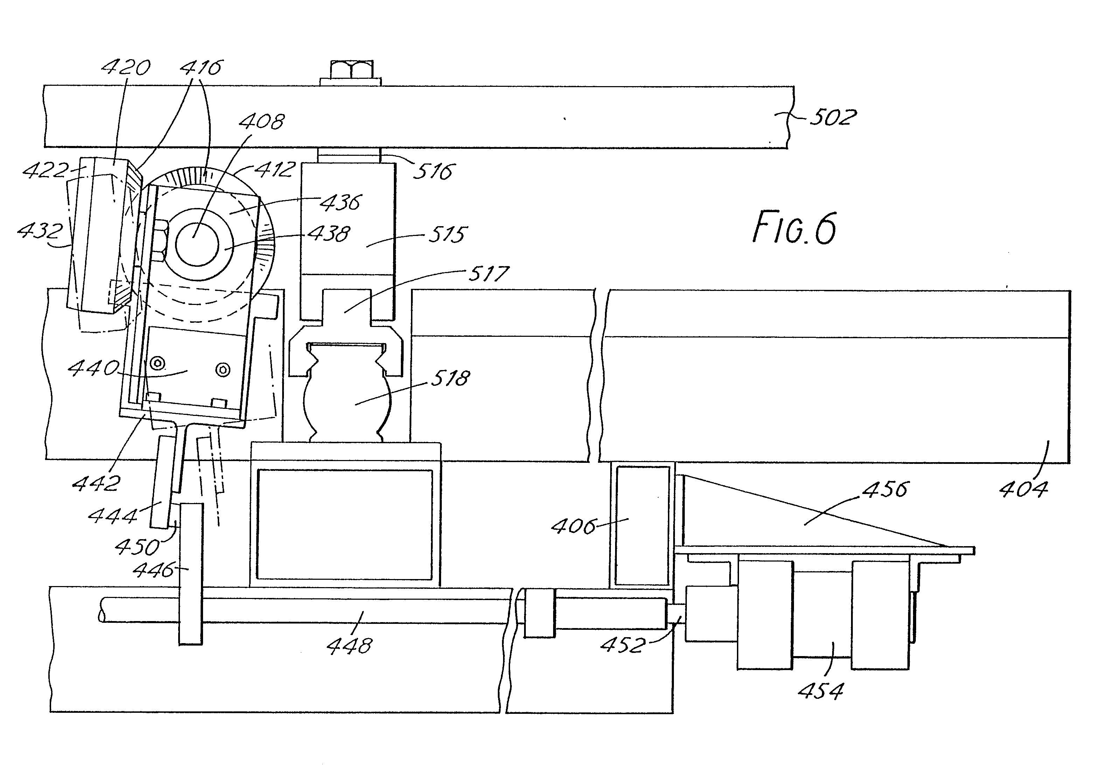

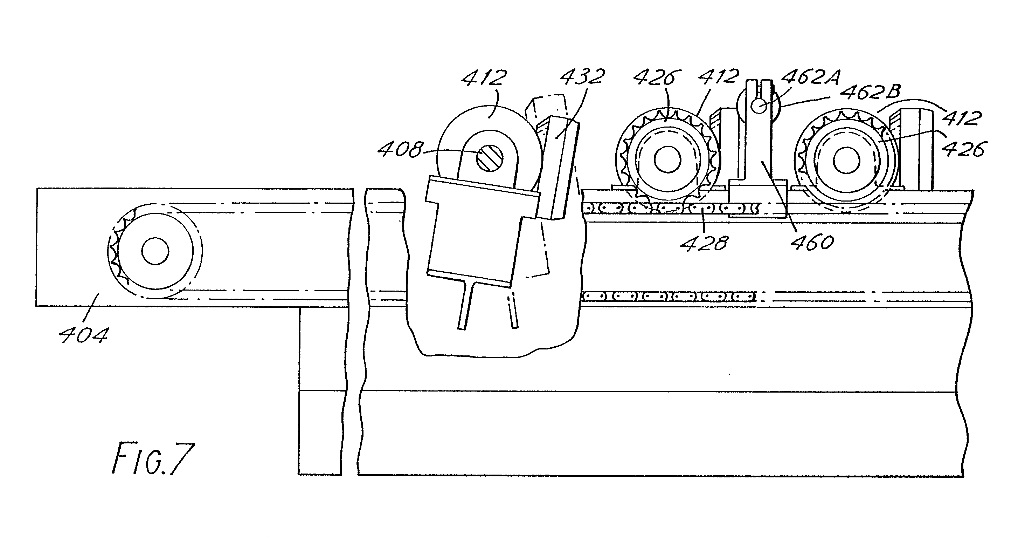

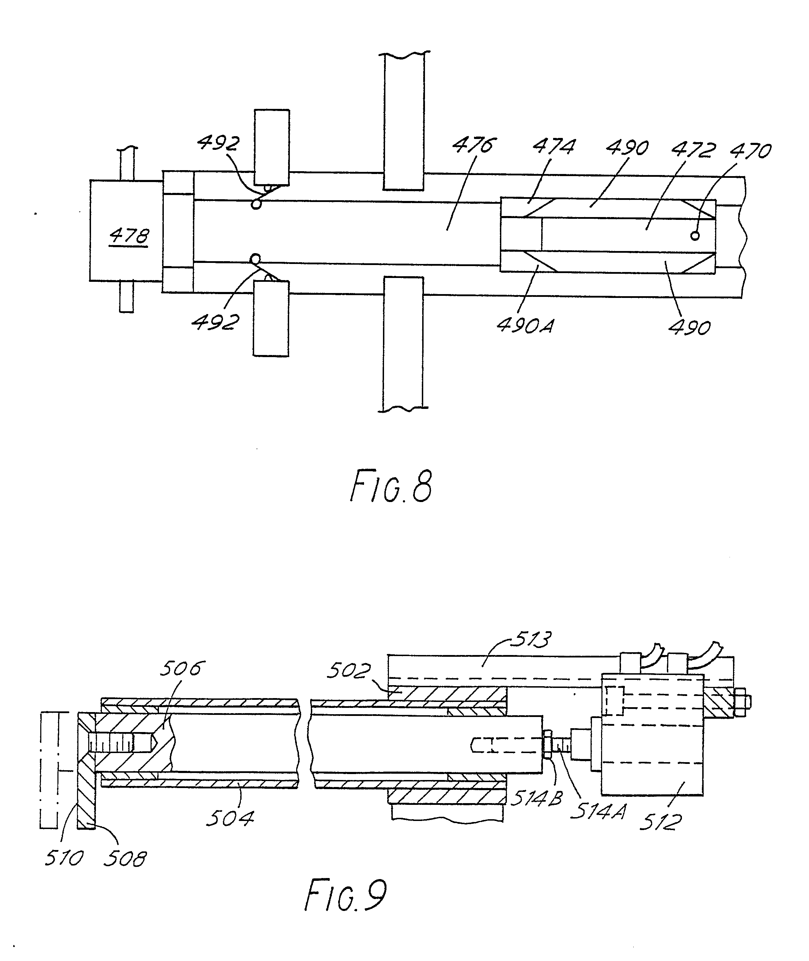

At spaced intervals along each shaft, and fixed to rotate with the shaft, are mounted a number of rollers 412 which are made of plastics, rubber or other suitable material. In the form illustrated (see Figures 5 and 6), each roller is moulded from plastics and comprises an annular disc 414 on the peripheral portion of which is formed a bevelled gear ring 416 from the outer edge of which extends rearwardly a flange a first portion 420 of which, adjacent the gear ring, is substantially cylindrical and a second portion 422 of which, lying to the other side of the cylindrical portion from the gear ring, has a rearwardly tapering frusto-conical surface for reasons that will become apparent. Behind the centre of the disc of the roller extends a collar 424 (Figure 5) providing a bearing for the shaft and means (not shown) such as a clamp are provided for fixing the roller to the shaft to rotate with it.

Each shaft has mounted at one end thereof, and fixed to rotate therewith, a sprocket 426 (Figure 2) which engages an endless chain 428 driven by a variable speed electric motor 430 equipped with reversing means. As best seen in Figure 7, the chain is arranged to run under each sprocket to enable individual shafts to be lifted from the frame, e.g. to replace a damaged or broken roller, without disturbing the other shafts or interfering with the running of the machine.

The rollers 412 form a first array of rollers the upper surfaces of which provide a support surface for a sheet and by rotation of the rollers by the motor 430, a sheet resting on them can be moved forwards and backwards along (i.e. in the direction of the long axis of) the machine, as indicated by the arrow 'X' in Figures 2 and 3.

To enable movement of the sheet across (i.e. in a direction normal to the long axis of) the machine, as indicated by the arrow 'Y', at least some of the rollers of the first array have associated with each of them a second roller 432 which is mounted to rotate freely on a stub axle 434 (Figure 5) which extends at right angles to the shaft 408 on which the first roller is mounted. The second roller is identical to the first roller (except that it is not provided with means for attaching it to its axle to rotate with it) and is mounted so that its bevelled gear ring is in engagement with the corresponding gear ring of the first roller whereby rotation of the first roller will rotate the second roller. Referring to Figures 5 to 7, the stub axle 434 on which the roller 432 is free to rotate is mounted on a sub-frame which in the form illustrated comprises a right angled steel girder 436. The stub axle is bolted to one face of the girder, towards one end thereof, and the other face of the girder is drilled to provide a bore which is provided with a journal 438 through which the shaft 408 passes whereby the girder pivots freely on said shaft. The axes of the stub axle 434 and the shaft 408 are coplanar. The girder extends downwards and to the other, lower, end of the girder is bolted a trunnion 440 (Figure 6) to the bottom face of which is bolted a mounting 442 for a tie-rod 444 which extends across the machine, parallel with and below shaft 408.

All the sub-frames supporting second array rollers associated with first array rollers mounted on the same shaft 408 are attached to the same tie-rod 444. Connected to this rod by plate 446 is a push rod 448 which extends along the long axis of the machine (parallel to the side members 404) and is likewise connected to all the other tie rods 444 which are coupled to the sub-frames of second array rollers associated with first array rollers of other shafts 408 in the machine. A rubber bush 450 is positioned between each tie rod 444 and associated plate 446 to accommodate the change in angle of the one relative to the other when the push rod 448 is moved axially. One end of the push rod is attached to the piston 452 of a pneumatic ram 454 bolted to trunnion 456 which is attached to a cross member 406 of the frame 402 and is adapted to advance and retract the rod in the axial direction when advanced or retracted from its cylinder. This movement of the rod 448 causes each sub-frame 436 on which a second array roller 432 is mounted to pivot about its corresponding shaft 408.

The arrangement is such that when the rod 448 is in one position, the sub-frames adopt the position shown in unbroken lines in Figure 7 (and broken lines in Figure 6) with their respective second array rollers 432 located such that their surfaces lie under the plane in which the upper surfaces of the first array rollers 412 lie. Thus in this first position, the rollers 412 of the first array form a support surface for a sheet and rotation of said rollers 412 in one direction or the other will move the sheet forwards or backwards along the machine, in the direction 'X'.

Moving the rod 448 to the alternative position rotates the sub-frames to the position shown in broken lines in Figure 7 (and unbroken lines in Figure 6) in which their respective second array rollers 432 are now located so that their upper surfaces lie in a plane which is above the plane of the upper surfaces of the rollers 412 of the first array. Thus, in this alternative position, the rollers of the second array form a support surface for the sheet and in this position rotation of the rollers of the first array in one direction or the other will drive the rollers of the second array and move the sheet one way or the other across the machine, i.e. in the direction 'Y'. Thus, by means of the single motor 430 equipped with reversing means, it is possible by means of the apparatus to move a sheet fore and aft in the direction X and also to the left or right across the machine in the direction Y.

Because of the shape of the peripheral surface of the roller used in the embodiment illustrated, the same roller may be used as a roller of the first array or as a roller of the second array without modification. When used as a roller of the first array, the face of the substantially cylindrical portion 420 provides the support surface and when used as a roller of the second array, the face of the rearwardly tapering frusto-conical second portion 422 provides the support surface because its upper surface becomes horizontal when the roller axis is tipped out of the horizontal in order to elevate the roller surface above the upper surface of the first array roller. The only difference between the rollers of the first and second arrays is that the former are clamped to rotate with the shafts 408 on which they are mounted whereas the latter are free to rotate on their stub axles 434.

It will be understood that arrangements can be envisaged in which not all the shafts 408 need be driven and/or not all the first array rollers 412 on a particular shaft 408 need be mounted to rotate with it. Likewise, not all the driven rollers of the first array need to have second array rollers 432 associated therewith and at least some second array rollers may, if desired, be mounted so that they do not engage first array rollers. In the embodiment illustrated, the first array of rollers comprises rollers on 17 shafts of which those on shafts numbered 1, 3, 5 and 16, counting from the left hand end of the machine, as shown in Figure 3 do not have second array rollers associated therewith.


REGISTRATION STATION - AUTOMATIC REGISTRATION MEANS

The purpose of the automatic registration means is to locate a sheet accurately on the support table of the Registration Station relative to a first datum line which extends along the long axis of the apparatus (in the direction of arrow X) and a second datum line which extends at right angles to the first datum line (in the direction of arrow Y).

0 261 852

To this end, and referring to Figures 2, 3 and 7, the apparatus includes, along one side and parallel to the long axis of the support table, a line of pillars 460 whose bases are attached to a side member 404 in the same manner as the bases of the journals 410 for the shafts 408, thereby enabling the positions of these pillars to be readily adjusted along the length of the side member. Each pillar supports a horizontally extending fixed stop member 462 comprising a shaft 462A to one end of which is fixed a plastics disc 462B a face of which faces inwardly across the support table above the plane of the rollers. The faces of the discs 462B are aligned so that together they define an abutment along one side of the apparatus (the bottom side as shown in Figure 3) and extending parallel to the long axis 'X' of the apparatus. The discs are at such a level that a sheet resting on the support table can be aligned by pushing it until one edge is pressing against the faces of the discs. The stop members are releasably clamped in horizontal bores formed in the pillars 460 so that they can be adjusted axially of the bore when the clamping force is released and then fixed in the desired position by tightening the clamp. The faces of the discs 462B form the means defining the first abutment of the Registration Station.

Referring to Figures 2, 3 and 8, mounted to be advanced and retracted in a direction across the support table, i.e. in a direction parallel to the shafts 408, and under the suface of a sheet resting on the table, from a location on the other side of the support table from the line of stop members 462, is an upwardly facing infra red sensor, generally indicated at 470, of the kind including means for generating an infra red beam and means for detecting the reflection caused by the impingement of the beam on a surface directly above it such as that of a glass sheet. The sensor is arranged to direct the beam vertically upwards. Such infra red sensors are well known and readily available. Referring to Figure 8, the sensor 470 is mounted on a chassis 472 bolted to a slide 474 which engages and slides on hollow rail 476 which extends substantially across the width of the support table parallel to the cross members 406. The slide 474 is advanced and retracted by rotation of a screwed rod (not shown) which extends within and along the rail and is driven through a gear box 478 by toothed pulley wheel 480 which in turn is driven via drive belt 482 by a second toothed pulley 484 mounted on shaft 486 driven by variable speed reversible motor 488. The slide engages the screwed rod by means of balls captured between half-housings formed in the body of the slide and grooves of the screwed rod. The arrangement of slide, rail and screwed rod is well known and any suitable commercially available form may be used, such as that sold by Neff.

Chassis 472 has on either side of it a double-ended plough 490 adapted to engage microswitches located in the path of the plough at each end of the travel of the chassis along the rail 476. The microswitches provide a control for the motor so that engagement of one pair of switches 492 by the rear ends 490A of the ploughs 490 stops the motor when the chassis has reached its fully retracted position and another pair of microswitches (not shown) which are at the other end of the rail are safety devices designed to stop motor 488 if normal controls described below, fail.

The means defining the second abutment comprise a line of stop members, each identified generally by reference numeral 500 (Figures 2 and 3), rigidly attached to a beam 502 which extends parallel to the side members 404 of the machine. Referring to Figure 9, each stop member comprises a hollow cylindrical rod 504 extending horizontally in the direction indicated by arrow Y, i.e. transverse to the long axis of the machine and slidably mounted in which is a piston 506 to the inwardly facing end of which is attached a plastics plate 508 having an inwardly facing vertical face 510 which is located at such a level as to provide a locating surface for a sheet resting on the rollers of the support table and pushed against the stop member. The piston 506 is movable between an extended position (shown in broken lines in Figure 9) and a retracted position by a pneumatic ram 512 mounted on chassis 513 attached to beam 502. The plates 508 of the members 500 are so located relative to each other that their vertical faces 510 are aligned along a line which is exactly parallel to the line defined by the faces of the stop members 462. Screw and locknut means 514A, 514B are provided for adjusting the positions of the faces 510 to ensure they are in line.

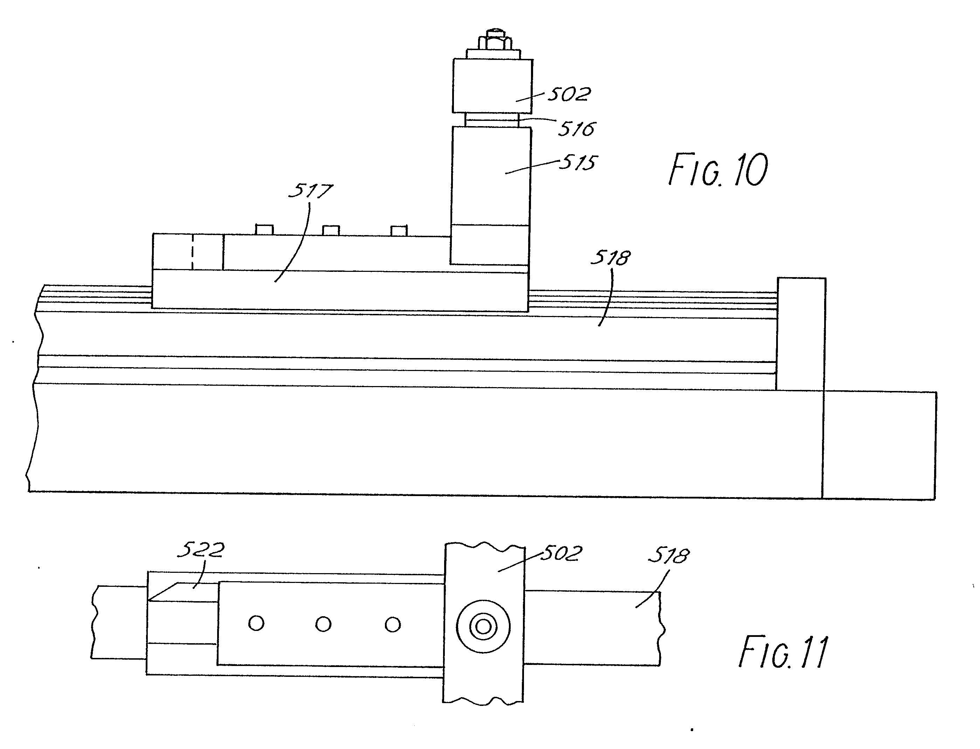

Referring to Figures 2, 6, 10 and 11, beam 502 is mounted on and spaced from each of a pair of chassis 515 by spacers 516. Each chassis is bolted to a slide 517 adapted to engage and slide on its respective rail 518 and to be advanced and retracted along said rail by rotation of a screwed rod (not shown) which is driven through a respective gearbox 520. The arrangement of slide 517, rail 518 and screwed rod drive means is essentially the same as that used for the sensor 470 and is well known and commercially available e.g. from the Neff company. Each gearbox 520 is driven by the same drive shaft 486 which is driven by motor 488; thus rotation of the shaft 486 in one direction advances both the sensor 470 and the beam 502 carrying the stop members 500 defining the second abutment simultaneously and in a direction across the apparatus, i.e. parallel to the shafts 408, and rotation of the shaft in the opposite direction retracts the sensor and second abutment simultaneously. The radius of the pulley 480 is twice that

19

of the pulley 484 but the pitch of the screwed rod employed to drive the slide 474 on which the sensor is mounted is four times that of the screwed rods employed to drive the slides on which the beam 502 is mounted. Thus, rotation of the shaft 486 will cause sensor 470 to advance across the support table at twice the rate of advance of the beam 502 and stop members 500 which define the second abutment.

On the forward end of one of the chassis 514 is mounted a plough 522 adapted to engage a microswitch (not shown) mounted towards the free (inner) end of the rail 518 and which acts as a safety switch to switch off motor 488 if normal controls, referred to below, fail.

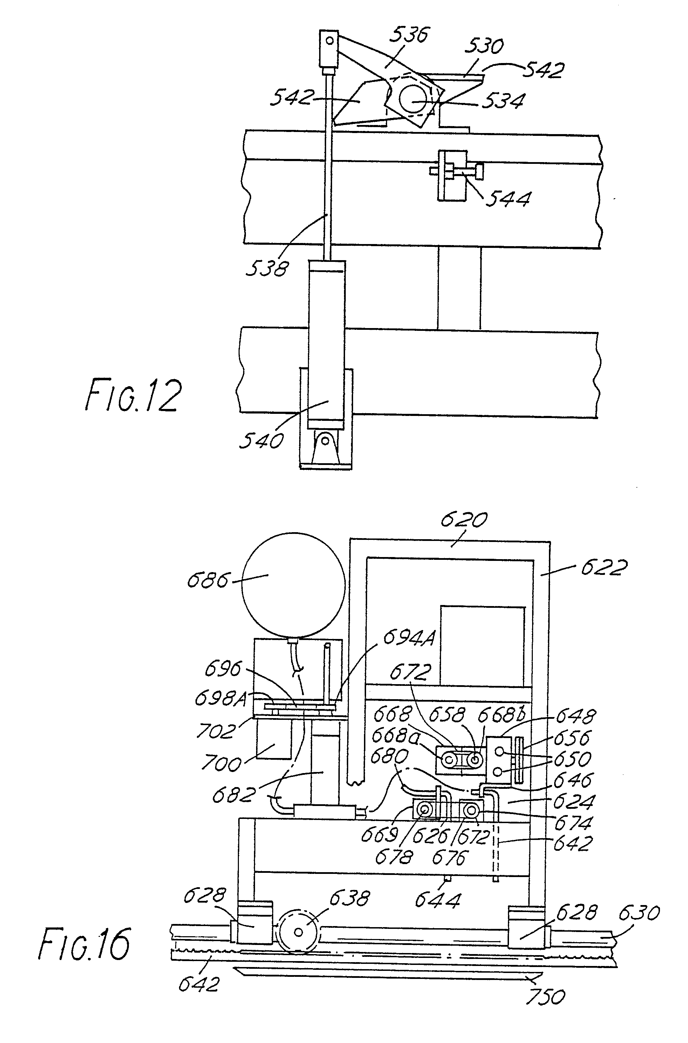

Referring to Figures 2 and 12, at the rear end of the support means (that is, the left end as seen in Figure 2) and between the first and second set of driven rollers, counting from the rear, there is provided a flap 530 attached to a shaft 534 which is free to rotate in journals attached to a cross member 404 of the frame 402 and one end of which is attached to a lever 536 the other end of which is attached to the piston 538 of a pneumatic ram generally indicated at 540 whereby operation of the device moves the flap between a first position, as shown in Figure 2, in which it extends generally vertically and provides a face 542 against which the trailing edge of a sheet resting on the support means may be located, and a second position (see Figure 12) in which it extends generally horizontally and below the line of travel of a sheet being advanced on to and along the support table by the first set of driven rollers. Means for adjusting the operational position of the flap 530 are provided by arm 542 clamped to rotate with shaft 534 and adapted to engage adjustable stop member 544 attached to a part of the support table.

As best seen in Figure 3, mounted on a cross member 406 of frame 402 at the rear end of the support table of the apparatus and between the first and second sets of driven rollers, counting from the rear (i.e. the left hand side in Figure 3) are means for determining the length of a sheet being advanced along the support table. Said means comprise a wheel 550 which is mounted to rotate in the vertical plane about an axis which is parallel to the shafts 408. The top of the wheel is adapted to engage the undersurface of a sheet being advanced by conveyor 210 to the support table. The axle about which the wheel rotates is attached to one end of an arm 552 which is mounted at its other end, and so that it can pivot in the vertical plane, on a pivot attached to the cross member 406. Means such as a spring (not shown) are provided for resiliently biassing the arm upwards to that the upper surface of the wheel normally lies in the path of a sheet advancing from the previous station to the support means and slightly above the underface of the sheet, and is depressed against the biassing means by contact with said underface. Associated with the wheel are means for measuring its angular displacement, e.g. the number of revolutions and fractions of a revolution, caused by the passage over it of a sheet, and means for converting this information to a signal e.g. for feeding to a computer.

To avoid errors due, for example, to the leading edge of a sheet engaging the wheel before top dead centre of the wheel and the trailing edge of a sheet not disengaging until after top dead centre, e.g. due to bowing of the sheet under gravity, thereby leading to a false reading of the length of the sheet, the apparatus also includes an infra red sensor 554 mounted to detect the arrival of the leading edge and trailing edge, respectively, of the sheet at top dead centre of the wheel and means responsive to the signals thereby generated to start and stop, respectively, the counter.

Means are also provided for controlling the motor 430 driving the rollers 212 and 232, means for starting, stopping and reversing the motor 488 driving the chassis 472 supporting the sensor 470 and the chassis 517 supporting the means 500 defining the second abutment, and means for operating the ram 540 which moves the flap 530. Said control means comprise a series of infra red sensors similar to, and operating in the same manners as, sensor 470.

Referring to Figure 3, the sensors comprise a first pair of sensors 556,558 mounted in a line parallel to the shafts 408 and between the first and second sets of driven rollers counting from the rear of the machine. A third sensor 560 is mounted just in front of the plane of the face of the flap 530 along the long ("X") axis of the machine. Another pair of sensors 562,564 are mounted just in front of one of the plates 508 defining the second abutment means.

In operation, the machine is initially set up with the chassis carrying sensor 470 and beam 502 fully retracted to the side of the machine opposite the stop members 462 defining the fixed abutment, as generally shown in Figure 3, and so located relative to each other that sensor 470 lies in the same vertical plane as the faces 510 of the plates 508, and the second abutment line defined by the line of said faces 508 and the first abutment line defined by the faces of the discs 462B of the stops members 462 are equidistant from the first datum line which is in effect the centre line of the machine in the direction "X" which will normally be the direction of the long axis of a sheet to be positioned on the table. Also the flap 530 is rotated to lie below the path of a sheet advancing along the support table and the ram 454 is in the position such that the second array rollers 432 lie below the first array rollers 412.

The control arrangement is such that with the machine in this situation, if no glass sheet is sensed by sensors 556 and 558,

(1) the conveyor 210 of pretreatment station 2 and motor 430 driving rollers 412 are started in a direction to advance a sheet from the pretreatment station to and along the support table of the registration station (i.e. in the direction from left to right of Figure 1 and Figure 3). Two sensors are employed for this purpose so that narrow glass sheets are detected.

When the sensor 554 detects the arrival of the leading edge of the glass sheet, it activates the means counting the revolutions and fractions of revolution) of the sheet lengths measuring wheel 550. When the sensor 554 detects the trailing edge of the glass sheet, the control arrangement is such that the signal thereby generated has two functions. Firstly, it stops the counter so that an accurate measurement of length is obtained. Secondly, it sets in train the following series of actions:

(2) motor 430 (and motor of carriage 210) stopped

(3) ram 454 activated to raise rollers 432 above rollers 412 to enage under surface of sheet

(4) motor 430 started in direction to rotate rollers 432 to move sheet in direction across machine (direction "Y") towards first abutment (i.e. towards the bottom of the sheet of Figure 3).

(5) motor 430 run for a predetermined fixed time more than sufficient to ensure that the right hand side edge (looking in the direction from left to right of Figure 3) of a sheet of any width is brought up agains the faces of the discs 462B which define the line of the first abutment. By this means, any skew in the sheet when it contacts the abutment is resolved by the continued running of the motor.

(6) motor stops after predetermined time.

(7) pneumatic rams 512 operated to retract pistons 506 of the second abutment means

(8) motor 488 driving sensor 470 and abutment means 500 started in direction to advance sensor and abutment means across the machine towards first abutment. As indicated above, the sensor advances at precisely twice the speed of the abutment means.

(9) when sensor 470 detects the left hand side edge of the glass sheet, the signal thereby generated stops motor 488. In the embodiment illustrated, and to obtain both swift and accurate positioning of the sensor, and hence accurate positioning of the abutment means, in step (6) the motor is operated initially at a rapid speed and the signal generated by the sensor responsive to detecting the left hand side edge of the glass initiates the following control sequence:

(9A) motor 488 stopped

(9B) motor 488 started in reverse at rapid speed for short time to retract sensor 470 a short distance

(9C) motor stopped

(9D) motor started again but at much slower speed to advance sensor a second time

(9E) on receipt of second signal generated by sensor responsive to detecting left hand side edge of glass sheet, motor stops.

If desired, a further short retraction and advance of the sensor may take place.

On the final stopping of the motor 488,

(10) rams 512 operated to re-advance·pistons 506 to position defining correct line of second abutment means

(11) motor 430 is automatically started again but in reverse direction to step (4) to advance sheet across machine in direction towards second abutment.

Then, either motor 430 is run, as in step (4) for a predetermined time sufficient to ensure that the left hand side edge of a sheet of any width is brought up against the second abutment means 500 and to ensure that any skew in the direction of the sheet relative to said means is resolved and (12) is then stopped, or sensors 562 and 564 are employed. In this alternative mode, when sensor 564 senses left hand edge of the sheet, (12A) the signal thereby generated is employed to slow down motor 430 and when sensor 562 senses the said edge, (12B) the motor is stopped after a short predetermined time delay the purpose of which is as just described. In each case, the sequence is then continued as follows:

(13) ram 454 activated to reverse relative positions of roller arrays so that rollers 412 engage undersurface of sheet

(14) motor 430 restarted at slow speed to move sheet along "X" axis but in reverse direction to that of step (1), i.e. towards flap 530.

When the arrival of the rear edge of the sheet (which will be the leading edge of the sheet when it is travelling in the direction of step (14) is detected by sensor 560, the signal thereby generated sets in train the following steps automatically:

(15) motor 430 stopped after a predetermined time delay to ensure that rear edge of sheet has abutted against the surface of flap 530

(16) rams 512 operated to retract pistons 506 of second abutment means

(17) ram 454 operated to rotate flap 530 to non-operative position lying under the path of advance of a sheet along the support table

(18) initiation of sequence of steps required to lift sheet from registration table and transfer it by the sheet transfer means to the adhesive coating station as described in more detail below under the heading "Sheet Transfer Means"

When the sheet has been lifted clear of the table, thus uncovering sensors 556, 558

(19) the motor is activated to retract sensor 470 and abutment means 500 at high speed to the fully retracted position and the cycle is started again.

As the sensor 570 and abutment surfaces 510 of the second abutment means are in the same vertical plane when fully retracted as the reference line which is the same distance as the line of the first abutment means from the first datum line, and as motor 488 drives sensor 470 across the table at exactly twice the speed of the abutment means 500, it will be understood that when the sensor stops exactly under the left hand edge of the glass sheet whose right hand edge is located against the faces of the discs 462B forming the first abutment means, the surfaces 510 forming the second abutment will have travelled a distance $d/2$ from the reference line where "d" is the distance travelled by the sensor 470. Thus when in step (11) the sheet is driven across the machine, in the direction of the "Y" axis to bring its left hand edge into contact with and aligned by the second abutment means, it will be positioned exactly centrally with reference to said first datum line, i.e. with its left and right hand edges parallel to and equidistant from said datum line.

Likewise, given that the face of flap 530 defines the location and line of the second datum line, when the rear edge of the sheet is brought into contact with said flap face in step (14), said rear edge is now on the second datum line. The sheet is thus precisely positioned with reference to the two datum lines.

When a sheet has been correctly positioned at the registration station, it is transferred to the adhesive coating station (6) by the Sheet and Baseboard Transfer Means (24) the details of which are described later. The means for transferring the sheet are such that sheets of the same length and width and located in the same position (hereinafter called the first position) on the support table of the registration station are deposited in precisely the same position (hereinafter called the second position) at the adhesive coating station whereby a second sheet so positioned at the first position and transferred by the sheet transferring means to the second position will be located precisely on top of another sheet that has previously been likewise positioned at the first position and then transferred to the second position.


## THE ADHESIVE COATING STATION (6)

The purpose of the apparatus at the Adhesive Coating Station is to distribute adhesive in a predetermined quantity and pattern on a sheet delivered to the station from the Registration Station whereby to optimise utilisation of adhesive, minimise loss and maximum uniformity of distribution.

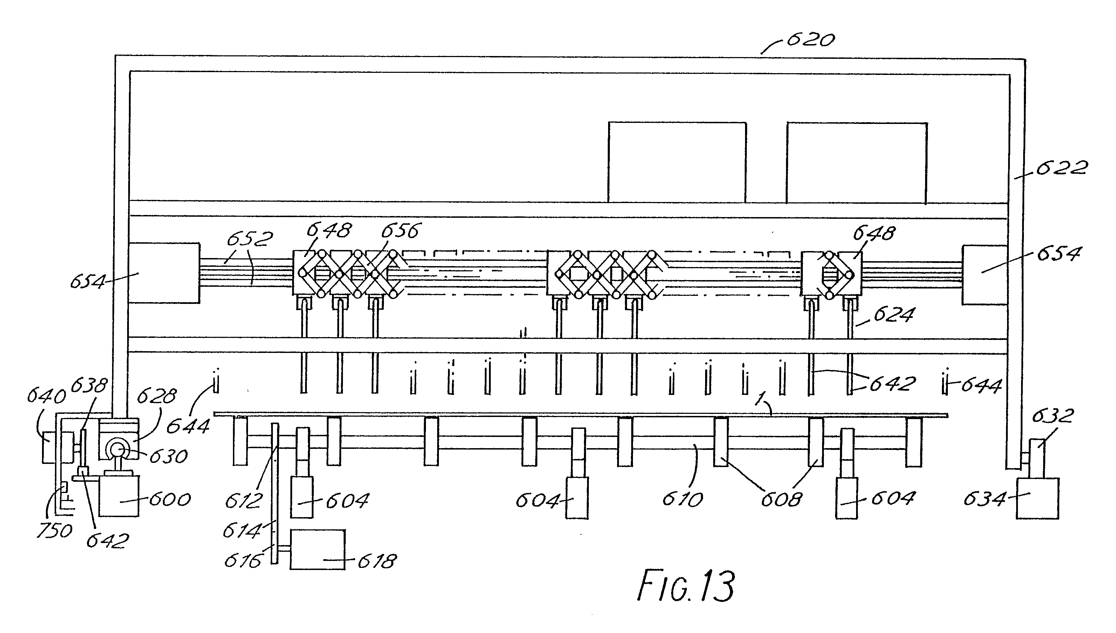

Referring to Figures 13 to 16, the adhesive coating station 6 comprises a frame 600 for a table 602 for supporting a sheet to be coated with adhesive, the table having longitudinal members 604 and cross members 606. In the embodiment illustrated, the table 602 doubles as a conveyor and comprises an array of rollers 608 supported on parallel shafts 610 which extend parallel to cross members 606. The rollers are fixed to rotate with the shafts and the shafts are mounted to rotate in journals bolted on to longitudinal members 604 of the table. Also attached to each shaft is a sprocket 612 which engages an endless chain 614 driven by a drive sprocket 616 driven by electric motor 618. The arrangement of shafts, rollers and drive means is generally as described above for the first array of rollers at the Registration Station and the arrangement is adapted to move a sheet from right to left of the view shown in Figure 1.

Mounted on said frame 600 to travel above a sheet resting on the table 602, and along the full length of the table in a direction parallel to the side members 604 of the table is a gantry generally indicated by reference numeral 620 which comprises a frame 622 which carries primary and secondary adhesive applicators indicated generally by reference numerals 624 and 626, respectively. The gantry is supported to one side of the table by shoes 628 which slide over a horizontal rail 630 which is rigidly attached to the frame 600 and extends parallel to the side members 604 of the table. On the other side of the support table, the gantry frame is mounted on wheels 632 which run on the top surface of a horizontal girder 634 bolted to the frame 600 to extend parallel to rail 630. Girder 634 and rail 630 extend beyond the end of the sheet receiving surface of the table 602 so that the gantry may be displaced to one side of said surface leaving it free for the deposition of a sheet thereon (see Figure 1). The gantry is propelled back and forth over the support table by means of a reversible electric motor 636, which is mounted on the gantry to travel with it and drives a pinion 638 through gearbox 640. The pinion engages a rack 642 which extends horizontally along one side of the support table, parallel with and located alongside the rail 630.

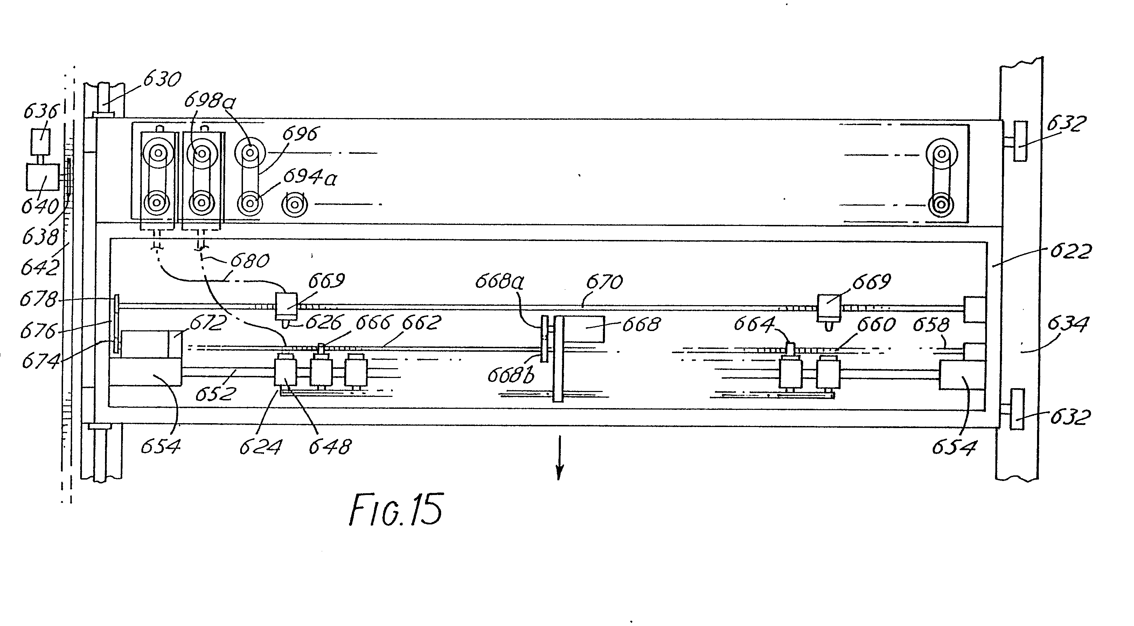

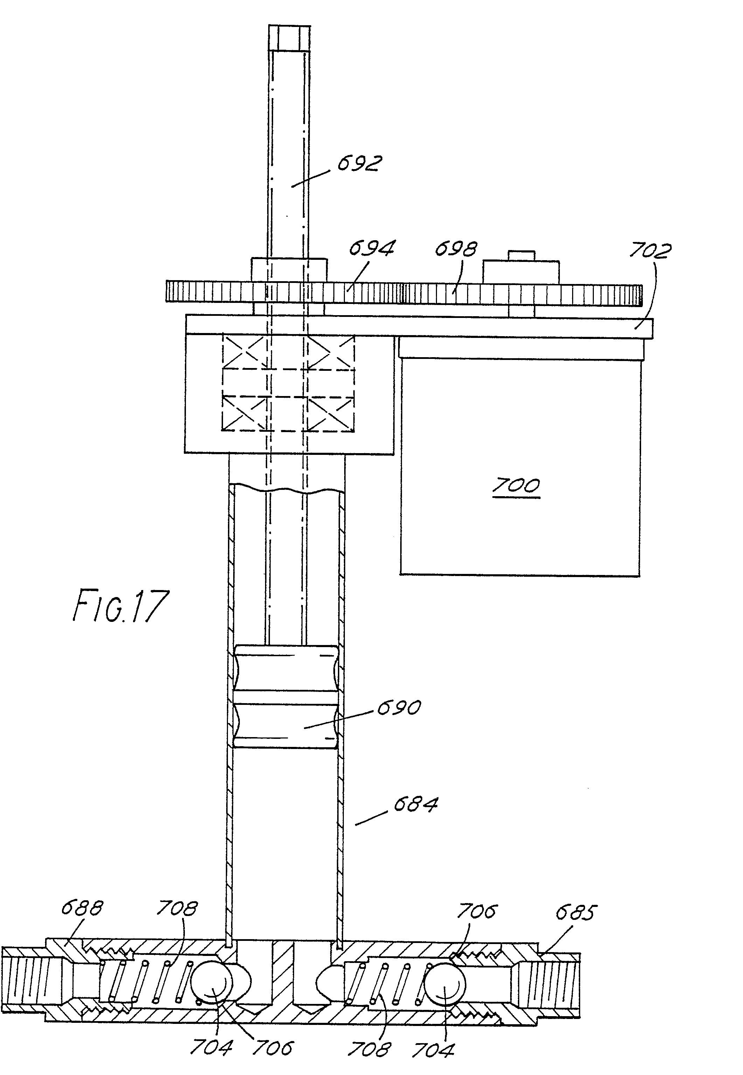

Mounted on the gantry and extending across it, transverse to the direction of travel of the gantry, is an array of downwardly pointing applicator nozzles comprising a line of primary applicator nozzles 642 and a pair of secondary applicator nozzles 644. The secondary nozzles lie on a line which is parallel to and behind the line of primary nozzles relative to the forward direction of travel of the gantry over the table in the direction shown by the arrow in Figures 15 and 16. Suitably the nozzles are metal tubes the mouths of which are located a short distance above a sheet 1 lying on the support table 602.

Each primary applicator nozzle is mounted on a plate 646 bolted to the bottom of a chassis in the form of a block 648 which is provided with two horizontal machined bores 650, one above the other and which are adapted to slide on primary applicator guide rods 652 which are rigidly attached at each end to mountings 654 bolted to the frame of the gantry so that the rods extend horizontally across the gantry in a direction transverse to the gantry's direction of travel, and one above the other. The primary applicator nozzles are divided into two sets each having the same number of nozzles, one set lying to the left of the centre line of the gantry and the other to the right. The blocks 648 to which the nozzles are attached are linked together the "lazy tongs" arrangement 656 enabling the distance between adjacent applicator nozzles to be adjusted while maintaining the distances between pairs of nozzles the same. The distance between adjacent applicator nozzles is adjusted by means of a screwed rod 658 half the length of which is provided with a right hand thread 660 and the other half of which is provided with a left hand thread 662 having the same pitch as the right hand thread. The right hand threaded half is engaged by a correspondingly tapped nut 664 mounted on the chassis block supporting one of the applicator nozzles of one set and the left hand threaded half is likewise engaged by a correspondingly tapped nut 666 mounted on the chassis block supporting the corresponding one of the applicator nozzles of the other set, whereby the nuts are located at equal distances along the screwed sections 660,662 of the screwed rod from the centre thereof. Reversible driving means for rotating the screwed rod comprise an electric motor 668 driving a toothed pulley 668a which drives by means of belt, a second toothed pulley 668b mounted on the screwed rod to rotate with it. Rotation of the rod in one direction will cause nuts 664 and 666 to travel towards each other, thereby reducing the distance between adjacent applicators, whereas rotation in the reverse direction will achieve the opposite effect. Thus, by rotation of the screwed rod, the overall distance between the first and last of the applicators in the line can be adjusted according to the width of the sheet to be coated with adhesive.

Each of the pair of secondary applicator nozzles 644 is attached to its own chassis 669 which is bored and tapped to receive a screw threaded rod 670 which, extends across the width of the gantry parallel to and behind screwed rod 658 and, like rod 658, has one section, disposed to one side of the centre of the rod, with a left hand screw and another section, disposed to the other side of the centre of the rod, with a right hand screw having the same pitch as the left hand screw. The chassis of one of the secondary nozzles is mounted on one of the screw threaded sections and the chassis of the other nozzle is mounted on the other section so that the nozzles are disposed equidistant from the centre line of the apparatus and rotation of the rod in one direction draws the nozzles towards each other while rotation in the other sense moves the nozzles apart, while maintaining them equidistant from the centre line. The rod 670 is rotated by reversible electric motor 672 driving toothed pulley 674 driving endless belt 676 which engages second toothed pulley 678 attached to the rod 670 to rotate with it.

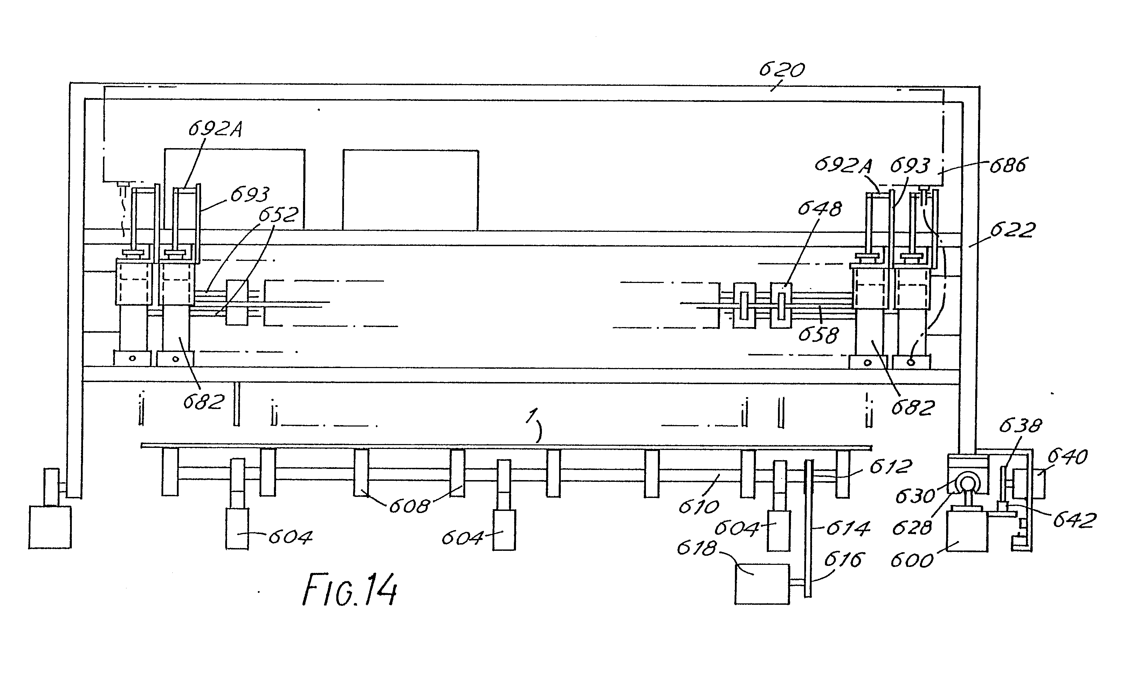

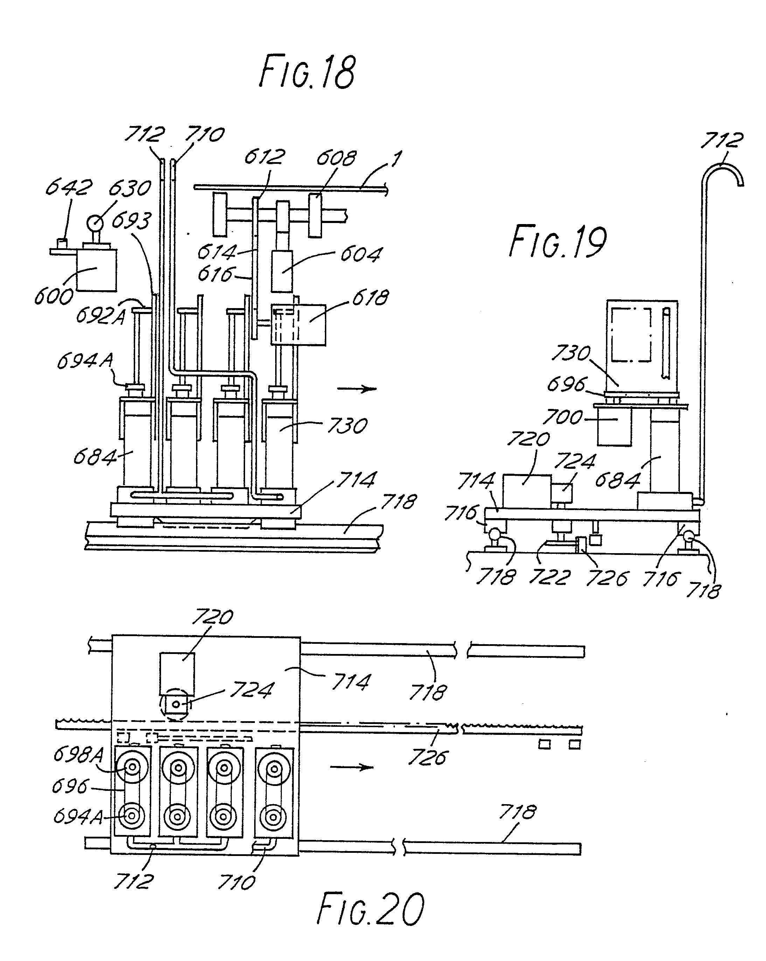

Each of the primary and secondary applicator nozzles is connected by a flexible tube 680 to its own adhesive supply pump 682, the pumps being disposed generally side by side in a row across the gantry behind the primary and second nozzles and attached to a base plate of the gantry frame. The pumps of the primary and secondary applicators are generally similar in construction and operation. Referring to Figure 17, each pump comprises a vertical cylinder 684 having an inlet 685 for adhesive from a reservoir 686 (see Figure 1b) and an outlet 688 opening into tube 680. Disposed to slide in the vertical cylinder is a piston 690 provided with conventional means for ensuring a substantially fluid-tight sliding seal with the wall of the cylinder bore. The piston is attached to rod 692 a length of which is screw threaded and engaged in a correspondingly threaded bore of a drive wheel 694 which is driven by step motor 700 which is mounted on a bracket 702 attached to the cylinder 684. As illustrated in Figure 17, drive wheel 694 may be a gear wheel which intermeshes with a second gear wheel 698 driven by the step motor. Alternatively, as shown in Figures 15 and 18 to 20, it may comprise a toothed pulley 694A which is driven via drive belt 696 by a second toothed pulley 698A mounted on the drive shaft of the step motor. An arm 692A (see Figure 14 or 18) one end of which is attached to the top of piston rod 692 and the other end of which is free to slide in a groove in fixed guide rod 693, prevents the rod from rotating whereby rotation of pulley 694 causes piston rod 692 and piston 690 to slide axially within the bore of cylinder 684.

Inlet 686 and outlet 688 are provided with one way valves of conventional form comprising a ball 704 resiliently biassed against a seating 706 by a spring 708, whereby movement of the piston up the bore, away from the end having the inlet and outlet, will draw fluid into the cylinder and the reverse movement will delivery fluid in the cylinder through tube 680 to its applicator nozzle. Assuming that the cylinder is full of fluid, the length of the stroke of the piston on a downwards (delivery) stroke and its velocity, determine the volume of fluid (adhesive) delivered and the rate of delivery.

The purpose of the secondary applicators is to dispose a ribbon of adhesive along each margin of a sheet when the gantry is moved over the sheet along the length of the sheet, aso as to inhibit the main body of adhesive from overflowing. By rotation of the screwed rod 670, it will be appreciated that any width of sheet may be accommodated.

The purpose of the primary applicators is to dispense the main body of adhesive in the form of a plurality of ribbons along the sheet. By rotation of the screwed rod 658, the spacing between the ribbons is adjusted and the total width of the curtain of adhesive deposited by the primary applicators can be adjusted to some extent according to the width of the sheet to be coated. For narrower sheets, however, a further control is available, namely to inactivate outermost pairs of applicators by not activating the respective step motors 700. Thus, the outermost primary applicator in each set may be inactivated and then the next outermost, and so on according to the width of sheet to be accommodated. Likewise, other applicators disposed between the inactivated outer applicators may be inactivated so as to reduce the number of ribbons of adhesive being deposited on a sheet.

Thus, by rotation of the screwed rods 658 and 670, and adjustment of the stroke of the piston and the rate of travel of the piston along its stroke for each applicator, the width of the curtain of adhesive deposited by the applicators while the gantry is being advanced over a sheet to be coated, the total amount of adhesive to be deposited by them and the length of each ribbon of adhesive to be deposited by an individual applicator can be controlled.

Referring to Figures 18 to 20, the embodiment of adhesive coating apparatus shown in the drawings also includes two tertiary applicator nozzles 710,712 which are mounted on a carriage 714 which is located under the support table and generally below gantry 620 when the latter is in its rest position at the left hand end of Adhesive Coating Station 6 as shown in Figure 1. Carriage 714 is adapted to travel in a direction across the table, i.e. transverse to the direction of travel of the gantry 620. Carriage 714 is provided with shoes 716 which engage rails 718 which extend across the apparatus. Mounted on the carriage is a reversible electric motor 720 which drives a horizontal pinion 722 through gearbox 724. The pinion is in engagement with a sideways-mounted rack 726 which extends across the apparatus parallel to and between rails 718. Thus activation of the motor 720 rotates pinion 722 and drives the carriage along the rails.

Each tertiary applicator nozzle is mounted on the platform of carriage 714 and extends upwardly therefrom to the level of the surface of a sheet 1 resting on the table 602 of the Adhesive Coating Station and is then bent round and down like an inverted "U" so that its mouth point downwards to deposit adhesive on the left hand end of the surface of a sheet resting on the support table 602, as viewed in Figure 1. As in the case of the primary and secondary nozzles, each tertiary nozzle is connected by means of a flexible tube to a step motor-driven pump 730 the construction and operation of which is the same as the pumps of the primary and secondary applicators.

The two tertiary applicators have different purposes. The purpose of the first applicator, 710, is to deposit a thin ribbon on the rear edge of the sheet (that is, the edge of the sheet which is nearest the gantry when the latter is in its rest position) to act as a barrier to prevent the bulk of the adhesive being deposited by the primary applicators 624 and the other tertiary applicator 712 from overflowing from that edge of the sheet. The purpose of the second tertiary applicator, 712, is to deposit a pool of adhesive just behind the rear edge of the sheet and extending across the sheet. Accordingly, applicator nozzle 712 is supplied by three pumps.

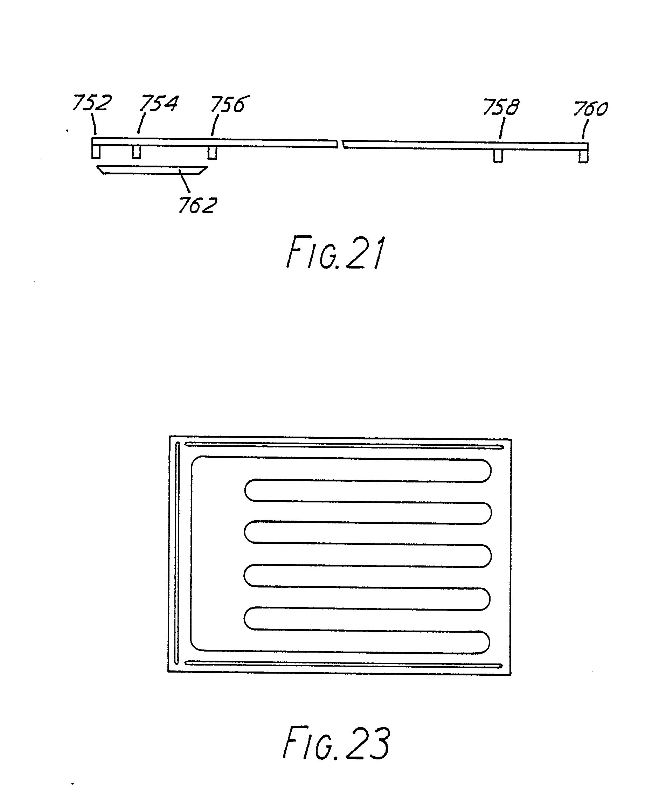

Referring to Figures 13, 16 and 21 control means for the gantry drive motor 636 are provided as follows. Mounted on the same side of the gantry as the rack and pinion is a two ended plough 750 adapted to engage microswitches 752, 754, 756, 758 and 760 which are attached to the frame 600 by means not shown at the locations along the direction of travel of the gantry and whose positions are indicated generally in Figure 17. Also attached to the frame 600 is a two ended plough 762 adapted to engage a microswitch 764 which is rigidly attached to the gantry 612.

Controls means for the tertiary applicator carriage drive motor 720 comprise a two ended plough 770 mounted under the carriage, to travel with it, and adapted to engage microswitches 772, 774, 776, 778 which are attached to the frame 600 at the locations shown along the direction of travel of carriage.

The manner of operation of the apparatus is as follows.

At the start of the operation, the gantry is positioned in its rest position that is, to the left hand side of the sheet receiving area of the table 602 in the view shown in Figure 1 and with its microswitch 764 engaged by plough 762. The tertiary applicator carriage 714 is located in its rest position towards one end of the rails 718 which end is the rest position for carriage 714 does not matter but in the embodiment illustrated it is the left hand end as viewed in Figures 18 and 20.

The apparatus is now ready for operation.

By means of the Sheet and Baseboard Transfer Means, a baseboard is picked up from Baseboard Supply Station 22 and deposited on the table 602, then a glass sheet which has been positioned in the desired position relative to the first and second datum lines at Registration Station 4 is picked up by the same Sheet and Baseboard Transfer Means and deposited on the baseboard on table 602.

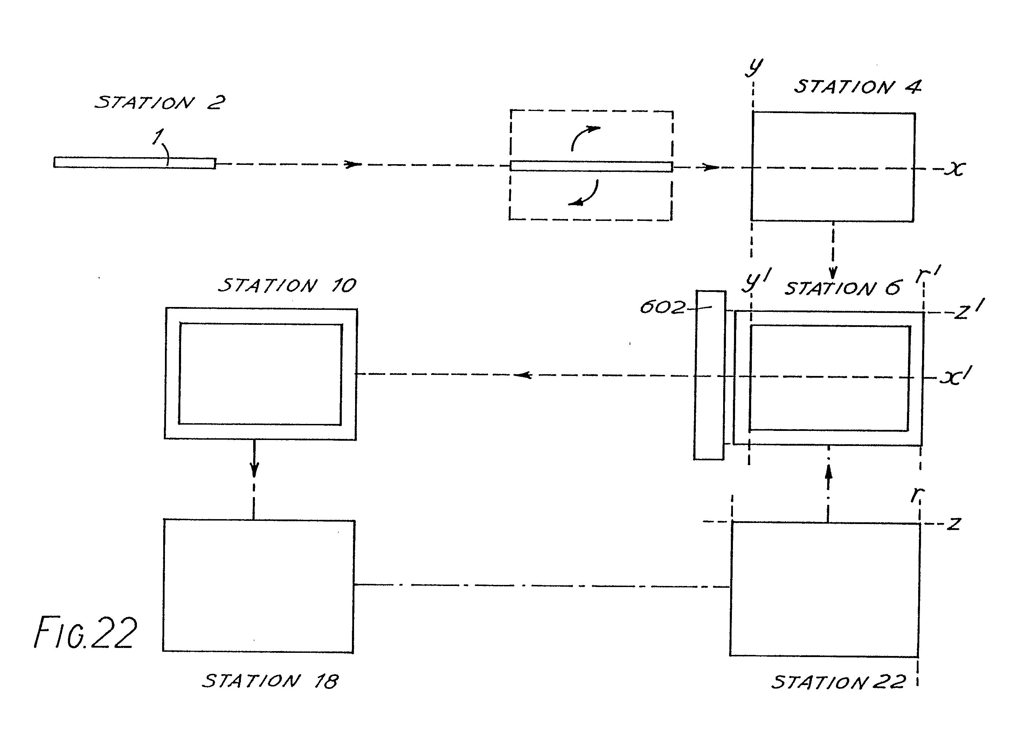

While the construction and operation of the Transfer Means is described in greater detail below, it will be helpful to describe briefly here what is the effect of its manner of operation and this is best understood by reference to Figure 22 of the drawings which shows very diagrammatically the travel of a sheet 1 and baseboard 1A through the apparatus of Figure 1. The path of a sheet through the apparatus is shown by a dashed line and the path of a baseboard is shown by a dash-dot line. The path of a sheet resting on a baseboard is shown by a dotted line. For clarity, only some of the stations are shown.

Referring to Figure 22, the purpose of the Sheet and Baseboard Transfer Means is to transfer boards from station 22 to station 6 and sheets from station 4 to rest on boards previously located at station 6. The operation of the Transfer Means is such that each board which has had a pair of adjacent edges located on reference lines "r" and "z" at Board Supply Station 22 is deposited at Adhesive Coating Station 6 with the same edges always on corresponding reference lines r′ and z′. Lokewise each sheet positioned at the Registration Station 4 so that a pair of side edges (normally the long edges) are parallel to and equidistant from the first datum line "x" and a third edge is on a second datum line "y", will be deposited on a table 602 with the same pair of side edges always parallel to and equidistant from the centre line x′ of the gantry 620 in its direction of travel and with said third edge always on the line y′.

The screwed rods 658 and 670 controlling the distance apart of the primary and secondary applicator nozzles are rotated so as to set the distances between the adjacent primary applicator nozzles and the distances between adjacent primary aplicator nozzles in accordance with the width of the sheet; that is, the distance between that edge of the sheet which is towards the top of the view shown in Figure 1 and that edge of the sheet which is towards the bottom. In the apparatus illustrated this is effect automatically by a signal from a computer to which information relating to the measured width of the sheet has been transmitted from the Registration Station. The width is readily determined from knowledge of the distance "d" travelled by the sensor 470 from the reference position to the left hand edge of the sheet (looking in the direction from left to right in Figure 3) because the distance between the said reference position and the first abutment is a fixed known value D and thus with the sheet located with its right hand edge against the said abutment, the width of the sheet is "D-d".

Each applicator piston is at the top of the cylinder so that each cylinder is full of adhesive. Based on information relating to the length of the sheet transmitted from the Registration Station, and information as to the desired distribution of adhesive on the sheet, each applicator step motor of the primary and secondary applicators is programmed to rotate a particular number of revolutions on a piston delivery stroke, thereby determining the total quantity of adhesive to be delivered by the applicator, and to rotate at a particular speed, thereby determining the rate at which the adhesive is delivered to the nozzle of the applicator, during the travel of the gantry 620 over the sheet. In general the secondary applicators will be programmed to deliver adhesive at a rate such that a ribbon is deposited along substantially the entire length of the sheet. However, at least some of the primary applicators may be programmed to deliver adhesive for only a part of the travel of the gantry over the sheet, i.e. along only a part of the length of the sheet, or to deliver none at all.

The step motors of the tertiary applicators are likewise programmed according to the information relating to the width of the sheet.

When the sheet has been positioned on the table 602 as described above, the Sheet and Baseboard Transfer means automatically moves away from the Adhesive Coating Station, as will be described below, and when it is clear of the Station the gantry drive motor 636 is activated in a direction to drive the gantry towards the sheet lying on the table 602, i.e. from right to left in the view shown in Figure 1. The activation of the gantry drive motor may be effected automatically in response, for example, to a signal generated by the arrival of the Sheet and Baseboard Transfer means at a predetermined position clear of the Adhesive Coating Station 6.

Because the sheet is always positioned on support table 602 with its left hand end (as viewed in Figures 1 and 22) in the same position on the table, and because plough 762 which is engaged by microswitch 764 is fixed relative to the table 602, when the gantry has advanced to the point where microswitch 764 disengages from the plough, the gantry is positioned with the primary and secondary applicator nozzles in a predetermined position relative to said left hand edge of the sheet. At this point, means for counting the revolutions of gantry drive motor 636 are activated and subsequent control of the primary and secondary application is effected in response to counted revolutions of the motor.

Thus, the primary and secondary applicator step motors are then activated in accordance with signals generated by the counter which are direct indications of the locations of the nozzles of these applicators along the sheet.

The signal commanding the gantry drive motor 636 to start is also adapted to activate motor 720 of the tertiary applicator carriage but while microswitch 756 is engaged by plough 750, the circuit is not closed. This enables the primary and secondary nozzles to pass over the tertiary nozzles before the latter commence to travel across the sheet.

After gantry plough 750 has passed forward of microswitch 756, the circuit is closed and the tertiary applicator carriage motor is activated. Gantry 620 continues to advance until plough 750 engages microswitch 758 which is located at the end of the normal travel of the gantry over the table 602 and acts to reverse the gantry motor to return the gantry to its rest position. Microswitch 706, which lies beyond microswitch 758, is a safety switch which switches off gantry motor 636 if other controls fail.

On the gantry's return travel, the trailing end of gantry plough 750 engages microswitch 756 which stops the gantry proceeding further until the tertiary applicator carriage 714 has completed its return journey as described below. When or if the carriage 714 has completed its journey, the gantry continues on its return journey until plough 750 engages microswitch 754 which stops the gantry motor. Microswitch 752 is a safety switch in case other controls fail to work.

Normally the primary and secondary applicators are programmed to deliver adhesive only on the outward journey of the gantry. The control arrangement is such that when each applicator has completed its delivery of adhesive, the piston is returned rapidly to the top of the cylinder to replenish it with adhesive and stop adhesive dripping from the nozzle.

After gantry plough 750 has been disengaged from microswitch 756, the tertiary applicator carriage motor 720 is actuated to advance the carriage 714 across the apparatus. As the left hand edge of a sheet deposited on table 602 by the Transfer Means is always on line y' (Figure 22), the tertiary applicators can be so conducted and arranged that when a sheet is in that position, a portion of the sheet adjacent said left hand edge is always positioned under the nozzle of the said applicators.

Responsive to information relating to the width of the sheet, the motor drives the carriage 714 a set distance until a position corresponding to the first side edge of the sheet is reached. The step motors driving the pistons of the cylinders suppling adhesive to the tertiary applicator nozzles are then actuated to deliver the desired amount of adhesive while the nozzles traverse across the sheet and are inactivated when the carriage motor 720 has driven the carriage the required distance along its·path corresponding to the width of the sheet to be coated. The carriage then completes its travel across until plough 770 engages microswitch 776 thereby reversing the motor. Unlike the primary and secondary applicators, in the embodiment illustrated the tertiary applicators are programmed to deliver adhesive on both the outward and return travel of the carriage and thus the sequence of operation on the outward journey is repeated in reverse on the return journey. Carriage motor 720 is switched off when the carriage has returned to its rest position and plough 770 engages microswitch 774. Micro-switches 772 and 778 are safety switches in case normal controls fail.

The substrate to be coated with adhesive may be a glass sheet which has been delivered to the Adhesive Coating Station from the Registration Station by the Transfer Means (24), as described above, or an interlayer, such as of pvc, laid on a glass sheet whose surface has previously been coated with adhesive. Thus, in one embodiment, the apparatus is activated a first time to coat a glass sheet positioned on the table 602 and then activated a second time to coat the surface of an interlayer placed on the surface of the glass sheet that was coated during the first operation. For the second operation, the apparatus employs the same programme as the first.

After the interlayer has been coated, a second glass sheet is transferred from the Registration Station to the Adhesive Coating Station and, for the reasons given above, will be deposited precisely on top of the first glass sheet to complete the formation of the glass/interlayer/glass laminate.

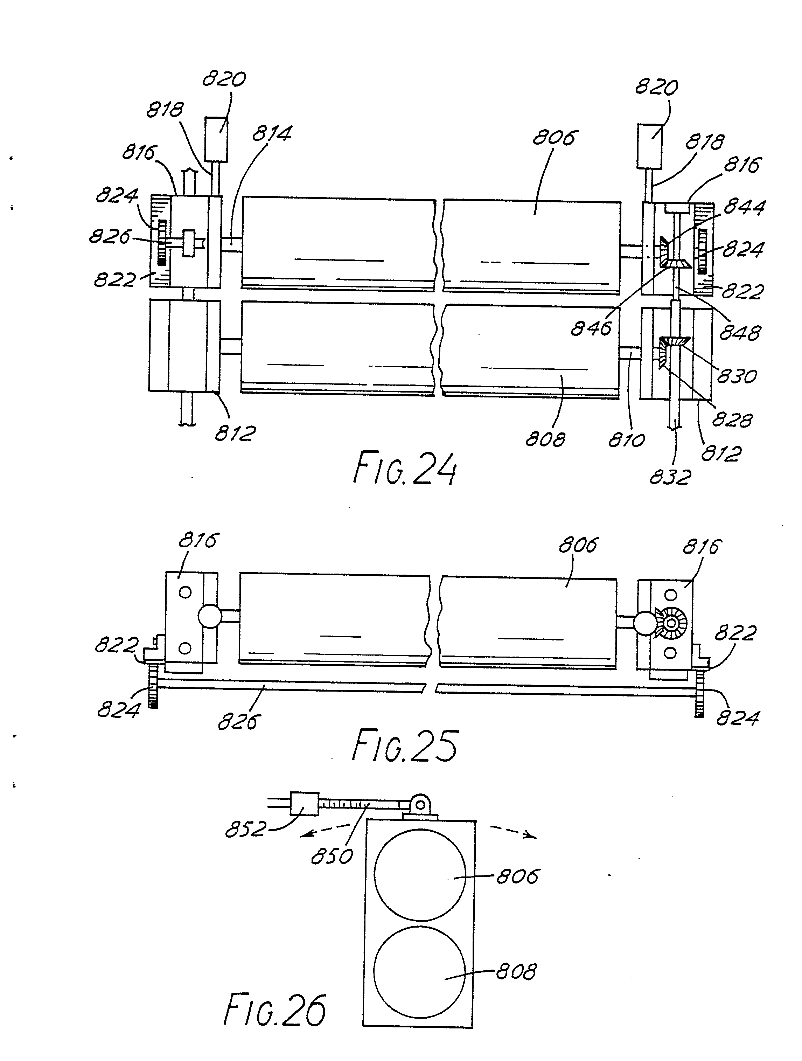

For the production of glass laminates comrising glass/interlayer/glass employing a u.v.-curable adhesive such as described in EP-A-108630 and 108631, best results have been obtained when the deposition pattern comprises a pool of adhesive extending across the width of the sheet proximate the leading edge (deposited primarily from the second tertiary applicator nozzle 712) and fingers of adhesive (deposited from the primary applicator nozzles 642) extending from the pool to the other end of the sheet, as shown in Figure 23.

The laminate which is assembled at the Adhesive Coating Station (6), which in the embodiment describes comprises a glass/interlayer/ glass laminate with layers of uncured adhesive between each glass sheet and the interlayer, is advanced to the Curing Station 8 to effect cure of the layers of adhesive.

In the embodiment illustrated in the drawings, the adhesive is assumed to be u.v.-curable and sources of ultra-violet radiation are employed at the Curing Station. An important feature of the apparatus of the present invention is that it enables two or more layers of u.v.-curable adhesive to be cured simultaneously. For this purpose, it is essential that where a baseboard is used it is substantially transparent to the radiation being used.

To advance the laminate towards the curing Station, the motor 618 for driving the rollers 608 of the table 602 of the Adhesive Coating Station is energised to rotate the rollers and drive the laminate on its baseboard forward from the Adhesive Coating Station on to the First Conveyor Means 12 which is adapted to advance the assembly on to the Curing Station 8. Any suitable device may be used for the First Conveyor Means and suitably it comprises an array of parallel shafts with rollers mounted thereon to rotate therewith and means such as an electric motor driving an endless chain engaging sprockets mounted on the shafts to rotate therewith are employed for rotating the rollers. It is thus similar in construction and operation to the assembly of driven rollers employed as support table 602 at the Adhesive Coating Station.

## THE CURING STATION (8)

Referring to Figure 1, the Curing Station comprises a two-roll calender generally indicated at 802 and a radiation zone generally indicated at 804.

Referring to Figures 24 to 26, calender 802 comprises a pair of relatively large diameter cooperating counter-rotatable rolls 806 and 808. Bottom roll 808 is at such a level that its top surface is coplanar with the top surfaces of the rollers of the First Conveyor Means 12.

Bottom roll 808 is mounted on shaft 810 supported in bearings provided in sub-frames 812 located on each side of the roll and fixed relative to the main frame (not shown) of the calender. To enable adjustment of the nip between the calender rolls, top roll 806 is mounted on shaft 814 supported in bearings provided in sub-frames 816 which are located on each side of the roll and which are floating. Each sub-frame 816 is suspended from the piston rod 818 of a heavy duty hydraulic ram 820 operation of which can raise or lower the sub-frames 816, and hence the roll 806 relative to the bottom roll 808. In order to maintain top roll 806 parallel to bottom roll 808, each of the floating sub-frames 816 is provided with a rack 822 which is engaged by a pinion 824, the two pinions 824 being fixed on a common shaft 826 supported in bearings, not shown, attached to the main frame of the calender. Attached to the shaft 810 to which roll 808 is fixed to rotate is a driven bevel gear 828 which is in permanent engagement with a first drive bevel gear 830 mounted on a vertical drive shaft 832 driven by a variable speed electric motor (not shown). The shaft 814 to which top roll 806 is fixed is likewise provided with driven bevel gear 844 which is in permanent engagement with drive bevel gear 844 which is in permanent engagement with drive bevel gear 846 which is mounted on vertical shaft 848. Shafts 832 and 848 are coaxial and splined so that shaft 848 is driven by shaft 832 and is also axially slidable relative to it to allow for the vertical movement of the shaft 814 relative to shaft 810, so as to adjust the nip between the rolls. The gearing is such that the rolls 806 and 808 rotate at the same speed but in opposite directions. Means are provided for electronically synchronising the motor driving shaft 832 with the motor driving the First Conveyor Means 12 so that a laminate is moved through the calender by rolls 806,808 at the same linear velocity as it is fed to the rolls by the First Conveyor Means 12.

The calender rolls 806 will normally be located vertically above roll 808. However, the apparatus also includes means for moving roll 806 before or behind the vertical to compensate for any bowing in the laminate resulting from the calendering operation. Referring to Figure 26, the means comprise a screwed rod 850 mounted in a bearing on the top of the main frame of the calender so as to be fixed in the axial direction but free to rotate, said rod extending horizontally and normal to the axes of the rolls and being engaged by a correspondingly tapped 852 nut which is fixed on an anchored sub-frame whereby rotation of the rod will tip the main frame forwards or backwards out of the vertical.

In operation, a laminate which has been assembled on its baseboard at the Adhesive Coating Station is advanced by the First Conveyor Means 12 towards the calender 802. At this stage, the gap between the rolls of the calender is set to be greater than the thickness of the laminate plus baseboard, whereby the bottom surface of the roll 806 lies above the plane of the top surface of the laminate. The laminate/baseboard assembly is advanced until its leading edge has passed through the nip and is just beyond it. The hydraulic ram is then operated to lower the top roll 806 to its operating position where it engages the top surface of the laminate a short distance behind the leading edge (in the direction of travel of the laminate), and applies the desired pressure to the laminate. The reason for applying the pressure at a zone just behind the leading edge of the laminate, rather than to feed the laminate into the nip with the top roll already in the operative position, is to avoid the possibility of squeezing adhesive backwards completely away from the leading edge of the laminate and leaving a zone extending backwards from the leading edge with inadequate or no adhesive. By applying the pressure at a zone a short distance behind the leading edge, adhesive is pressed forward from the pressure zone towards the leading edge as well as backwards from the pressure zone and the possibility of an adhesive-free zone adjacent the leading edge is prevented. For a more detailed explanation, reference may be made to out EP-A-108632.

After the top roll 806 of the calender has been moved to its operating position, the motor driving rolls 806,808 is started, the motor driving the rollers of the First Conveyor Means 12 is restarted, to run synchronously with the roll drive motor, and the advance of the laminate/baseboard assembly through the rolls is continued.

In the embodiment illustrated, and so as to achieve a rapid throughput, the motor of the First Conveyor Means is controlled so as to accelerate quickly and smoothly to a relatively high speed, equivalent e.g. to a linear spped of the laminate of about 20 m/sec and then to decelerate smoothly until it stops with the leading edge of the laminate in the desired position just downstream of the nip between the rolls 806,808. After the top roll 806 has engaged the surface of the laminate and applied the desired pressure, the said motor is restarted synchronously with the calender motor and accelerated smoothly to a relatively slower spped, e.g. a few meters per second, to advance the composite through the radiation zone 804 in co-operation with rolls 806,808.

Control means (not shwon) are provided to energise the motor of First Conveyor Means 12 and accelerate it to full speed in response to a signal generated by suitable signal generating means at the Adhesive Coating Station when the preparation of the laminate is complete. For example, in the case of a safety glass laminate of the kind comprising first glass sheet/first adhesive layer/interlayer/second adhesive layer/second glass sheet, the action generating the desired signal may be the deposition of the second glass sheet.

The slowing down of said motor may be effected responsive to a signal generated by an infra red or other suitable sensor sensing the arrival of the leading edge of the lamiante at a location which is a suitable distance short of the desired eventual location of the leading edge just beyond of the nip of the calender rolls.

The signal from a further sensor may be employed to stop the motor when the leading edge of the laminate is in said desired location and to activate the hydraulic ram to close the nip between rolls 806 and 808. The pressure to be applied by the calender rolls may be controlled automatically in response to information relating to the length, width and make-up of the laminate, e.g. by computer. As indicated above, in the description of the Adhesive Coating Station, information as to length and width can be provided automatically from the Registration Station 4.

The restart of the motor of the First Conveyor Means 12 and the synchronous start-up of the motor driving the calender rolls may be effected automatically e.g. at a controlled time after the generation of the signal which stops motor of the First Conveyor Means with the leading edge of the laminate jsut beyond the calender nip, the time being sufficient for the ram of the calender to operate to reduce the nip between the rolls.

Immediately downstream of calender 802 is the radiation zone generally indicated by reference number 804 (Figure 1). The zone is so designed and located that the calendered laminate is exposed as soon as possible, after exiting from the nip of the calender rolls, to the radiation required for curing the adhesive. To cure two or more layers of adhesive, two sources of radiation are provided, one above and one below a laminate being passed through the zone. As the presence of conveyor wheels or rollers or the like would create shadowed areas, the radiation zone contains no means for supporting a laminate/baseboard assembly passing through it and it is therefore desirable for it to be as compact as possible in the direction of travel of the assembly. u.v. lamps and sources of similar radiation can also generate heat and therefore forced draught cooling means may be provided to control the temperature in the housing for the zone. However, it is to be understood that the curing of the adhesive layers of a composite passing through the zone is primarily by irradiation such as u.v. radiation and any curing that may occur through heat is of minor significance.

Immediately downstream of the radiation zone is the Second Conveyor Means 14 which may be of the same or similar construction to the First Conveyor Means 12 and is adapted to advance the composite away from the radiation zone at the same linear velocity as it is advanced to the zone by rolls 806,808 of the calender.

The Second Conveyor Means 14 transfers the cured laminate on its baseboard to the Offloading Station 10 where each laminate is removed by any suitable means for storing. Suitably lifting means of the conventional king for lifting glass sheets by means of an overhead gantry carrying suction pads may be employed for removal of the laminate. Said Offloading Station 10 may, if desired, contain quality control means e.g. for detecting flaws such as air bubbles or voids in the laminate, and means responsive to a signal generated by said quality control means to indicate if a laminate is to be rejected. However, such quality control means may be alternatively provided at another station to which the laminate is transferred from the Offloading Station.

Removal of the laminate at the Offloading Station leaves the baseboard behind and in the embodiment of the apparatus illustrated in the drawings means are provided for recovery of each baseboard as it arrives at the Offloading Station, so that it may be returned to the Adhesive Coating Station. To this end, the apparatus further includes a Baseboard Receiving Station 18 and First Baseboard Conveyor Means 16 for conveying the baseboard from the Offloading Station to the Baseboard Receiving Station. Any suitable apparatus may be provided for the First Baseboard Conveyor but in the embodiment illustrated, the Baseboard Receiving Station 18 is displaced sideways from the Offloading Station 10 and in a direction normal to the axis of the Second Conveyor Means 14 conveying the laminates from the Curing Station to the Offloading station, and the First Baseboard Conveyor may comprise a sheet conveyor of the known kind comprising a row of parallel endless belts 860 (Figure 1 where just two are shown for the sake of clarity) each extending across the Offloading Station under a baseboard located there, and across the Baseboard Receiving Station and means for driving the belts and for raising them to engage the undersurface of a Baseboard at the Offloading Station and transferring it to the Baseboard Receiving Station to deposit it on a support surface there.

From Baseboard Receiving Station 14 the baseboard is advanced to Baseboard Supply Station by means of Second Baseboard Conveyor Means 20 which in the embodiment illustrated is a powered conveyor means similar in construction to those employed as the First and Second conveyors 12,14, described above.

## BASEBOARD SUPPLY STATION (22)

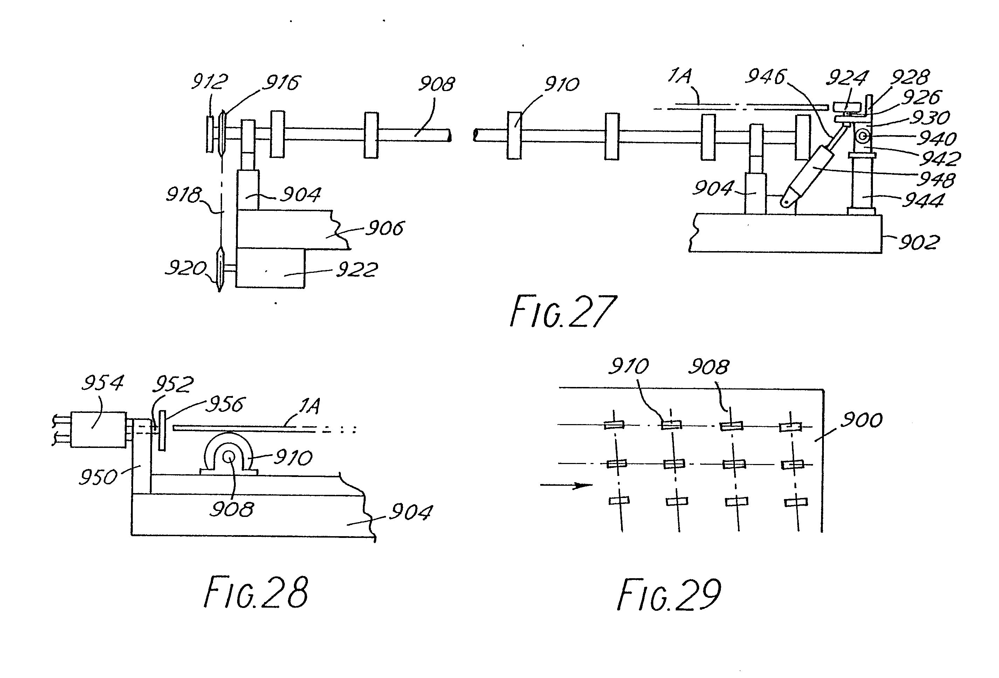

Referring to Figures 27 to 29, Baseboard Supply Station 22 comprises a support table generally indicated by reference numeral 900 which is similar in construction and operation to the roller arranging forming the support table 602 of the Adhesive Coating Station 6. Thus, it comprises a frame 902 having a side members 904 and cross members 906 and mounted along the frame, in bearings bolted on to the side members 904, a row of parallel shafts 908 having spaced rollers 910 fixed to rotate with the shafts. The shafts are driven by sprockets 912 which engage an endless chain (not shown) and one of the shafts has a second sprocket 916 which engages a second endless chain 918 driven by drive sprocket 920 driven by motor 922.

However, unlike the arrangement of table 602, the shafts 908 are not parallel to cross members 906 but are at a slight angle thereto so as to urge a baseboard being advanced by the rollers towards one side of the table 900 (see Figure 29).

To the side of the table to which a baseboard is urged by the rollers is a row of horizontal rollers 924 which provide an abutment against which the side edge of the baseboard is urged by the action of rollers 910, thereby locating that edge of the board in a precise position relative to the long axis of the table 900 and on the line indicated by z in Figure 22. The rollers 924 are free to rotate on spindles 926 mounted on one arm of an L-shaped girder 928 which extends along the apparatus parallel to the side members 904. The the underside of said arm and at spaced intervals therealong, are attached lugs 930 which are bored and bushed to receive pins 940 which also engage similar bores in mountings 942 attached to a girder 944 attached to frame 902 and extending parallel to the side members 904. Thus, girder 928 is free to pivot in the vertical plane about an axis passing through the pins 940.

Attached to the girder 928 is one end of the piston rod 946 of a pneumatic ram 948 fixed to side member 904 of the frame.

To a cross member 906 at the opposite end of the frame from that first approached by a baseboard being advanced to the Baseboard Supply Station 22 by the Second Baseboard Conveyor Means 20 are attached a plurality of mountings 950 for horizontally extending piston rods 952 of pneumatic rams 954. The rams 954 are fixed relative to the mountings 950 which are bored and bushed to receive the piston rods as a sliding fit. To the end of the piston rods are attached buffers 956 at the height of a baseboard 1A resting to the rollers 810 of the support.

In the state to receive a baseboard, pistons 946 of the rams 948 are in the retracted position with the rollers 924 horizontal and the pistons of the rams 954 are fully extended with the buffers 956 defining a straight edge parallel to the cross members 906 of the frame, this straight edge defining the line r' in Figure 22.

As each baseboard is delivered to the support table 900 by the Second Baseboard Conveyor Means 20 in the direction shown by the arrow in Figure 29, it is advanced along the table by driven rollers 910 and as a result biassed to the left as seen in Figure 29 until its left hand side engages the rollers 924, thereby locating said left hand edge of the board on the line z. The board is advanced until its leading edge comes up against buffers 954, thereby locating said leading edge on the line r. The position of the baseboard is thus defined relatively precisely and unambiguously.

When the baseboard has reached this position, the motor 922 driving the rollers is stopped and thereafter to enable the baseboard to be lifted from the support table and transferred to the Adhesive Coating Station by the Sheet and Baseboard Transfer Means and in the manner to be described below, rams 948 are activated to extend the piston rods 946 and tip rollers 924 out of contact with the side edge of the baseboard. Likewise the rams 954 are activated to retract piston rods 952 to withdraw buffers 956 from contact with the leading edge of the baseboard.

Operation of the motor 922 and of the rams 948 and 954 can be effected automatically e.g. in response to signals generated by sensor means such as an infra red sensor for detecting the arrival of the leading and trailing edge of a baseboard at the opposite end of the support table 902 from the buffers 956. The signal generated by the sensed arrival of the leading edge can activate the motor 922, retract piston rods 946 and extend buffers 956 and the signal generated by the sensed arrival of the trailing edge can, after a suitable time delay to ensure that the baseboard has reached its desired position, deactivate motor 922, advance piston rods 945 and retract buffers 956.

From the Baseboard Supply Station 12, each baseboard is transferred as desired to the Adhesive Coating Station 6 to provide the support for a laminate to be assembled at that latter station. To this end, the support tables 402, 602 and 900 of the Registration Station 4, Adhesive Curing Station 6 and Baseboard Supply Station 22 are arranged to be in a straight line so that the same lifting apparatus may be provided for transferring a baseboard which has been located as described on the support table 900 of the Baseboard Supply Station to the support table 602 of the Adhesive Coating Station and for transferring a sheet to be coated with adhesive and which has been positioned in a desired location on support table 602 of the Registration Station and lowering it on to the baseboard at the Adhesive Coating Station.

A suitable lifting and transferring appartus, referred to as the Sheet and Baseboard Transfer Means, is now described.

## SHEET TRANSFERRING MEANS (24)

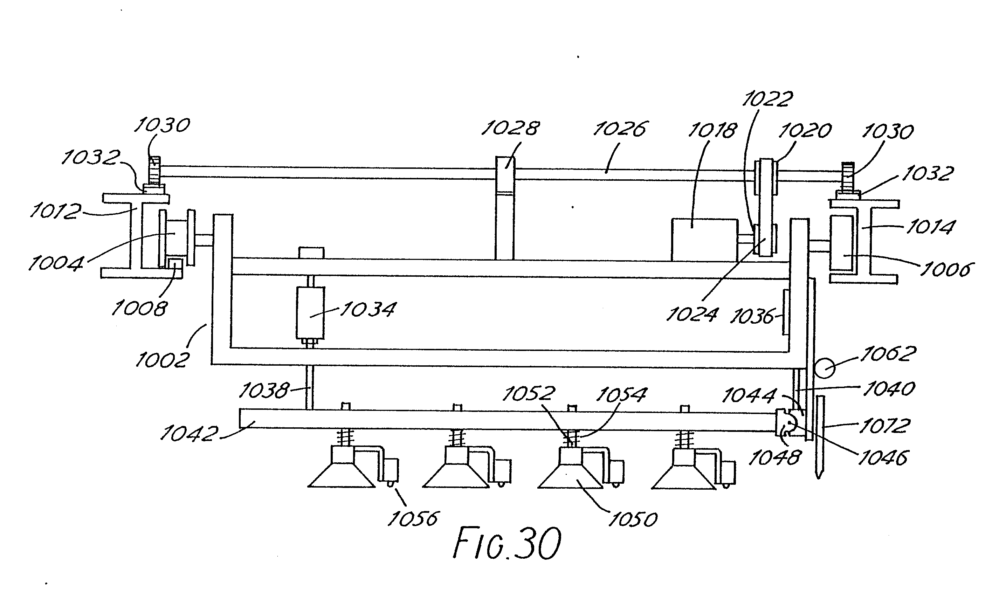

Referring to Figures 30 to 32, the Sheet and Baseboard transfer means (hereinafter referred to simply as the transfer means) comprise a carriage generally designated by reference number 1002 supported on wheels 1004,1006 which run on rails of an overhead railway which extends in a straight line over the support table 402 of Registration Station 4, support table 602 of Adhesive Coating Station 6 and support table 900 of Baseboard Supply Station 24, with Adhesive Coating Station 6 lying between the other two stations.

The wheels 1004 to one side of the carriage are grooved and run on a rail 1008 supported on I beam 1012 and the wheels 1006 on the other side of the carriage have plain rolling surfaces and run on a lower arm of a second I beam 1014.

Mounted on the frame 1016 of the carriage is a variable speed reversible electric motor 1018 to the shaft of which is attached a toothed pulley 1020 which drives a second toothed pulley 1022 by means of endless belt 1024. The driven pulley 1022 is mounted on shaft 1026 to rotate with it. The shaft is supported to rotate freely in bearings 1028 (one is shown) attached to the carriage frame and at each end of the shaft, and attached to rotate with it is a pinion 1030 which engages a rack 1032, the racks being mounted on the top faces of the top horizontal arms of I beams 1012 and 1014 and extending substantially for the full length thereof.

Suspended to hang from the carriage frame 1016 are a pair of hydraulic rams 1034,1036 with downwardly extending piston rods 1038,1040. Freely suspended from the lower end of the piston rod 1038 of ram 1034 is a sub-frame 1042. Piston rod 1040 of ram 1036 is attached to a cross beam 1044 from each end of which extends a shaft 1046 the free end of which is mounted so that it is free to rotate in a bearing 1048 which is attached to a side member of the sub-frame 1042. This arrangement enables the piston rods 1038,1040 of the rams 1034,1036 to be extended or retracted in syncopated fashion for the reasons given below.

Attached to the sub-frame 1042 are suction pads 1050 each of which is attached to the bottom of a vertically extending spindle 1052 which is slidably mounted in a bore provided in a member of the sub-frame 1042. The suction pad is resiliently biassed downwardly relative to the sub-frame by coil spring 1054. In the embodiment illustrated (see Figure 1), there are 12 pads in 3 rows of 4 pads. Each pad of the centre row of 4 suction pads has attached to it a microswitch 1056 which is normally open but is closed when the suction pad is pressed on to a surface.

The interior of each of the 12 suction pads is attached by an airline, not shown, to a vacuum tank (also not shown) mounted on the carriage frame 1002.

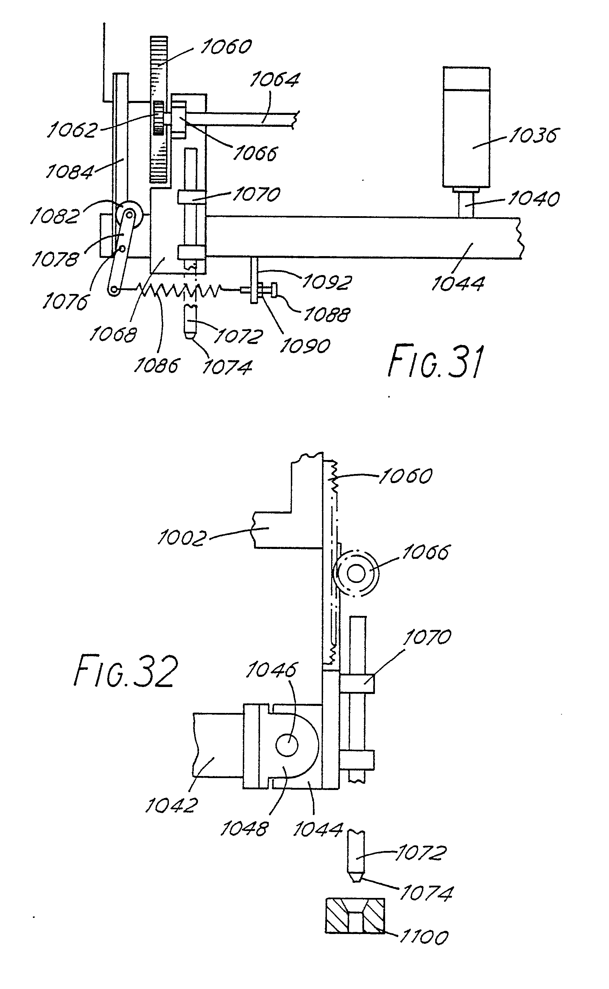

Reference is now made to Figure 31 which illustrates the arrangement at the left hand side of the end of the carriage frame 1002 to which hydraulic ram 1036 is attached, it being understood that a corresponding arrangement is also found, in mirror image, on the right hand side of the same end. Attached to the left hand side of the end of the carriage frame 1002 to which hydraulic ram 1036 is attached is a rack 1060 engaged by a pinion 1062 fixed to rotate with a common shaft 1064 which is free to rotate in bearings 1066 attached to plates 1068 bolted to the cross-beam 1044. This rack and pinion arrangement ensures that the cross-beam 1044 is maintained horizontal at all times relative to the carriage frame 1022.

Also attached to each plate 1068 by clamps 1070 is a plunger 1072 the lower free end of which is tapered as shown at 1074.

Attached towards each end of cross-beam 1044 is a pin 1076 on which is freely mounted a lever 1078 to one end of which is attached a second pin on which a wheel 1082 is mounted to rotate freely. Each of the wheels 1082 engages a track 1084 rigidly attached to the carriage frame to extend downwards therefrom and at a slight angle to the vertical so that the distances between the tracks 1084 increase towards their lower, free ends. Each wheel 1082 is biassed against its respective track 1084 by a tension spring 1086 which one end of which is attached to the free end of the lever 1078 and the other end of which is tensioned by a screwed rod 1088 which is free to rotate in a nut 1090 attached to lug 1092 which is bolted to the cross-member 1044. Thus the spring tension can be adjusted by rotation of the screwed rod 1088.

Microswitches, not shown, are positioned along the railway above the support tables at each of the Registration Station 4. Adhesive Coating Station 6 and Baseboard supply Station 24 and are engaged by means, now shown, mounted on the carriage as the carriage travels along the railway. Two switches are located at each of the stations. One is adapted to slow the motor 1018 as the carriage approaches the desired position above the station and the other stops the motor when the carriage is in approximately the correct position. Precise registration is effected by lowering the sub-frame which causes the tapered ends 1074 of the plungers 1082 to engage tapered bores 1100 provided in the frames of the support tables at each of the station, as shown in Figure 3 for the Registration Station 4. As the sub-frame is lowered further, the plungers 1072 are centred in the bores 1100 the narrowest portions of which have diameters such that the plungers 1072 are a closed sliding fit therein. Any minor lateral movement of the sub-frame 1042 relative to the carriage 1002 as the plungers 1072 slide into the tapered bores 1100 is absorbed by the manner in which the sub-frame is freely suspended from the carriage.

The operation of the transfer means is as follows:

To transfer a baseboard from the Baseboard Supply Station to the Adhesive Coating Station

A control arrangement is provided such that the sequence of operations to pick up a baseboard from the Baseboard Supply Station 22 and transfer it to the Adhesive Coating Station 6 is automatic when the following conditions are met:-

(1) the presence of a baseboard in its correct location against wheels 924 and buffers 956 at the Baseboard Supply Station is sensed, e.g. by an infra red sensor (not shown) suitably positioned on the frame 902 of the support 900 of the Baseboard Supply Station;

(2) the gantry 912 of the Adhesive Coating Station is fully retracted to its rest position as shown in Figure 1;

(3) there is no baseboard on the support table 602 of the Adhesive Coating Station.

The sequence of operations is then as follows:

With the carriage 1002 in position above the support table 900 of the Baseboard Supply Station, rams 1034 and 1036 are activated to lower the sub-frame 1042, thereby (a) causing plungers 1072 to engage and be centred in corresponding bores 1100 (not shown) located in the frame of the support table 900 and thereby locate sub-frame 1042 precisely over the baseboard lying on the support table and (b) pressing the suction pads into engagement with the baseboard.

The action oaf pressing the suction pads on to the baseboard (i) closes microswitches 1056 which activate valves to connect the spaces between the board and the walls of the suction pads to a vacuum source and suck the baseboard against the suction pads, (ii) automatically reverses the direction of the rams to raise the sub-frame and (iii) automatically actuates motor 1018 to drive the carriage to the Adhesive Coating Station 6 where the microswitches controlling motor 1018 first slow and then stop the motor when the carriage is approximately in position above the Adhesive Coating Station.

The stopping of the motor automatically activates the rams 1034, 1036 to commence lowering the sub-frame thereby locating the plungers 1072 in the bores 1100 provided in the frame of support table 602 and correctly positioning the sub-frame over said support table. The rams continue to extend until the baseboard engages the support table 602 when further lowering activates the microswitches 1056 which in this mode activate valves to release the vacuum in the suction pads, and thus release the baseboard, and reverse the rams 1034,1036 to raise the sub-frame.

Because the sub-frame is accurately located relative to the relevant support table each time it is lowered at the Adhesive Station and at the Baseboard Supply Station and because each baseboard that arrives at the Baseboard Supply Station is always located in the same position by the rollers 924 and the buffers 956, it will be understood that each baseboard of the same size that is transferred from the Baseboard Supply Station to the Adhesive Coating Station is always deposited in precisely the same position on the support table 602 of the Adhesive Coating Station.

To transfer a glass sheet from the Registration Station to the Adhesive Coating Station

The control arrangement is such that the sequence of operations to pick up a glass sheet from the Registration Station 4 and transfer it to the Adhesive Coating Station 6 is automatic when the following conditions are met:

(1) a sheet of glass is sensed on the support table 402 of the Registration Station by an infra red sensor;

(2) the registration procedure is complete;

(3) the gantry 620 of the Adhesive Coating Station is fully retracted to its rest position as shown in Figure 1.

The sequence of operations is then as described above with reference to the transfer of a baseboard from the Baseboard Supply Station to the Adhesive Coating Station except that in the case of the transfer of the glass sheet, when it is lowered at the Adhesive Coating Station, the control of the activation of the rams is such that the activation of ram 1036 is deferred slightly relative to the activation of ram 1034 so that the glass sheet is not lowered horizontally but one end, being the end which is adjacent the gantry 620 when the latter is fully retracted in its rest position, is lower than the other. This is because when the glass sheet is being lowered on to a surface which contains a layer of adhesive that has been deposited by the adhesive coating apparatus, it is desirable to assist squeezing the adhesive towards the other, or right hand end in the view shown in Figure 1.

If desired, the transfer apparatus can be programmed so that ram 1034 invariably starts to extend prior to ram 1036 whenever it is picking up or lowering a sheet since no harm results and the control arrangements are simpler.

Because the sub-frame is accurately located relative to the relevant support table each time it is lowered at each of the Registration Station and the Adhesive Coating Station and because each sheet of glass which is delivered to the Registration Station is always located in exactly the same position by the registration procedure, it will be understood that each sheet of the same size that is transferred from the Registration Station to the Adhesive Coating Station is always deposited in precisely the same position on the support table 602 of the Adhesive Coating Station.

The overall operation of the apparatus to form a glass/interlayer/glass laminate is as follows:

(A) With a baseboard in position on the support table 902 at the Baseboard Supply Station 24 and the gantry 620 of the adhesive coating apparatus fully retracted and nothing on the support table 602 of the Adhesive Coating Station, the baseboard is transferred to the support table 602 of the Adhesive Coating Station.

(B) Simultaneously with (A), a glass sheet which has been washed and degreased at pretreatment station 2 is advanced by conveyor 210 on to support table 402 of the Registration Station and positioned relative to the first and second datum lines.

(C) The registered sheet is transferred to the Adhesive Coating Station, lowered on to the baseboard and coated with adhesive.

(D) An interlayer is applied to the adhesive-coated surface of the sheet.

) Simultaneously with (C) and/or (D), a second glass sheet is advanced on to support table 402 of the Registration Station and positioned relative to the first and second datum lines.

(F) The registered second sheet is tranferred to the Adhesive Coating Station and lowered on to the adhesive coated interlayer.

(G) The laminate formed in (F) is adhvanced from the Adhesive Coating Station to the Curing Station.

(H) Simultaneously with (G), (A) is repeated and a second cycle started.

While the apparatus of Figure 1 is particularly adapted for and has been described with reference to the production of glass/interlayer/ glass laminates, it will be understood that it may be used for the manufacture of other sheet laminates. Likewise the sheet moving apparatus of the Registration Station 4 may be employed for moving sheets for purposes other than in the production of laminates and the registration apparatus may be used for positioning sheets for purposes other than in the production of laminates. Further, the apparatus employed for the depostion of adhesive at Adhesive Coating Station 6 may be employed for the deposition of other viscous liquids. The Sheet and Baseboard Transfer Means, also, may be employed for purposes other than the transport of sheets for laminate production.

To summarise, the features disclosed herein which are considered to be novel and of particular interest are those specified in the following statements.

A1. A method for the production of a glass laminate of the kind comprising a sheet of glass on each side of an interlayer.

The method comprises:
forming an assembly of first glass sheet, interlayer and second glass sheet with a first layer of radiation-curable adhesive between the first glass sheet and the interlayer and a second layer of radiation-curable adhesive between the interlayer and the second glass sheet;
supporting the assembly horizontally on a baseboard which is transparent or substantially transparent to the radiation employed to cure the adhesive and then exposing the supported assembly simultaneously to radiation from sources above and below the supported assembly to cure the adhesive.

The said method preferably also includes one or more of the following optional features.

The adhesive is cured by irradiation by ultra-violet light.

The method further includes the steps of

supporting a first glass sheet horizontally on a baseboard;

applying a layer of adhesive to the top surface of the supported sheet;

placing an interlayer on the adhesive-coated surface of the first glass sheet;

applying a layer of adhesive to the exposed face of the interlayer, and;

placing a second glass sheet on top of the adhesive-coated face of the interlayer

and wherein the length and width of the baseboard are greater than those of the assembly so formed.

That surface of the baseboard on which the assembly is formed comprises polyolefin.

The polyolefin is polypropylene.


A2. The laminate obtained by the above method.


B. An apparatus for the production of laminates, especially glass laminates.


The apparatus comprises

a first station including means for supporting a sheet horizontally and means for registering successive rectangular sheets located on said support so that each of two parallel sides of each sheet are equidistant from a first datum line and one of the other sides of said sheet lies on a second datum line which extends at right angles to the first datum line;

a seocnd stateion including means for supporting a sheet horizontally and means for depositing adhesive on a sheet located on said support;

sheet transport means adapted to transfer a sheet registered at said first station to a second station whereby sheets of the same width and length and registered at said first station are positioned at precisely the same location on the support of said second station;

a third station having means for irradiating a horizontal sheet laminate from above and below to cure layers of adhesive in said laminate;

first conveyor means for advancing a laminate containing uncured layers of adhesive from said second station to said third station;

a fourth station for receiving a cured laminate from the third station; and

second conveyor means for advancing a laminate from the third station to the fourth station.

The said apparatus preferably further includes one or more of the following optional features.

A fifth station including means for supporting horizontally a flat rectangular baseboard and means for registering said baseboard with one edge on a datum line;

baseboard transport means adapted to transfer each baseboard registered at said fifth station to said second station and to position each such transported baseboard on the support of each second station with said edge in precisely the same position and on a line which is parallel to that side of a sheet which has been placed at said second station by said sheet transport means, which is registered to lie on said second datum line at said first station;

a sixth station including means to support horizontally a baseboard recovered from said fourth station; and means for advancing a baseboard from said sixth station to said fifth station.

The said first baseboard transport means comprise a carriage adapted to travel between a first position above said fifth station support means, said carriage including a sub-frame containing suction means for engaging the top surface of a flat sheet, said sub-frame being movable in the vertical plane relative to said carriage between a lowered position and a raised position, means for moving the carriage back and forth between said first and second positions, means for moving said sub-frame relative to said carriage up and down between said raised and lowered positions, and means for locating the sub-frame uniquely relative to the respective support means at each of said fifth and second stations.

Said sheet transport means comprise a carriage adapted to travel between a first position above said first station support means and a second position above said second station support means, said carriage including a sub-frame containing suction means for engaging the top surface of a flat sheet, said sub-frame being movable in the vertical plane relative to the carriage between a lowered position and a raised position, means for moving the carriage back and forth between said first and second positions, means for moving the sub-frame up and down between said raise and lowered positions and means for locating the sub-frame uniquely relative to the respective support means at each of said first and second stations.

The carriage of said first baseboard transport means and the carriage of said sheet transport means are the same.

34

The sub-frame includes at least two downwardly extending posts each having a lower, free, end which is tapered and the support means at each station include a horizontal frame having a vertical bore adapted to receive each of said posts, each bore being directly vertically under its respective post when the sub-frame is in its correct position above the support means and being tapered downwardly to a diameter in which said post is a snug sliding fit.

Means are provided for lowering one end of the sub-frame before the opposite end.

The fifth station, where present, includes means for registering a baseboard with two adjacent edges located on respective datum lines which extend at right angles to each other in the plane of the support surface.

Said registration means comprise a pair of abutments defining lines extending at right angles to each other and means for urging the baseboard to bring two adjacent sides thereof into contact with said abutments and aligned with said lines.

Said urging means comprises a plurality of rollers supported on horizontal axles and arranged to urge said baseboard towards said pair of abutments, and means for driving the rollers.

Said pair of abutments are movable between a first position in which they define said datum lines and a second position in which they are out of contact with a baseboard registered with its two adjacent sides located on said datum lines, and means for moving each of said abutments between said first and second positions.

Second baseboard transporting means are provided for transporting a baseboard from the fourth station to the sixth station.

The paths from the second station to the fourth station and from the sixth station to the fifth station are each straight and the fourth and sixth stations are in line.

The first station further includes automatic means for measuring the width and length of a rectangular sheet and said apparatus also includes means for generating signals corresponding to the measured width and length of a rectangular sheet and said apparatus also includes means for generating signals corresponding to the measured width and length of the sheet and means responsive to said signals for controlling the quantity of adhesive deposited on said sheet by said adhesive depositing means at said second station.

Means are provided responsive to said signals for controlling the distribution of said adhesive over the surface of said sheet.

The third station includes a radiation zone and means for applying pressure to a laminate prior to advancing it to said radiation zone and in a direction generally normal to the plane of the assembly.

Said pressure applying means in a calender.

Said calender includes an upper roll and a lower roll defining a nip and means for inclining the plane passing through the axes of the calender rolls about a horizontal axis so as to move the upper roll forwards or backwards from a location vertically above the lower roll.

Means are provided for driving said first and second conveyor means synchronously with said calender rolls.

Means are included for adjusting the width of the nip between the rolls of the calender between a first position in which the width is greater than the combined thickness of an assembly comprising a baseboard and laminate being advanced thereto by said first conveyor and a second position which applies a predetermined pressure to said assembly, and automatic means for adjusting the nip to the first position prior to said assembly reaching said nip, stopping said first conveyor when said assembly is in a position with its leading edge just downstream of said nip, adjusting the nip to said second position with said assembly stopped in said position and then starting said calender and said conveyor synchronously to advance said assembly through said calender.

The irradiating means comprise sources of ultra-violet radiation.


C. A method of positioning a sheet relative to a first datum line.


The method comprises the steps of
locating a parallel sided sheet with a first of said parallel sides against first abutment means defining a line which is parallel to the datum line and displaced to one side thereof, with the other of said parallel sides of said sheet lying to the same side of the line defined by said first abutment means as said datum line,
measuring the distance 'd' between said other parallel side and a reference line which is on the opposite side of said other parallel side from the line defined by said first abutment means, extends parallel to the datum line and is the same distance from it as the line defined by said first abutment means, and
moving the sheet towards said reference line until said other parallel side is a distance 'd''2 from said reference line.

D. Apparatus for automatically determining the correct location of parallel sided sheets of various widths so that their parallel sides are parallel to and equdistant from a first datum line.

The apparatus comprises:
support means for a sheet;
means defining a first abutment for the location there aganst of one of the parallel sides of sheet resting on said support means, with said one parallel side extending along a line parallel to the datum line and displaced to one side of it;
a first sensor for sensing the location of the other parallel side of a sheet located with its first parallel side against the first abutment and adapted to generate a signal as a result of said sensing; and
means responsive to said signal for determining the distance 'd' of said other parallel side from a reference line which extends parallel to said datum line and on the other side thereof from the line defined by said first abutment, said reference line and said line defined by said first abutment being equidistant from said datum line, and for automatically positioning between said reference line and said datum line means defining a second abutment for the location there against of said other parallel side of said sheet to extend parallel to said reference line and at a distance of $d/2$ therefrom.

The said apparatus preferably further includes one or more of the following optional features.

The first sensor is movable between the reference line and the datum line in a direction having a component normal to the direction of the datum line in the plane of the support surface and is adapted to generate a signal when it crosses the plane extending through the said side of said sheet and normal to the plane of the sheet, and the apparatus further includes means for advancing and retracting said sensor along said direction and means responsive to said signal for halting the advance of the sensor when it is in the said plane extending through the side of the sheet normal to the plane of the sheet.

The means responsive to said signal is adapted to halt the advance of the sensor thereafter retract the sensor a short distance and thereafter advance it a second time and at a slower speed until the signal is generated again whereupon said advance is stooped.

The means for advancing the sensor simultaneously advances said means defining said second abutment along a parallel path to the sensor and at half the rate of advance of the sensor, the arrangement being such that they cross simultaneously the plane in which the reference line lies and which is normal to the plane of a sheet supported on the support means.

The first sensor is an infra red sensor.

The means defining the second abutment includes retractable buffer means and means for moving the buffer means between an extended position, in which they define the location of said other side of said parallel sheet on a line parallel to the reference line and a distance $d/2$ therefrom, and a retracted position.

Means are provided for enabling a sheet resting on said support means to be moved in a direction normal to the datum line.

Said enabling means comprise rollers.

Means are provided for driving the rollers.

Means are provided enabling a sheet resting on said support means to be moved in a direction parallel to the datum line.

Said enabling means comprise rollers.

Means are provided for driving the rollers.

Means are provided enabling a sheet restomg pm said support means to be moved in directions both normal to and parallel to the datum line.

Said enabling means comprise two sets of rollers, the rollers of each set being mounted to rotate on parallel axes and the axes of the rollers of one set being at right angles to the axes of the rollers of the other set, and means for adjusting the position of the one roller set relative to the position of the other roller set so that in a first position the upper surfaces of the rollers of said one set project above the upper surface of the rollers of the other set and provide a support surface for a sheet and in a second position the upper surfaces of the rollers said one roller set lie below the upper surfaces of the rollers of said other roller set whereby said upper surfaces of said other roller set provide a support surface for a sheet.

Means are provided for driving the rollers of each set.

Means are provided for advancing a sheet on to said support means in a direction parallel to said first datum line.

The apparatus includes third abutment means for locating a third side of a rectangular sheet supported on said support means so that said third side is on a second datum line extending normal to said first datum line.

Said third side is the trailing edge of sheet advanced to said support means.

Means are provided for automatically measuring the length of a sheet being advanced on to said support means.

Said length measuring means comprise a wheel adapted to be engaged by a face of said advancing sheet and means for measuring the angular displacement of the wheel effected by the passage of said face of said sheet past the wheel.

Means are provided for sensing the arrival of each of the leading and trailing edge of the sheet at the same predetermined position on the surface of the wheel relative to the axis of rotation of the wheel and generating a signal responsive to each said sensing and means responsive to the signal generated by sensing the arrival of the leading edge to start the measuring means and means responsive to the signal generated by sensing the arrival of the trailing edge to stop the measuring means.

Means are provided for automatically determining the width of the sheet by measuring the distance between said reference line and said other parallel side of the sheet when said first parallel side is resting against said first abutment.

The apparatus comprises:

support means for a sheet;

means defining a first abutment for the location there against of one of the parallel sides of a sheet resting on said support means, with said one parallel side extending along a line parallel to the datum line and displaced to one side of it;

a first sensor for sensing the location of the other parallel side of a sheet located with its first parallel side against the first abutment and adapted to generate a signal as a result of said sensing; and

means responsive to said signal for determining the distance 'd' of said other parallel side from a reference line which extends parallel to said datum line and on the other side thereof from the line defined by said first abutment, said reference line and said line defined by said first abutment being equidistant from said datum line, and for automatically positioning between said reference line and said datum line means defining a second abutment for the location there against of said other parallel side of said sheet to extend parallel to said reference line and at a distance of $^d/2$ therefrom,

and wherein said first sensor is movable between the reference line and the datum line in a direction having a component normal to the direction of the datum line in the plane of the surface of the support means and is adapted to generate a signal when it crosses the plane extending through said side of said sheet and normal to the plane of the sheet, said apparatus including:

drive means for simultaneously advancing and retracting said sensor along said direction and the means defining the second abutment along a parallel path to the sensor and at half the rate of advance of the sensor, the arrangement being such that they are adapted to cross simultaneously the plane in which the reference line lies and which is normal to the plane of a sheet supported on said support means,

means for enabling a sheet resting on said support means to be moved in directions both parallel and normal to said datum line, said enabling means comprising two sets of rollers, the rollers of each set being mounted to rotate on parallel axes and the axes of the rollers of one set being at right angles to the axes of the rollers of the other set, and means for adjusting the position of the one roller set relative to the position of the other roller set so that in a first position the upper surfaces of the rollers of said one set project above the upper surfaces of the rollers of the other set and provide a support surface for a sheet and in a second position the upper surfaces of the rollers of said one roller set lie below the upper surfaces of the rollers said other roller set whereby said upper surfaces of said other roller set provide a support surface for a sheet,

means for driving the rollers of each set, and

means for advancing a sheet on to said support means in a direction parallel to said first datum line;

said apparatus further including

a second sensor for sensing the presence or absence of a sheet on the support means

means responsive to a signal generated by said second sensor as a result of sensing the absence of a sheet on said support means for automatically initiating the following sequence of events:

(1) if the first set of rollers adapted to move the sheet in a direction parallel to the datum line is not in a position such as to engage the undersurface of a sheet being advanced to the support means, activate the means adjusting the relative positions of the sets of rollers to bring said first set into said position;

(2) if the first sensor is not retracted relative to the means defining the first abutment, activate the means driving said sensor to effect such retraction and then stop the drive means;

(3) start the means driving the rollers of the first set in a sense to advance a sheet along the support; a third sensor for sensing the arrival of the trailing edge of the sheet at a predetermined position on the support means and means responsive to a signal generated by said sensor as a result of said sensing for automatically initiating the following sequence of events:

(4) stop means driving the rollers of the first set;

(5) activate means adjusting the relative positions of the sets oaf rollers to reverse the relative positions of said sets whereby the second set engages the undersurface of the sheet;

(6) start means for driving the rollers of the second set in a sense to urge sheet into contact with said first abutment;

(7) after a predetermined time stop means for driving rollers of second set;

(8) start means for driving first sensor in sense to advance sensor across support means towards means defining first abutment and means responsive to said signal generated by said first sensor for automatically initiating the following sequence of events:

(9) stop the means driving the sensor with the sensor in the plane extending through the said other parallel side of the sheet normal to the plane of the sheet;

(10) start means driving the rollers of second set to rotate rollers in reverse direction to that of step (6);

(11) after a predetermined time stop means driving rollers.

Means are also included which define a third abutment for locating a third side of a rectangular sheet on said support means on a second datum line extending normal to said first datum line and the sequence of events initiated by the means responsive to the signal generated by the first sensor further includes:

(12) after step (11) activating means adjusting the relative positions of the two sets of rollers to reverse the relative positions of the said sets whereby the first set again engages the undersurface of the sheet;

(13) start means driving first set of rollers to rotate rollers in sense to urge sheet towards said third abutment means;

(14) after a predetermined time stop means driving rollers of the first set.

In a modification of the apparatus, a fourth sensor is provided for sensing the arrival of said third side of said sheet in the vicinity of said means defining said third abutment and step (14) is initiated by means responsive to a signal generated by said fourth sensor as a result of said sensing.

In another modification of the apparatus a fifth sensor is included, for sensing the arrival of said other parallel side in the vicinity of said means defining said second abutment and steps (11) to (14) are initiated by means responsive to a signal generated by said fifth sensor as a result of said sensing.

E. Apparatus for manoevring a sheet in two mutually perpendicular directions in the plane of the sheet.

The apparatus comprises

a frame

a plurality of axles mounted in parallel spaced relationship along said frame, each axle having a plurality of rollers mounted along its length, thereby forming a first array of rollers the upper surfaces of which lie in substantially the same plane and provide a first support means

a second array of rollers each of which is mounted on a separate axle which is at an angle to the direction of the axles of the rollers of the first array, the axles of the rollers of the second array being parallel to one another and each such axle being pivotable in a plane in which the axles of the first array of rollers do not lie and between a first position in which the surface of the roller mounted on the axle lies below the plane of the first support means and a second position in which said roller surface projects above said plane, whereby when the rollers of the second array are in said second position their surfaces lie in the same plane and provide a second support means whose suppoort surface lies above that of the first support means; and

means for pivoting the axles of the rollers of the second array between said first and second positions.

The said apparatus preferably further includes one or more of the following optional features.

The means for pivoting the axles of the rollers of the second array are adapted to pivot all the axles of the second array simultaneously.

Means are provided for rotating the rollers of the first array at the same peripheral speed and in the same direction, and for reversing the direction of rotation, and means for rotating the rollers of the second array at the same peripheral speed and in the same direction, and means for reversing said direction of rotation.

Axles carrying rollers of the first array have sprockets which are fixed thereto to rotate therewith and the apparatus includes an endless chain adapted to engage said sprockets and means driving said endless chain.

The rollers of the second array are adapted to be rotated by rotation of the rollers of the first array.

The axles of the rollers of the second array extend generally normal to the direction of the axles of the rollers of the first array and the plane in which the axles of the second array pivot is normal to the direction of the axles of the first array.

Rollers of the second array are provided with gear rings which engage with corressponding gear rings provided in the respective rollers of the first array.

The axis about which the roller of the second array rotates pivots about the axis of rotation of the roller of the first array engaged by said rollers of said second array.


F. Apparatus for coating a surface with a viscous liquid such as an adhesive.

The apparatus comprises:

first means for depositing said liquid of the surface to be coated and comprising an array of nozzles

means for effecting relative movement between said liquid depositing means and said surface over a predetermined finit distance along said surface; and

means for dispensing through each nozzle a predetermined finite volume of said liquid at a predetermined rate during the period of said relative movement, there being associated with each nozzle of independent means for adjusting the volume of liquid dispensed through that nozzle and the rate at which said volume of adhesive is dispensed through said nozzle;

and wherein said nozzles are located at spaced intervals in a direction generally tranverse to the direction of relative movement between said surface and said liquid depositing means.

The said apparatus preferably further includes one or more of the following optional features.

The liquid depositing means includes a line of primary nozzles extending in a direction normal to the direction of relative movement between the liquid depositing means and the surface to be coated, the distances between adjacent nozzles in the line being equal.

Means are provided for adjusting the distance between the first and last nozzles in the line while maintaining equal the distances between adjacent nozzles.

The liquid depositing means further include a pair of secondary nozzles located on a line which is parallel to the line of primary nozzles in the direction of movement of the liquid depositing means relative to the surface to be coated.

Means are provided for adjusting the distance between the secondary nozzles.

The apparatus includes a second means for depositing liquid on the surface to be coated and means for effecting relative movement between said surface to be coated and said second liquid depositing means over a predetermined finite distance and in a direction which is generally transverse to the direction of movement of the first liquid depositing means relative to the surface to be coated, said further liquid depositing means comprising at least one nozzle for depositing liquid on to the surface to be coated and said apparatus further including means for dispensing through said nozzle a predetermined volume of liquid at a predetermined rate during the period of said relative movment, there being associated with each nozzle independent means for adjusting the volume of liquid dispensed through that nozzle and the rate at which said volume of adhesive is dispensed thorugh said nozzle.

The apparatus includes support means for the sheet, a gantry adapted to travel over the support surface and means for advancing and retracting the gantry over the sheet; and said first liquid depositing means are mounted on the gantry.

The apparatus incudes means activating the dispensing of the liquid through the nozzles of said first liquid depositing means responsive to activation of the means for advancing the gantry over the sheet.

Each of the means for dispensing a liquid through a nozzle are adapted to be operated synchronously with the means for advancing the gantry.

The apparatus includes a carriage adapted to travel along a path normal to the direction of travel of said gantry, and means for advancing and retracting the carriage along said path, and said second liquid depositing means are mounted on said carriage.

Means are provided for activating the dispensing of the liquid through each nozzle of said second liquid depositing means responsive to activation of the means for advancing the carriage.

Means are provided for activating the dispensing of the liquid through the nozzles of said second liquid depositing means responsive to activation of the means for advancing and retracting the carriage.

Each oaf the means for dispensing a liquid through a nozzle of said second liquid depositing means are adapted to be operated synchronously with the means for advancing and retracting the carriage.

The means for advancing and retracting the gantry and the means for advancing and retracting the carriage are adapted to be operated synchronously.

Each nozzle is connected to a respective container for the liquid, said container having an inlet adapted to be connected to a supply of the liquid, and an outlet connected to said nozzle, and means for delivering a predetermined volume of liquid from the container to the nozzle at a predetermined rate during said period of relative movement.

The container comprises a hollow cylinder having a bore and the apparatus includes a piston axially slidable in said bore the arrangement being such that movement of the piston in the bore in a first direction draws liquid into the bore and in the reverse direction delivers liquid from said bore to said nozzle, said apparatus further including means for driving the piston on the delivery stroke during said period of said relative movement and for controlling the length and velocity of said delivery stroke.

The means for driving the piston in the bore comprises a reversible step motor and the apparatus further includes means for controlling both the number of revolutions and the speed of the motor in the direction which drives the piston on its delivery stroke.

Automatic means are provided which are responsive to information relating to the length of the sheet and control the length of said finite distance of travel of the first liquid depositing means relative to the sheet to be coated.

Automatic means are provided which are responsive to information relating to the length of a sheet to be coated and control the position along the distance of travel of said first liquid depositing means relative to the sheet to be coated at which deposition of liquid from each nozzle of said first liquid depositing means commences, and the period during said relative travel during which liquid is dispensed through each nozzle.

Automatic means are provided which are responsive to information relating to the width and length of the sheet to be coated and control the volume of liquid dispensed through each nozzle of said first liquid depositing means during said travel of said liquid depositing means relative to the sheet to be coated.

Automatic means are provided which are responsive to information relating to the width of a sheet to be coated and control said distance between first and last nozzles in the line of primary nozzles.

Automatic means are provided which are responsive to information relating to the width of a sheet to be coated for controlling said distance between said secondary nozzles.

Automatic means are provided which are responsive to information relating to the width of the sheet to be coated and control the positions along the distance of travel of said second liquid depositing means at which deposition of liquid from each nozzle of said second liquid dispensing means commences and finishes.

Automatic means are provided which are responsive to information relating to the width and length of the sheet to be coated and control the volume of liquid dispensed through each nozzle of said second liquid depositing means during said travel of said second liquid depositing means.

G. Apparatus for forming a laminate and including the above described surface coating apparatus for depositing adhesive on the surface of a sheet and automatic means, such as described above, for measuring the width and length of a sheet to be coated with adhesive by said coating apparatus.

H. Apparatus for the manufacture of laminated glass and including apparatus, of the kind referred to under "D" above, for automatically determining the correct location of parallel-sided sheets.

J. Apparatus for the manufacture of laminated glass and including sheet manoeuvring apparatus of the kind referred to under "E" above.

K. Apparatus for the manufacture of a laminated glass and including surface coating apparatus of the kind referred to under "F" above.

L. Apparatus for the production of laminates, and of the kind referred to under "B" above, in which said first station includes apparatus, of the kind referred to under "D" above, for automatically determining the correct location of parallel-sided sheets.

M. Apparatus for the production of laminates, and of the kind referred to under "B" above, in which said first station includes sheet manoeuvring apparatus of the king referred to under "E" above.

N. Apparatus for the production of laminates, and of the kind referred to under "B" above, in which said second station includes surface coating apparatus of the kind referred to under "F" above.

P. Apparatus for determining the correct location of parallel-sided sheets, and of the kind referred to in "D" above, and having means enabling a sheet resting on the support means to be moved in directions both normal and parallel to the datum line, and wherein said means comprise apparatus for manoeuvring a sheet and of the kind referred to in "E" above.

## Claims

1. A method for the production of a glass laminate of the kind comprising a sheet of glass on each side of an interlayer, the method comprising:

forming an assembly of first glass sheet, interlayer and second glass sheet with a first layer of radiation-curable adhesive between the first glass sheet and the interlayer and a second layer of radiation-curable adhesive between the interlayer and the second glass sheet;

supporting the assembly horizontally on a baseboard which is transparent or substantially transparent to the radiation employed to cure the adhesive and then exposing the supported assembly simultaneusly to radiation from sources above and below the supported assembly to cure the adhesive.

2. A method as claimed in claim 1 which includes the steps of

supporting a first glass sheet horizontally on a baseboard;

applying a layer of adhesive to the top surface of the supported sheet;

placing an interlayer on the adhesive-coated surface of the first glass sheet;

applying a layer of adhesive to the exposed face of the interlayer, and;

placing a second glass sheet on top of the adhesive-coated face of the interlayer

and wherein the radiation is ultra-violet radiation, the baseboard comprises polyolefin, preferably polypropylene, and the length and width of the baseboard are greater than those of the assembly so formed.

3. Apparatus suitable for use with the method claimed in claim 1, said apparatus comprising

a first station including means for supporting a sheet horizontally and means for registering successive rectangular sheets located on said support so that each of two parallel sides of each sheet are equidistant from a first datum line and one of the other sides of said sheet lies on a second datum line which extends at right angles to the first datum line;

a second station including means for supporting a sheet horizontally and means for depositing adhesive on a sheet located on said support;

sheet transport means adapted to transfer a sheet registered at said first station to a second station whereby sheets of the same width and length and registered at said first station are positioned at precisely the same location on the support of said second station;

a third station having means for irradiating a horizontal sheet laminate from above and below to cure layers of adhesive in said laminate;

first conveyor means for advancing a laminate containing uncured layers of adhesive from said second station to said third station;

a fourth station for receiving a cured laminate from the third station; and

second conveyor means for advancing a laminate from the third station to the fourth station,

said apparatus further optionally including

a fifth station including means for supporting horizontally a flat rectangular baseboard and means for registering said baseboard with one edge on a datum line;

baseboard transport means adapted to transfer each baseboard registered at said fifth station to said second station and to position each such transported baseboard on the support of said second station with said edge in precisely the same position and on a line which is parallel to that side of a sheet which has been placed at said second staion by said sheet transport means, which is registered to lie on said second datum line at said first station;

a sixth station including means to support horizontally a baseboard recovered from said fourth station; and means for advancing a baseboard from said sixth station to said fifth station.

4. Apparatus as claimed in claim 3 in which said first baseboard transport means and said sheet transport means comprise a carriage adapted to travel between a first position above said fifth station support means and a second position above said second station support means, and also between a third position above said first station support means and a fourth position above said second station support means, said carriage including a sub-frame containing suction means for engaging the top surface of a flat sheet, said sub-frame being movable in the vertical plane relative to said carriage between a lowered position and a raised position, means for moving the carriage back and forth between said first and second positions, and between said third and fourth positions, means for moving said sub-frame relative to said carriage up and down between said raised and lowered positions, and means for locating the sub-frame uniquely relative to the respective support means at each of said fifth and second stations and at each of said first station support means and said second station support means, and optionally means for lowering one end of the sub-frame before the opposite end.

5. Apparatus as claimed in claim 4 in which the sub-frame includes at least two downwardly extending posts each having a lower, free, end which is tapered and the support means at each station include a horizontal frame having a vertical bore adapted to receive each of said posts, each bore being directly vertically under its respective post when the sub-frame is in its correct position above the support means and being tapered downwardly to a diameter in which said post is a snug sliding fit.

6. Apparatus as claimed in any one of claims 3 to 5 in which said first station further includes automatic means for measuring the width and length of a rectangular sheet and said apparatus also includes means for generating signals corresponding to the measured width and length of the sheet and means responsive to said signals for controlling the quantity, of adhesive deposited on said sheet, and optionally also the distribution of said adhesive over the surface of said sheet, by said adhesive depositing means at said second station.

7. A method as claimed in any one of claims 3 to 6 in which said third station includes a radiation zone and means such as a calender for applying pressure to a laminate prior to advancing it to said radiation zone and in a direction generally normal to the plane of the assembly.

8. Apparatus as claimed in claim 7 in which said calender includes an upper roll and a lower roll defining a nip and means for inclining the plane passing through the axes of the calender rolls about a horizontal axis so as to move the upper roll forwards or backwards from a location vertically above the lower roll, and said apparatus further optionally includes means for driving said first and second conveyor means synchronously with said calender rolls.

9. A method of positioning a sheet relative to a first datum line, said method comprising of the steps of locating a parallel sided sheet with a first of said parallel sides against first abutment means defining a line which is parallel to the datum line and displaced to one side thereof, with the other of said parallel sides of said sheet lying to the same side of the line defined by said first abutment means as said datum line.
measuring the distance 'd' between said other parallel side and a reference line which is on the opposite side of said other parallel side from the line defined by said first abutment means, extends parallel to the datum line and is the same distance from it as the line defined by said first abutment means, and
moving the sheet towards said reference line until said other parallel side is a distance $^d/2$ from said reference line.

10. Apparatus for automatically determining the correct location of parallel sided sheets of various widths so that their parallel sides are parallel to and equidistant from a first datum line, said apparatus being suitable for use in the sheet registration means of claim 3, said apparatus comprising:
support means for a sheet;
means defining a first abutment for the location there against of one of the parallel sides of a sheet resting on said support means, with said one parallel side extending along a line parallel to the datum line and displaced to one side of it;
a first sensor for sensing the location of the other parallel side of a sheet located with its first parallel side against the first abutment and adapted to generate a signal as a result of said sensing; and
means responsive to said signal for determining the distance 'd' of said other parallel side from a reference line which extends parallel to said datum line and on the other side thereof from the line defined by said first abutment, said reference line and said line defined by said first abutment being equidistant from said datum line, and for automatically positioning between said reference line and said datum line means defining a second abutment for the location there against of said other parallel side of said sheet to extend parallel to said reference line and at a distance of $^d/2$ therefrom, and optionally means for enabling a sheet resting on said support means to be moved in a direction normal to the datum line and in a direction parallel to the datum line.

11. Apparatus as claimed in claim 10 in which said first sensor is movable between the reference line and the datum line in a direction having a component normal to the direction of the datum line in the plane of the support surface and is adapted to generate a signal when it crosses the plane extending through the said side of said sheet and normal to the plane of the sheet, and the apparatus further includes means for advancing and retracting said sensor along said direction and means responsive to said signal for halting the advance of the sensor when it is in the said plane extending thorough the side of the sheet normal to the plane of the sheet and said means for advancing the sensor simultaneously advances said means defining said second abutment along a parallel path to the sensor and at half the rate of advance of the sensor, the arrangement being such that they cross simultaneously the plane in which the reference line lies and which is normal to the plane of a sheet supported on the support means, and said means defining the second abutment optionally includes retractable buffer means and means for moving the buffer means between an extended position, in which they define the location of said other side of said parallel sheet on a line parallel to the reference line and a distance $d/2$ therefrom, and a retracted position.

12. Apparatus as claimed in claim 10 or claim 11 including means for automatically measuring the length of a sheet being advanced on to said support means and comprising a wheel adapted to be engaged by a face of said advancing sheet and means for measuring the angular displacement of the wheel effected by the passage of said face of said sheet past the wheel, and means for automatically determining the width of the sheet by measuring the distance between said reference line and said other parallel side of the sheet when said first parallel side is resting against said first abutment.

13. Apparatus as claimed in any one of claims 10 to 12 and comprising support means for a sheet; means defining a first abutment for the location there against of one of the parallel sides of a sheet resting on said support means, with said one parallel side extending along a line parallel to the datum line and displaced to one side of it;

a first sensor for sensing the location of the other parallel side of a sheet located with its first parallel side against the first abutment and adapted to generate a signal as a result of said sensing; and

means responsive to said signal for determining the distance 'd' of said other parallel side from a reference line which extends parallel to said datum line and on the other side thereof from the line defined by said first abutment, said reference line and said line defined by said first abutment being equidistant from said datum line, and for automatically positioning between said reference line and said datum line means defining a second abutment for the location there against of said other parallel side of said sheet to extend parallel to said reference line and at a distance of $d/2$ therefrom,

and wherein said first sensor is movable between the reference line and the datum line in a direction having a component normal to the direction of the datum line in the plane of the surface of the support means and is adapted to generate a signal when it crosses the plane extending through said side of said sheet and normal to the plane of the sheet, said apparatus including:

drive means for simultaneously advancing and retracting said sensor along said direction and the means defining the second abutment along a parallel path to the sensor and at half the rate of advance of the sensor, the arrangement being such that they are adapted to cross simultaneously the plane in which the reference line lies and which is normal to the plane of a sheet supported on said support means,

means for enabling a sheet resting on said support means to be moved in directions both parallel and normal to said datum lines, said enabling means comprising two sets of rollers, the rollers of each set being mounted to rotate on parallel axes and the axes of the rollers of one set being at right angles to the axes of the rollers of the other set, and means for adjusting the position of the one roller set relative to the position of the other roller set so that in a first position the upper surfaces of the rollers of said one set project above the upper surfaces of the rollers of the other set and provide a support surface for a sheet and in a second position the upper surfaces of the rollers of said one roller set lie below the upper surfaces of the rollers said other roller set whereby said upper surfaces of said other roller set provide a support surface for a sheet,

means for driving the rollers of each set, and

means for advancing a sheet on to said support means in a direction parallel to said first datum line;

said apparatus further including

a second sensor for sensing the presence or absence of a sheet on the support means

means responsive to a signal generated by said second sensor as a result of sensing the absence of a sheet on said support means for automatically initiating the following sequence of events:

(1) if the first set of rollers adapted to move the sheet in a direction parallel to the datum line is not in a position such as to engage the undersurface of a sheet being advanced to the support means, activate the means adjusting the relative positions of the sets of rollers to bring said first set into said position;

(2) if the first sensor is not retracted relative to the means defining the first abutment, activate the means driving said sensor to effect such retraction and then stop the drive means;

(3) start the means driving the rollers of the first set in a sense to advance a sheet along the support;

a third sensor for sensing the arrival of the trailing edge of the sheet at a predetermined position on the support means and means responsive to a signal generated by said sensor as a result of said sensing for automatically initiating the following sequence of events:

(4) stop means driving the rollers of the first set;

(5) activate means adjusting the relative positions of the set of rollers to reverse the relative positions of said sets whereby the second set engages the undersurface of the sheet;

(6) start means for driving the rollers of the second set in a sense to urge sheet into contact with said first abutment;

(7) after a predetermined time stop means for driving rollers of second set;

(8) start means for driving first sensor in sense to advance sensor across support means towards means defining first abutment

and means responsive to said signal generated by said first sensor for automatically initiating the following sequence of events:

(9) stop the means driving the sensor with the sensor in the plane extending through the said other parallel side of the sheet normal to the plane of the sheet;

(10) start means driving the rollers of second set to rotate rollers in reverse direction to that of step (6);

(11) after a predetermined time stop means driving rollers;

said apparatus further optionally including:

means defining a third abutment for locating a third side of a rectangular sheet on said support means on a second datum line extending normal to said first datum line, the sequence of events initiated by the means responsive to the signal generated by the first sensor then further including:

(12) after step (11) activating means adjusting the relative positions of the two sets of rollers to reverse the relative positions of the said sets whereby the first set again engages the undersurface of the sheet;

(13) start means driving first set of rollers to rotate rollers in sense to urge sheet towards said third abutment means;

(14) after a predetermined time stop means driving rollers of the first set.

14. A modification of the apparatus as claimed in claim 13, which modification includes a fourth sensor for sensing the arrival of said third side of said sheet in the vicinity of said means defining said third abutment and step (14) is initiated by means responsive to a signal generated by said fourth sensor as a result of said sensing.

15. A modification of the apparatus claimed in claim 13 or claim 14, which modification includes a fifth sensor for sensing the arrival of said other parallel side in the vicinity of said means defining said second abutment and steps (11) to (14) are initiated by means responsive to a signal generated by said fifth sensor as a result of said sensing.

16. Apparatus for manoevring a sheet in two mutually perpendicular directions in the plane of the sheet, and suitable for use in the apparatus of claim 3, said apparatus comprising

a frame

a plurality of axles mounted in parallel spaced relationship along said frame, each axle having a plurality of rollers mounted along its length, thereby forming a first array of rollers the upper surface of which lie in substantially the same plane and provide a first support means

a second array of rollers each of which is mounted on a separate axle which is at an angle to the direction of the axles of the rollers of the first array, the axles of the rollers of the second array being parallel to one another and each such axle being pivotable in a plane in which the axles of the first array of rollers do not lie and between a first position in which the surface of the roller mounted on the axle lies below the plane of the first support means and a second position in which said roller surface projects above said plane, whereby when the rollers of the second array are in said second position their surfaces lie in the same plane and provide a second support means whose support surface lies above that of the first support means; and

means for pivoting the axles of the rollers of the second array between said first and second positions; said apparatus further optionally including

means for rotating the rollers of the first array at the same peripheral speed and in the same direction, and for reversing the direction of rotation, and means for rotating the rollers of the second array at the same peripheral speed and in the same direction, and means for reversing said direction of rotation.

17. Apparatus as claimed in claim 16 in which the rollers of the second array are adapted to be rotated by rotation of the rollers of the first array.

18. Apparatus as claimed in claim 17 in which rollers of the second array are provided with gear rings which engage with corresponding gear rings provided in the respective rollers of the first array and the axis about which the roller of the second array rotates pivots about the axis of rotation of the roller of the first array engaged by said roller of said second array.

19. Apparatus for coating a surface with a viscous liquid such as an adhesive, and suitable for use in the apparatus of claim 3, said apparatus comprising

first means for depositing said liquid on the surface to be coated and comprising an array of nozzles

means for effecting relative movement between said liquid depositing means and said surface over a predetermined finite distance along said surface; and

means for dispensing through each nozzle a predetermined finite volume of said liquid at a predetermined rate during the period of said relative movement, therebeing associated with each nozzle independent means for adjusting the volume of liquid dispensed through that nozzle and the rate at which said volume of liquid is dispensed through said nozzle;

and wherein said nozzles are located at spaced intervals in a direction generally tranverse to the direction of relative movement between said surface and said liquid depositing means.

20. Apparatus as claimed in claim 19 wherein the liquid depositing means includes a line of primary nozzles extending in a direction normal to the direction of relative movement between the liquid depositing means and the surface to be coated, the distances between adjacent nozzles in the line being equal, and optionally a pair of secondary nozzles located on a line which is parallel to the line of primary nozzles in the direction of movement of the liquid depositing means relative to the surface to be coated, said apparatus optionally further including means for adjusting the distance between the first and last nozzles in the line of primary nozzles while maintaining equal the distances between adjacent nozzles, and means for adjusting the distance between the secondary nozzles.

21. Apparatus as claimed in claim 19 or claim 20 for coating the surface of a sheet and including a second means for depositing liquid on the surface to be coated and means for effecting relative movement between said surface to be coated and said second liquid depositing means over a predetermined finite distance and in a direction which is generally transverse to the direction of movement of the first liquid depositing means relative to the surface to be coated, said further liquid depositing means comprising at least one nozzle for depositing liquid on to the surface to be coated and said apparatus further including means for dispensing through said nozzle a predetermined volume of liquid at a predetermined rate during the period of said relative movement, there byeing associated with each nozzle independent means for adjusting the volume of liquid dispensed through that nozzle and the rate at which said volume of adhesive is dispensed through said nozzle.

22. Apparatus as claimed in any one of claims 19 to 21 for coating the surface of a sheet, which apparatus includes support means for the sheet, a gantry adapted to travel over the support surface and means for advancing and retracting the gantry over the sheet; and said first liquid depositing means are mounted on the gantry.

23. Apparatus as claimed in claim 22 which apparatus further includes a carriage adapted to travel along a path normal to the direction of travel of said gantry, and means for advancing and retracting the carriage along said path, and said second liquid depositing means are mounted on said carriage.

24. Apparatus as claimed in claim 23 further including means activating the dispensing of the liquid through the nozzles of said first liquid depositing means responsive to activation of the means for advancing the gantry over the sheet and means for activating the dispensing of the liquid through each nozzle of said second liquid depositing means responsive to activation of the means for advancing the carriage and optionally also to activation of the means for retracting the carriage.

25. Apparatus as claimed in claim 23 or claim 24 in which the means for advancing and retracting the gantry and the means for advancing and retracting the carriage are adapted to be operated synchronously, each of the means for dispensing a liquid through a nozzle of said first liquid depositing means are adapted to be operated synchronously with the means for advancing the gantry, and each of the means for dispensing a liquid through a nozzle of said second liquid depositing means are adapted to be operated synchronously with the means for advancing and retracting the carriage.

26. Apparatus as claimed in any one of claims 19 to 25 in which each nozzle is connected to a respective container for the liquid, said container having an inlet adapted to be connected to a supply of the liquid, and an outlet connected to said nozzle, and means for delivering a predetermined volume of liquid from the container to the nozzle at a predetermined rate during said period of relative movement.

27. Apparatus as claimed in claim 21 wherein the first liquid depositing means includes a line of primary nozzles extending in a direction normal to the direction of relative movement between the liquid depositing means and the surface to be coated, the distances between adjacent nozzles in the line being equal, and a pair of secondary nozzles located on a line which is parallel to the line of primary nozzles in the direction of movement of the liquid depositing means relative to the surface to be coated, said apparatus further including means for adjusting the distance between the first and last nozzles in the line of primary nozzles while maintaining equal the distances between adjacent nozzles, and means for adjusting the distance between the secondary nozzles; said apparatus further including at least one of:

automatic means resposive to information relating to the length of a sheet for controlling the length of said finite distance of travel of the first liquid depositing means relative to the sheet to be coated;

45

automatic means responsive to information relating to the length of a sheet to be coated for controlling the position along the distance of travel of said first liquid depositing means relative to the sheet to be coated at which deposition of liquid from each nozzle of said first liquid depositing means commences, and the period during said relative travel during which liquid is dispensed through each nozzle;

automatic means resposive to information relating to the width and length of the sheet to be coated for controlling the volume of liquid dispensed through each nozzle of said first liquid depositing means during said travel of said liquid depositing means relative to the sheet to be coated;

automatic means resposive to information relating to the width of a sheet to be coated for controlling the distance between the first and last nozzles in the line of primary nozzles;

automatic means resposive to information relating to the width of a sheet to be coated for controlling said distance between said secondary nozzles;

automatic means resposive to information relating to the width of a sheet to be coated for controlling the positions along the distance of travel of said second liquid depositing means at which deposition of liquid from each nozzle of said second liquid dispensing means commences and finishes; and

automatic means resposive to information relating to the width of a sheet to be coated for controlling the volume of liquid dispensed through each nozzle of said second liquid depositing means during said travel of said second liquid depositing means.

FIG.1

FIG.2

0 261 852

FIG. 3

FIG.4

FIG.5

Fig.6

FIG.7

0 261 852

FIG. 8

FIG. 9

FIG. 10

FIG. 11

FIG.12

FIG.16

FIG.13

Fig. 14

FIG. 15

0 261 852

FIG.17

FIG.18

FIG.19

FIG.20

FIG.21

FIG.23

STATION 2

1

STATION 4

y

x

STATION 10

602

y'  STATION 6  r'

z'

x'

STATION 18

r

z

FIG.22

STATION 22

0 261 852

FIG. 24

FIG. 25

FIG. 26

FIG.27

FIG.28

FIG.29

FIG.30

0 261 852

FIG. 31

FIG. 32